# EUROPEAN PATENT APPLICATION

(11) **EP 4 725 304 A1**
(43) Date of publication of application: **15.04.2026**
(21) Application number: 24819700.6
(22) Date of filing: 07.06.2024
(51) Int. Cl.: A01K 1/02, B62B 9/14, B60N 2/28

(54) **CARRIER**

(30) Priority: 09.06.2023 US 202363576461 P; 11.07.2023 CN 202310848530; 28.07.2023 CN 202310946030; 10.08.2023 CN 202311007889; 14.08.2023 CN 202311026334; 15.08.2023 US 202363519707 P; 08.09.2023 CN 202311161648; 29.05.2024 CN 202410683491
(71) Applicant: Jani International Pte. Ltd., Singapore 569874 (SG)
(72) Inventor: CHENG, Chinming, Singapore 569874 (SG); LIN, Lihung, Singapore 569874 (SG); GUO, Zhengwen, Singapore 569874 (SG); CHEN, Yingzhong, Singapore 569874 (SG)
(74) Representative: Müller-Boré & Partner Patentanwälte PartG mbB
(86) International application number: PCT/SG2024/050385
(87) International publication number: WO 2024/253597

(57) **Abstract**

Provided in the present disclosure is a carrier. The carrier comprises a box, which comprises a body and a bottom support, wherein the body is connected to the bottom support so as to form an accommodating space with the bottom support; and a window is provided in a side surface and/or a top surface of the body, and is provided with a closing member for closing and/or covering the window, and a protective device is provided on the closing member.

## Description

### TECHNICAL FIELD

The present disclosure relates to a carrier, and specifically to a carrier provided with a protection apparatus.

### BACKGROUND

In recent years, as users increasingly pay attention to the safety of pets in moving vehicles, most users use carriers such as pet baskets and pet boxes to transport the pets during travel, which facilitates portability and transport, and provides designated positioning or seating areas for the pets within the vehicle. Existing carriers usually lack protection mechanisms or functions (such as side impact protection functions), so that the side impact force or collision force cannot be cushioned well in the event of an accidental collision of the vehicle (especially impacts on its side) or a sudden change in vehicle speed or direction. This increases a risk of the pets in the carrier being subjected to impact or injury.

### SUMMARY

The present disclosure provides a carrier. The carrier includes a box body, the box body includes a body and a bottom support, and the body is connected to the bottom support to form an accommodating space with the bottom support. and a window is provided on a side surface and/or a top surface of the body, and is provided with a closing member configured to close and/or shield the window, and a protection apparatus is provided on the closing member.

The present disclosure further provides a carrier. The carrier includes a box body having a peripheral wall and a bottom part, and the peripheral wall and the bottom part define an accommodating space and a top opening. The box body is provided with a protection apparatus on the peripheral wall.

The present disclosure further provides a carrier. The carrier includes a box body having a peripheral wall and a bottom part, and the peripheral wall and the bottom part define an accommodating space and a top opening. The peripheral wall of the box body is provided with a protection apparatus. The protection apparatus includes a cushioning block, and the cushioning block is provided at least on either inner side of the peripheral wall of the box body in a longitudinal direction.

The present disclosure further provides a carrier. The carrier includes an accommodating body, a canopy assembly and a protection apparatus. The accommodating body has a top opening. A canopy assembly is detachably connected to the accommodating body, and is for opening and closing the top opening, and the canopy assembly has an unfolded state for closing the top opening. A protection apparatus is provided at least on the canopy assembly. The protection apparatus includes a protective cover, the protective cover includes a cover body and a second connecting member, the cover body is connected to the accommodating body and/or the canopy assembly by the second connecting member to cover at least a part of the canopy assembly when the canopy assembly is in the unfolded state.

The present disclosure further provides a carrier. The carrier includes an accommodating body, a canopy assembly and a protection apparatus. The accommodating body has a top opening, two sides of the accommodating body in a longitudinal direction are respectively provided with a fifth connecting member. The canopy assembly is mounted on the accommodating body, the canopy assembly is provided with a mating connecting member corresponding to the fifth connecting member, and the fifth connecting member and the corresponding mating connecting member are detachably connected to each other to close the top opening. The protection apparatus includes a side impact protection block provided on the fifth connecting member and/or the mating connecting member.

The present disclosure further provides a carrier. The carrier includes an accommodating body and a protection apparatus. The accommodating body defines an accommodating space, and the protection apparatus is provided on either outer side of the accommodating body in a longitudinal direction or in a transverse direction. The protection apparatus is attached to the carrier by a coupling apparatus and has a protection body, and the protection body is made of an energy-absorbing material or an impact-absorbing material.

### BRIEF DESCRIPTION OF THE DRAWINGS

The accompanying drawings, which are included herein to provide a further understanding of the present disclosure and are incorporated herein to constitute a part of the present specification. The accompanying drawings illustrate embodiments of the present disclosure and are used in conjunction with the following description to illustrate the concepts of the present disclosure.
FIG. 1 schematically shows a side view of a carrier provided according to a first embodiment of a first aspect of the present disclosure.
FIG. 2 schematically shows a bottom view of the carrier in FIG. 1.
FIG. 3 schematically shows a further side view of the carrier shown in FIG. 1, with one of the second connecting members of the protective cover not connected to a corresponding first connecting member.
FIG. 4 schematically shows a side view of an accommodating body and a canopy of the carrier shown in FIG. 1.
FIG. 5 schematically shows a top view of the accommodating body and the canopy shown in FIG. 4.
FIG. 6 schematically shows a side view of the canopy in FIG. 4.
FIG. 7 schematically shows a perspective view of the accommodating body in FIG. 4.
FIG. 8 schematically shows a perspective view of a box body and a bracket apparatus of the accommodating body shown in FIG. 7.
FIG. 9 schematically shows an exploded perspective view of the box body and the bracket apparatus shown in FIG. 8.
FIG. 10 schematically shows a perspective view of a protective cover in FIG. 1 from an angle.
FIG. 11 schematically shows a perspective view of the protective cover in FIG. 1 from a further angle.
FIG. 12 schematically shows a variant of the protective cover shown in FIG. 10.
FIG. 13 schematically shows a further variant of the protective cover shown in FIG. 10.
FIG. 14 schematically shows a perspective view of a carrier provided according to a second embodiment of the first aspect of the present disclosure, with a protective cover omitted in FIG. 14.
FIG. 15 schematically shows a perspective view of a box body, a bracket apparatus, and a canopy frame of the accommodating body shown in FIG. 14.
FIG. 16 schematically shows a perspective view of the canopy frame shown in FIG. 15.
FIG. 17 schematically shows a perspective view of the bracket apparatus shown in FIG. 15.
FIG. 18 schematically shows a perspective view of the carrier shown in FIG. 14, with a canopy assembly being in a folded state.
FIG. 19 schematically shows a side view of the carrier in FIG. 14.
FIG. 20 schematically shows a variant of a side impact protection block of the carrier provided according to the second embodiment of the first aspect of the present disclosure.
FIG. 21 schematically shows a variant of an installation method for a fifth connecting member and a mating connecting member shown in FIG. 20.
FIG. 22 schematically shows a perspective view of a carrier provided according to a third embodiment of the first aspect of the present disclosure.
FIG. 23 schematically shows a perspective view of a carrier provided according to a fifth embodiment of the first aspect of the present disclosure.
FIG. 24 schematically shows a perspective view of a box body, a bracket apparatus, and a canopy frame of the accommodating body shown in FIG. 23.
FIG. 25 schematically shows a sectional view along U1-U1 of FIG. 24.
FIG. 26 schematically shows a perspective view of a carrier provided according to a sixth embodiment of the first aspect of the present disclosure.
FIG. 27 schematically shows a perspective view of a carrier provided according to a seventh embodiment of the first aspect of the present disclosure.
FIG. 28 schematically shows a perspective view of a box body, a bracket apparatus, and a canopy frame of an accommodating body of a carrier provided according to an eighth embodiment of the first aspect.
FIG. 29 schematically shows a sectional view along U2-U2 of FIG. 28, in which an embodiment of a side impact protection structure is shown.
FIG. 30 schematically shows a sectional view along U2-U2 of FIG. 28, in which another embodiment of a side impact protection structure is shown.
FIG. 31 schematically shows a perspective view of a carrier provided according to a ninth embodiment of the first aspect of the present disclosure.
FIG. 32 schematically shows a perspective view of a side impact protection block of the carrier shown in FIG. 31.
FIG. 33 schematically shows a perspective view of a carrier provided according to a tenth embodiment of the first aspect of the present disclosure.
FIG. 34 schematically shows a partial sectional view of the carrier described in FIG. 33 with the protective cover installed.
FIG. 35 schematically shows a partially enlarged right view of FIG. 33, in which a mating connecting member and a fifth connecting member are in a connected state.
FIG. 36 schematically shows a partially enlarged right view of FIG. 33, in which the fifth connecting member is in a state of not being connected to the mating connecting member.
FIG. 37 schematically shows a side view of the fifth connecting member shown in FIG. 36.
FIG. 38 schematically shows a perspective view of the fifth connecting member shown in FIG. 36.
FIG. 39 schematically shows a partially enlarged view of a seat fabric, protective sheet, and a pad of the carrier shown in FIG. 33 with the seat fabric removed from the box body.
FIG. 40 schematically shows a perspective view of the mating connecting members shown in FIG. 35.
FIG. 41 schematically shows a partially sectional view of a carrier provided according to an eleventh embodiment of the first aspect of the present disclosure, with the carrier mounted with a protective cover.
FIG. 42 schematically shows a partially enlarged view of FIG. 41 at A1.
FIG. 43 schematically shows a partially enlarged view of FIG. 41 at A2.
FIG. 44 schematically shows a perspective view of a box body of the accommodating body shown in FIG. 41.
FIGS. 45 to 47 schematically shows perspective views in different orientations of a protective cover provided according to a twelfth embodiment of the first aspect of the present disclosure.
FIG. 48 schematically shows an internal structure of a cover body of the protective cover shown in FIG. 47.
FIG. 49 and FIG. 50 schematically show perspective views of two impact resistant bodies shown in FIG. 48.
FIG. 51 schematically shows a variation of the impact resistant body shown in FIG. 50.
FIG. 52 schematically shows a sectional view along U4-U4 of FIG. 51.
FIG. 53 schematically shows a partial sectional view of the carrier shown in FIG. 33 with the protective cover installed, in which the protective cover includes the impact resistant bodies shown in FIGS. 49 and 51.
FIG. 54 schematically shows a variation of the sectional view shown in FIG. 52.
FIG. 55 schematically shows a further variation of the sectional view shown in FIG. 52.
FIGS. 56 to 58 schematically shows perspective views in different orientations of a protective cover provided according to a thirteenth embodiment of the first aspect of the present disclosure.
FIG. 59 schematically shows an internal structure of a cover body of the protective cover shown in FIG. 58.
FIGS. 60 to 62 schematically show perspective views of three impact resistant bodies shown in FIG. 59.
FIG. 63 schematically shows a partially enlarged view along U5-U5 of FIG. 59.
FIG. 64 schematically shows a variation of the impact resistant body shown in FIG. 61.
FIG. 65 schematically shows a partially enlarged view along U6-U6 of FIG. 64.
FIG. 66 schematically shows a further variation of the impact resistant body shown in FIG. 61.
FIG. 67 schematically shows a partially enlarged view along U7-U7 of FIG. 66.
FIG. 68 schematically shows a partially sectional view of a carrier provided according to a fourteenth embodiment of the first aspect of the present disclosure, in which the carrier mounted with a protective cover includes the impact resistant bodies shown in FIGS. 60, 62, and 64.
FIG. 69 is a perspective view schematically showing a travel device according to a first embodiment of a second aspect of the present disclosure.
FIG. 70 is a side view schematically showing a travel device according to a second embodiment of the second aspect of the present disclosure.
FIG. 70A and FIG. 70B are perspective views schematically showing various designs for an attaching portion of a protection apparatus according to embodiments of the second aspect of the present disclosure.
FIG. 71 is a side view schematically showing a travel device according to a third embodiment of the second aspect of the present disclosure.
FIG. 72 is a side view schematically showing a travel device according to a fourth embodiment of the second aspect of the present disclosure.
FIGS. 73A to 73C are side views schematically showing a travel device according to a fifth embodiment of the second aspect of the present disclosure.
FIGS. 74A and 74B are side views schematically showing a travel device according to a sixth embodiment of the second aspect of the present disclosure.
FIG. 75 is a side view schematically showing a travel device according to a seventh embodiment of the second aspect of the present disclosure.
FIG. 76 is a side view schematically showing a travel device according to an eighth embodiment of the second aspect of the present disclosure.
FIG. 76A to FIG. 76C are schematic side views respectively showing various designs for the protection apparatus as shown in FIG. 76.
FIG. 77A is a side view schematically showing a travel device according to a ninth embodiment of the second aspect of the present disclosure, and FIG. 77B is a front view schematically showing the protection apparatus attached to the carrier of the travel device as shown in FIG. 77A.
FIGS. 78A and 78B schematically show a travel device according to a tenth embodiment of the second aspect of the present disclosure.
FIGS. 79A and 79B schematically show a travel device according to an eleventh embodiment of the second aspect of the present disclosure.
FIGS. 80A to 80C schematically show a travel device according to a twelfth embodiment of the second aspect of the present disclosure.
FIGS. 81A and 81B schematically show a travel device according to a thirteenth embodiment of the second aspect of the present disclosure.
FIGS. 82A and 82B schematically show a travel device according to a fourteenth embodiment of the second aspect of the present disclosure.
FIG. 83A to FIG. 83G schematically show various designs for cross sections of the respective plate-like bodies of the protection apparatuses according to the embodiments of the second aspect of the second aspect of the present disclosure.
FIG. 84A and FIG. 84B schematically show various designs for dimensions of respective plate-like bodies of the protection apparatuses according to the embodiments of the second aspect of the present disclosure.
FIG. 85A to FIG. 85C schematically show a travel device according to a fifteenth embodiment of the second aspect of the present disclosure.
FIG. 86A to FIG. 86C schematically show a travel device according to a sixteenth embodiment of the second aspect of the present disclosure.
FIG. 87 is a side view schematically showing a carrier according to a first embodiment of a third aspect of the present disclosure.
FIG. 88 is a side view schematically showing a carrier according to a second embodiment of the third aspect of the present disclosure.
FIG. 89 is a side view schematically showing a carrier according to a third embodiment of the third aspect of the present disclosure.
FIGS. 90A and 90B schematically show a carrier according to a fourth embodiment of the third aspect of the present disclosure.
FIGS. 91 to 93 are side views of carriers according to a fifth embodiment of the third aspect of the present disclosure, schematically showing various designs for canopies of the carriers.
FIG. 94 schematically shows a perspective view of a carrier according to a first embodiment of a fourth aspect of the present disclosure.
FIGS. 95 and 96 schematically show other perspective views of the box body shown in FIG. 94, in which at least a portion of a second window covering is separated from the box body.
FIG. 97 schematically shows a perspective view of a carrier mounted on a vehicle seat according to a first embodiment of the fourth aspect of the present disclosure.
FIG. 98 schematically shows a perspective view of a carrier according to a second embodiment of a fourth aspect of the present disclosure.
FIG. 99 schematically shows another perspective view of the box body shown in FIG. 98, with a window on a side of the box body being opened.

### Reference numerals:

carrier 1000
   accommodating body 100
      box body 110
         hole structure 1101
         bottom part 111
            slot structure 1112
         peripheral wall 112
            outer side 112a
            inner side 112b
            groove 1121
      accommodating space 113
      fifth connecting member 114
         first connecting hole 1140
         first buckling body 1141
         protrusion 1142
         first connecting tongue 1143
      protective sheet 1181
      pad 1182
      sewing line 1081
      top opening 10
      bracket apparatus 120
         first bracket 121
         second bracket 122
            vertical segment 1221
            horizontal segment 1222
            vertical segment 1224
         third bracket 123
         canopy locking part 124
         unlocking member 125
            groove 1240
      seat fabric 150
         pocket 151, 152, 153
            closing member 1531
         holding pocket 155
      sewing line 1501, 1502, 1503, 1504
      first connecting member 41
      webbing 411
   canopy assembly 200
      U-shaped bracket 21
         canopy frame 211
      canopy assembly 22
         canopy opening 201
         shading area 221
            shading sheet 2211
            edge 22111, 22112
         observation area 222
            observation sheet 2221
      closing member 223
         zipper chain 2231, 2232
         zipper head 2233
      extended observation area 224
      carrying handle 23
      mating connecting member 2335
         second connecting hole 23350
         second buckling body 23351
         recess 23352
         second connecting tongue 23353
      connecting strap 236, 237, 238
         sewing line 2381, 2382
      canopy locking apparatus 24
         first chain 241
         second chain 242
         locking member 243
         housing 245
      skirt 25
      handle 29
   protective cover 300
      cover body 31
         outer fabric layer 301
         inner fabric layer 302
         fabric piece 3a, 3b, 3c, 3d, 3e, 3f, 3g, 3h, 3i, 3j, 3k, 3m
         impact resistant body 311
            first impact resistant body 3111
            second impact resistant body 3112
               sheet 31121, 31122, 31123, 31124, 31125
            third impact resistant body 3113
            fourth impact resistant body 3114
               sheet 31141, 31142, 31143, 31145, 31146, 31148, 31149
                  slit 311420
                  upper portion 311431
                  lower portion 311432
               intermediate protrusion 31147
               notch 31140
            fifth impact resistant body 3115
               sheet 31151, 31152, 31153
               strip 31154
            middle impact resistant part 3110
         turning part 312
         receiving space 313
            first receiving space 3131
            second receiving space 3132
            third receiving space 3133
            fourth receiving space 3134
               layered space 31341, 31342
            fifth receiving space 3135
         spacer layer 315
         upper edge 316
         sewing line 317, 318, 319
         skirt 35
      second connecting member 32
      webbing 33
      connecting structure 36
         third connecting end 361
         fourth connecting end 362
   side impact protection structure 500
      side impact protection block 5
         sheet part 511
         bending part 512
      cushioning block 55
         inner side 55b
      hard sheet 56
pivot point O1
side-impact contact surface S
   travel device 61, 62, 63, 64, 65, 66, 67, 68, 68A, 68B, 68C, 69, 610, 611, 612, 613, 614, 624, 625
      carrier 6100, 6200, 6300, 6400, 6500, 6600, 6700, 6800, 6800A, 6800B, 6800C, 6900, 61000, 61100, 61200, 61300, 61400, 61600A, 61600B, 61700, 61800, 61900, 62000, 62100, 62200, 62300, 62400, 62500
         box portion 6102, 6202, 6302, 6402, 6502, 6602, 6702, 6802, 6902, 61002, 61102, 61202, 61302, 61402, 61702, 61802, 61902, 62002, 62102, 62202, 62302, 62402, 62502
            upper periphery 6102A, 6802A
         canopy portion 6104, 6204, 6304, 6404, 6504, 6604, 6704, 6804, 6904, 61004, 61104, 61204, 61304, 61404, 6174, 6184, 6194, 62040, 62140, 62240, 62340, 62404, 62504
            lower periphery 6104A, 6804A
            U-shaped frame 61742, 61842, 61942, 62042, 62142, 62242, 62342
            cover 61744, 61844, 61944, 62044, 62144, 62244, 62344
               area 61744A, 61744B, 61744C, 61744D, 61744E, 61844A, 61844B, 61844C, 61844D, 61844E, 61844F, 61844G, 61844H, 61844I, 61844J, 61844K, 61944A, 61944B, 61944C, 61944D, 61944E, 62044A, 62044B, 62044C, 62044D, 62044E, 62144A, 62144B, 62144C, 62144D, 62144E, 62244A, 62244B, 62244C, 62244D, 62244E, 62344A, 62344B, 62344C, 62344D, 62344E
            cloth 62344', 62344'
            support rod 61746, 61846, 61946, 62046, 62146, 62246, 62346
            pivot shaft 61748
         carrying handle 6106, 6206, 6306, 6406, 6506, 6606, 6706, 6806, 6906, 61006, 61106, 61206, 61306, 61406, 61706, 61806, 61906, 62006, 62106, 62206, 62306, 62406, 62506
            connecting portion 61006A
            recess 61106A
         bracket assembly 6108, 6208, 6308, 6408, 6508, 6608, 6708, 6808, 6908, 61008, 61108, 61208, 61308, 61408, 61708, 61808, 61908, 62008, 62108, 62208, 62308, 62408, 62508
         buckle assembly 6110, 6210, 6310, 6410, 6510, 6610, 6710, 6810, 6910, 61010, 61110, 61210, 61310, 61410, 61710, 61810, 61910, 62010, 62110, 62210, 62310, 62410, 62510
         first attaching portion 6212, 6412, 61112, 61212, 61312, 61412
         recess 6312
      protection apparatus 6101, 6201, 6201A, 6201B, 6301, 6401, 6501, 6601, 6701, 6801, 6901, 61001, 61101, 61201, 61301, 61401, 61901, 62001, 62401, 62501
         first layer 62001A
         second layer 62001B
         body 6203, 6203B, 6403, 6503, 6603, 6703, 6803, 6803A, 6803B, 6803C, 6903, 61003, 61103, 61203, 61303, 61403, 615A, 615B, 615C, 615D, 615E, 615F, 615G, 61603A, 61603B, 62403, 62503
            layer 6151F, 6152F, 6151G, 6152G, 6153G
            first portion 61303A, 61403A, 62503A
            second portion 61303B, 61403B, 62503B
            vertical recess 68031
            recess 69031
            magnetic connector 69031A
            magnetic strip or tape 68031A, 68033A, 68035A
            horizontal recess 68033
            central through hole 68035
            second attaching portion 6205, 6405, 61105, 61205, 61305, 61405
               hook portion 6205A
               magnetic part 6205B
            block 6305
            pivot shaft 6505
            coupling member 6605
               connecting rod 6705
      guiding member 6507
      coupling portion 6607, 61007
      connecting part 6509
      securing strap 61009, 61109, 61209, 61309, 61409, 62409
         connection member 61011, 61111, 61311, 62411
         secure member 61013, 61113, 61313, 61413
         handle 61314
         connecting portion 61414A, 62414A
         connecting strap 62414B
         loop 61215
         attaching portion 61217
         hook portion 61217A
         loop portion 61217B
      connector 6820, 6820A, 6820B, 6820C, 6920, 61720
      pivot shaft 62262
   base 6750
   seat 630
   headrest 630A
   longitudinal direction A6
   transverse direction B6
   box body 7110, 7210
      body 7111, 7211
         side support member 71111, 72111
            first sub-support member 71111a, 72111a
            second sub-support member 71111b, 72111b
            connecting piece 71111c
         side support member 71112, 72112
            first sheet-like member 71112a, 72112a second sheet-like member 71112b, 72112b third sheet-like member 71112c, 72112c
         third connecting member 72118
         fourth connecting member 72119
      bottom support member 7112, 7212
      carrying handle 7115
      first window 7116, 7216
      first window cloth 7116a, 7216a
      second window 7117, 7217
      second window cloth 7117a
         first portion 71171a
         second portion 71172a
      side door 7217b
securing strap assembly 7300

### DETAILED DESCRIPTION

In the following, exemplary embodiments of the present disclosure will be described in detail with reference to the accompanying drawings. Whereas it is susceptible to various modified and alternative forms of the present disclosure, specific embodiments thereof are illustrated by way of example in the accompanying drawings. However, the present disclosure should not be construed as limiting to the embodiments illustrated herein; on the contrary, the present disclosure will encompass all modifications, equivalents, and alternatives that fall within the spirit and scope of the present disclosure.

The present disclosure will be described in detail below with reference to the accompanying drawings.

A first aspect of the present disclosure provides a carrier, specific embodiments of which will be described below in conjunction with the accompanying drawings.

### First embodiment of the first aspect

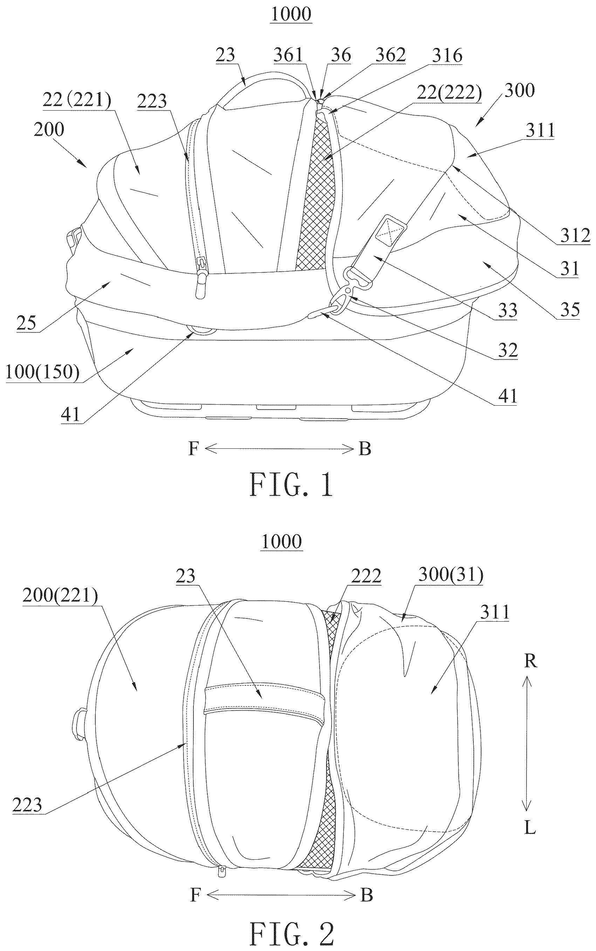

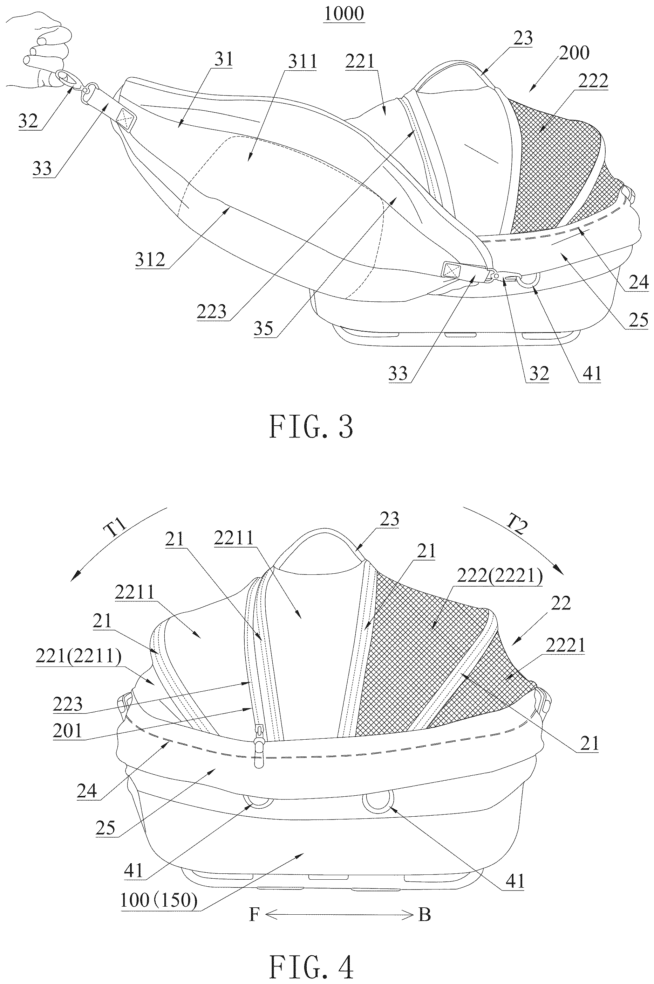

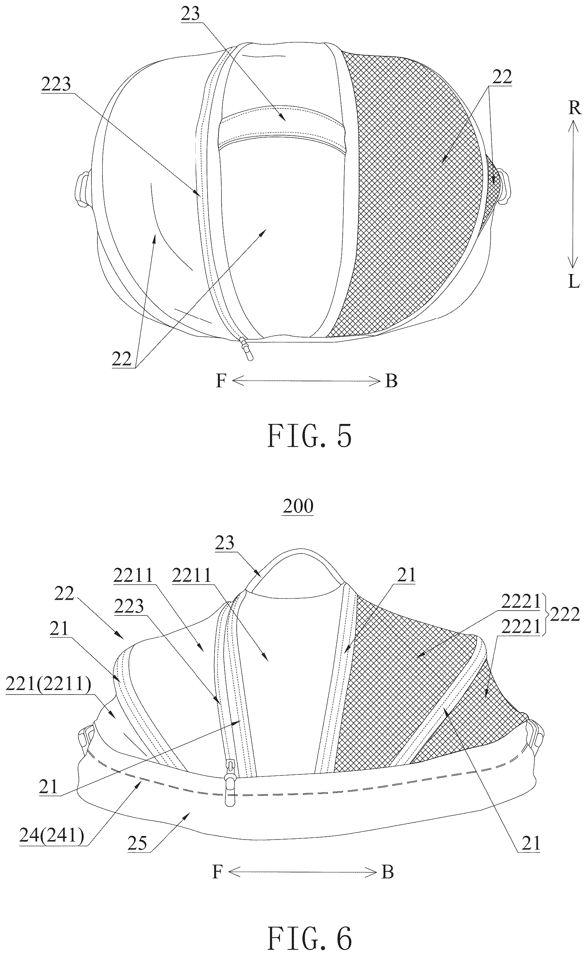

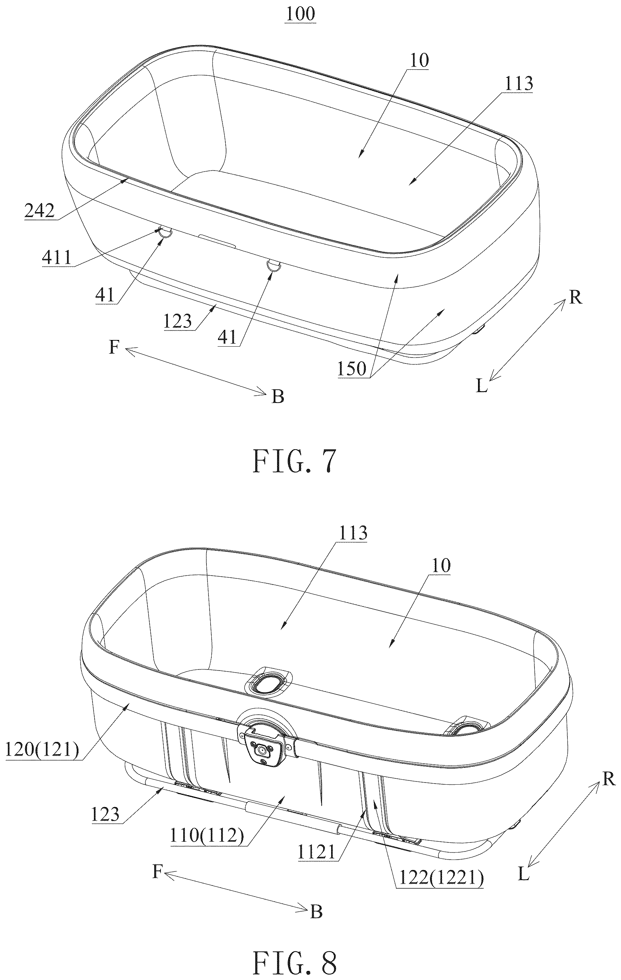

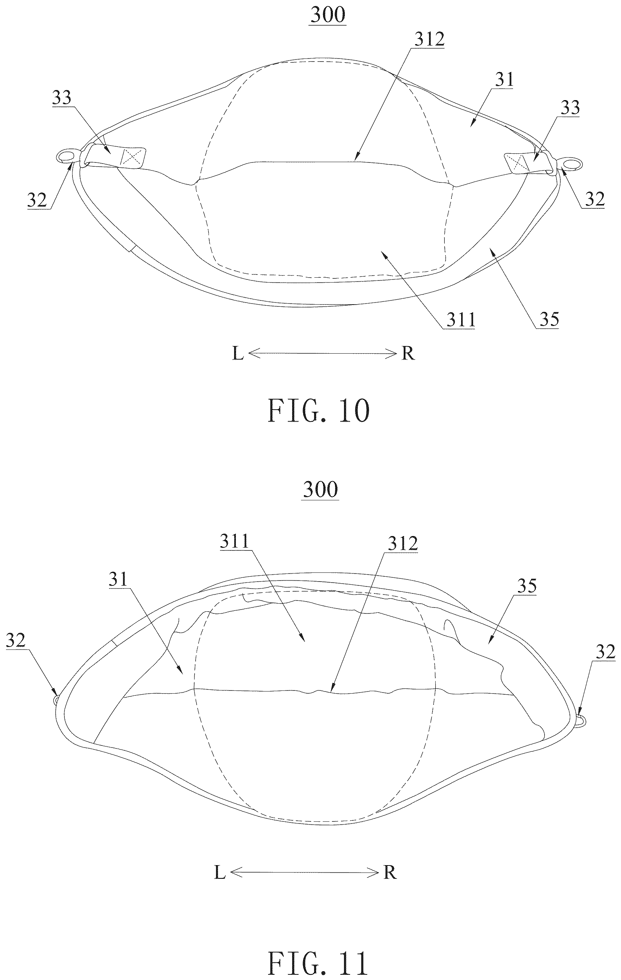

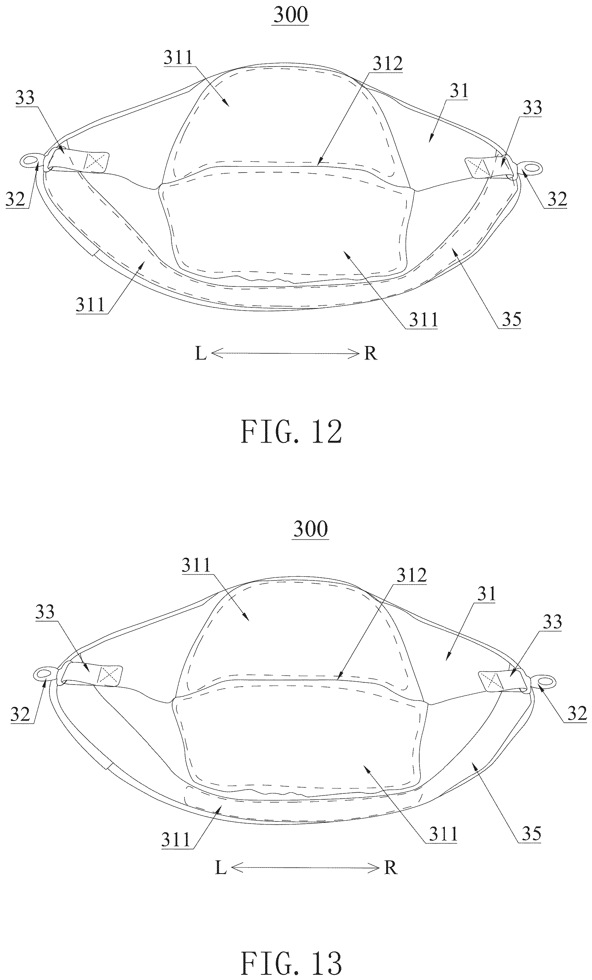

FIGS. 1 to 3 show a structure of a carrier 1000 provided according to the first embodiment of the first aspect of the present disclosure, and the carrier 1000 may be, but not limited to, a pet carrier. The carrier 1000 includes an accommodating body 100, a canopy assembly 200, and a protective cover 300. FIGS. 4 and 5 show the structure of the accommodating body 100 and the canopy assembly 200 mounted together, and the canopy assembly 200 is a fully enclosed canopy. FIG. 6 shows a structure of the canopy assembly 200 in an unfolded state. FIGS. 7 to 9 show a structure of the accommodating body 100. FIGS. 10 and 13 show the structure of the protective cover 300.

Referring to FIG. 7, in some embodiments, the accommodating body 100 is, for example, a box structure. The box structure defines an accommodating space 113 for accommodating a pet. The accommodating space 113 has a top opening 10 through which the pet may enter the accommodating space 113. FIGS. 7 to 9 show an exemplary structure of an accommodating body 100. The accommodating body 100 includes, for example, a box body 110, a bracket apparatus (also referred to as a "bracket assembly") 120, and a seat fabric 150. In some embodiments, the accommodating body 100 has, for example, a left-right symmetrical, front-rear symmetrical structure. It should be noted that the "seat fabric" herein is not limited to a cloth material, but may be understood as a "covering", such as fabric, sponge, plastic, etc., and the present disclosure is not limited thereto.

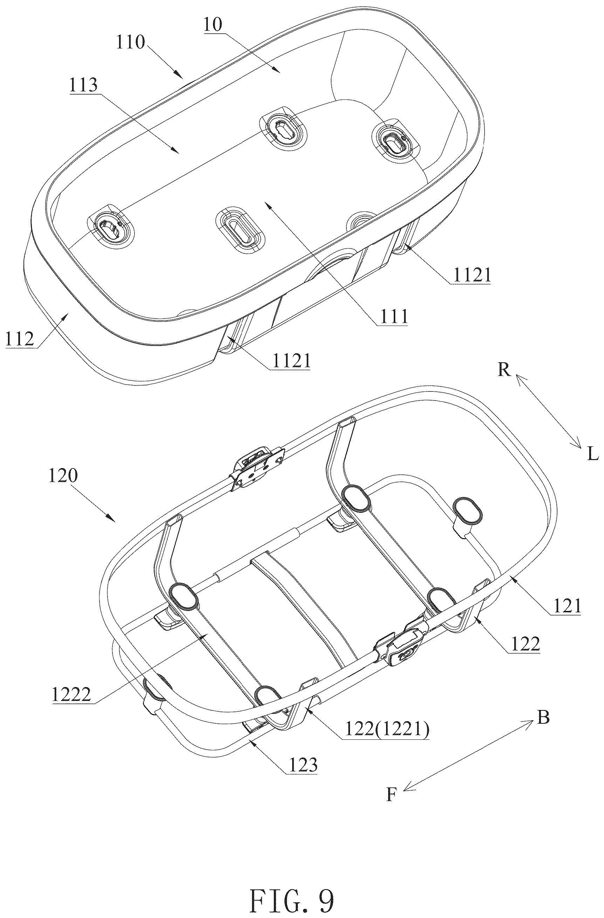

Referring to FIG. 9, the box body 110 includes, for example, a peripheral wall 112 and a bottom part 111, and the peripheral wall 112 and the bottom part 111 define an accommodating space 113 and a top opening 10. In some embodiments, the box body 110 may, for example, be made of a foam material or other suitable materials.

Referring to FIGS. 8 and 9, the bracket apparatus 120 is configured to support the box body 110 so that the box body 110 has sufficient structural strength. In some embodiments, the bracket apparatus 120 defines a space for accommodating the box body 110, and the bracket apparatus 120 outside of the box body 110 reinforces the structural strength of the box body 110. The bracket apparatus 120 may be a frame-type structure made of metal.

In some embodiments, the bracket apparatus 120 includes, for example, a first bracket 121, a second bracket 122, and a third bracket 123. The first bracket 121 and the third bracket 123 are substantially in parallel and in annular structures. The first bracket 121 and the third bracket 123 are connected by the second bracket 122. The second bracket 122 may be implemented in various ways, as long as it is capable of connecting the first bracket 121 and the third bracket 123.

As can be seen from FIG. 9, in this embodiment, two second brackets 122 are provided and spaced apart in a front-rear direction, and each of the second brackets 122 is in a U-shaped structure and has a vertical segment 1221 and a horizontal segment 1222. The vertical segment 1221 is connected to the first bracket 121, and the horizontal segment 1222 extends in a left-right direction and is connected to the third bracket 123.

Referring to FIG. 8, when the box body 110 is located within a space defined by the bracket apparatus 120, the first bracket 121 is engaged with an outer surface of the peripheral wall 112 of the box body 110, and the first bracket 121 is adjacent the top opening 10. The vertical segments 1221 of the second brackets 122 are engaged with the outer surface of the peripheral wall 112 of the box body 110, and the horizontal segments 1222 of the second brackets 122 are engaged with an outer surface of the bottom part 111 of the box body 110. The third bracket 123 is disposed under the box body 110, and the third bracket 123 may be detachably connected to a snap-in seat (socket or holder) (not shown) on a cart, thereby enabling the carrier 1000 to be mounted on the cart. Certainly, in some alternative embodiments, the bracket apparatus 120 may also be implemented in other ways without being limited to the above description.

As can be seen in FIG. 9, the first bracket 121 and the third bracket 123 are, for example, rectangular or in other suitable shapes. When the first bracket 121 and the third bracket 123 are rectangular, each of the first bracket 121 and the third bracket 123 includes two opposite long rods and two opposite short rods. In embodiments of the present disclosure, for ease of description, an extension direction of the long rods is referred to as the front-rear direction (also referred to as a longitudinal direction), and an extension direction of the short rods is referred to as the left-right direction (also referred to as a transverse direction). In the figures, arrows F and B are used to schematically show the "front" and "rear" directions, and arrows L and R are used to schematically show the "left" and "right" directions. These directional limitations are used solely to make the description of embodiments of the present disclosure clearer and are not intended to unduly limit the scope of protection of the present disclosure. Generally, when a pet is accommodated in the accommodating space 113, a front direction corresponds, for example, to a head direction of the pet and a rear direction corresponds, for example, to a tail direction of the pet; alternatively, the front direction corresponds, for example, to the tail direction of the pet and the rear direction corresponds, for example, to the head direction of the pet.

Referring to FIG. 7, the seat fabric 150 is, for example, wrapped around the inner and outer surfaces of the box body 110 to provide the accommodating body 100 a neat appearance. In some embodiments, the third bracket 123 may be exposed when the seat fabric 150 is wrapped around the box body 110. An area of the seat fabric 150 that is configured to be in contact with the pet may include a sponge interlayer or other structures with cushioning functions. Referring to FIGS. 8 and 9, the peripheral wall 112 of the box body 110 is provided with grooves 1121, and the vertical segments 1221 of the second bracket 122 may be embedded in the grooves 1121 without protruding relative to the surface of the peripheral wall 112, which facilitates the fit of the seat fabric 150 to the box body 110 and can reduce the difficulty of cutting the seat fabric 150. In some embodiments, the vertical segments 1221 of the second bracket 122 may, for example, be partially embedded in the grooves 1121 and partially protruded relative to the surface of the peripheral wall 112. In addition, the first bracket 121 may, for example, be mounted with a wider armrest (the armrest is, for example, made of plastic, not shown), and the seat fabric 150 may also be wrapped around the armrest.

Referring to FIG. 7, in some embodiments, each of the left and right sides of the accommodating body 100 is provided with two first connecting members 41, and two first connecting members 41 on the same side of the accommodating body 100 are spaced apart in the front-rear direction. The respective first connecting members 41 may, for example, be loop structures (e.g., metal loops) disposed on an exterior of the seat fabric 150, and each of the first connecting members 41 may, for example, be connected to the seat fabric 150 by a webbing 411. Certainly, connecting methods between the respective first connecting members 41 and the accommodating body 100 are not limited to the above examples. For example, in some embodiments not shown, each of the two long rods of the first bracket 121 is, for example, provided with two connecting posts (not shown), each of the connecting posts has an end portion exposed from the seat fabric 150, and the end portion is configured to be connected with the first connecting member 41. The roles of the respective first connecting members 41 will be described below.

Referring to FIGS. 4 to 6, the canopy assembly 200 is mounted to the accommodating body 100 and has an unfolded state where the top opening 10 is closed. The canopy assembly 200 is used for shading the sun, and also serves to prevent dust, mosquitoes, and foreign objects from entering the accommodating space 113. A bottom of the canopy assembly 200 matches the top opening 10 of the accommodating body 100 in shape. In some embodiments, the bottom of the canopy assembly 200 may be detachably connected to the top of the accommodating body 100 by a canopy locking apparatus 24, such that the canopy assembly 200 is detachably snapped at the top opening 10 of the accommodating body 100. In some embodiments, the canopy locking apparatus 24 may, for example, be a zipper. A first chain 241 of the zipper (see FIG. 6) is disposed, for example, circumferentially around the bottom of the canopy assembly 200, a second chain 242 of the zipper (see FIG. 7) is disposed, for example, circumferentially around the top of the accommodating body 100, and the second chain 242, for example, is connected to the seat fabric 150. Certainly, in other embodiments, the canopy locking apparatus 24 may be implemented in other ways, such as buckles, hook and loop fasteners, etc. When the canopy assembly 200 is removed from the accommodating body 100, the canopy assembly 200 may be folded for storage. Referring to FIG. 4, in some embodiments, the bottom of the canopy assembly 200 may also be provided with a skirt 25 that shields the canopy locking apparatus 24 when the canopy assembly 200 is in the unfolded state.

Continuing to refer to FIGS. 4 and 6, in some embodiments, the canopy assembly 200 may include a plurality of U-shaped brackets 21 (also referred to as "U-shaped support rods" or "support rods") and a canopy 22 connected to the U-shaped brackets 21. The canopy 22 includes, for example, the skirt 25 described above. When the canopy assembly 200 is in the unfolded state, two ends of each of the U-shaped brackets 21 correspond to the left and right sides of the accommodating body 100, respectively, and the canopy 22 is supported by the U-shaped brackets 21 and arches upwardly relative to the accommodating body 100. In some embodiments, the canopy 22 may include a shading area 221 and an observation area 222. Referring to FIG. 4, when the canopy assembly 200 is in the unfolded state, one of the shading area 221 and the observation area 222 is adjacent to a front end of the accommodating body 100 (corresponding to the front of the canopy assembly 200 and the canopy 22), and the other of the shading area 221 and the observation area 222 is adjacent to a rear end of the accommodating body 100 (corresponding to the rear of the canopy assembly 200 and the canopy 22). The shading area 221 is, for example made of a lightproof fabric for shading the sunlight. The observation area 222 is, for example made of a light-permeable mesh fabric or made of a transparent material, and a user may observe the interior of the accommodating body 100 through the observation area 222. When the observation area 222 is made of a transparent material, such as a plastic film, the observation area 222 may also be configured with a breathable structure.

Referring to FIGS. 4 and 6, in some embodiments, the shading area 221 of the canopy 22 may include a plurality of shading sheets 2211, and a junction of every two adjacent shading sheets 2211 is connected to one U-shaped bracket 21. The observation area 222 may include a plurality of observation sheets 2221, with a junction of every two adjacent observation sheets 2221 connected to one U-shaped bracket 21. A junction between a shading sheet 2211 and an observation sheet 2221 adjacent to each other is connected to one U-shaped bracket 21. In some embodiments, an area of the shading area 221 is larger than that of the observation area 222, and a carrying handle 23 may be provided on the shading area 221, and located, for example, at the top of the canopy 22.

Continuing to refer to FIGS. 4 and 6, in some embodiments, the canopy 22 may be provided with a canopy opening 201, and a closing member 223 is provided at the canopy opening 201, and is capable of closing or opening the canopy opening 201. In both FIGS. 4 and 6, the canopy opening 201 is closed by the closing member 223, and the canopy 22 is in the unfolded state. When the closing member 223 opens the canopy opening 201, a portion of the canopy 22 may be folded in a direction of an arrow T1, and another portion of the canopy 22 may be folded in a direction of an arrow T2, such that the canopy opening 201 is opened wide (i.e., exposing the accommodating space), and the canopy assembly 200 is switched to an open state. When the canopy assembly 200 is in the open state, the user may place the pet into the accommodating space 113 or take the pet out of the accommodating space 113 through the canopy opening 201, without removing the canopy assembly 200 as a whole from the accommodating body 100.

Referring again to FIGS. 1 to 3, in some embodiments, the protective cover 300 is connected to the accommodating body 100, and the protective cover 300 is configured to cover at least a part of the canopy assembly 200 to provide protection to the canopy assembly 200, preventing the canopy assembly 200 in the unfolded state from being damaged when it is subjected to an impact. In other words, the protective cover 300 in this embodiment may also be referred to as a "protection apparatus", or as an example or a part of the "protection apparatus". In some embodiments, the protective cover 300 may cover an area of the canopy assembly 200 with relatively weak structural strength and poor impact resistance. For the canopy, the structural strength of the shading area 221 is generally higher than the structural strength of the observation area 222, and thus the protective cover 300 may, for example, cover the observation area 222 to improve the impact resistance of the observation area 222 and protect the observation area 222 from being damaged. It will be appreciated that partial areas of the observation area 222 may not be covered by the cover body 31 for air circulation. Certainly, in some alternative embodiments, the protective cover 300 may also be configured to cover the shading area 221 to improve the impact resistance of the shading area 221.

FIGS. 3, 10, and 11 show exemplary embodiments of the protective cover 300. The protective cover 300 may include a cover body 31 and two second connecting members 32. The cover body 31 has a shape that is narrow at two ends and wide at the center. When the protective cover 300 is in a use state shown in FIG. 1, the cover body 31 has an arched shape, with the two ends of the cover body 31 corresponding to the left and right sides of the accommodating body 100. The cover body 31 may include at least one material layer. In some embodiments, the material layer of the cover body 31 may include, for example, an inner fabric layer and an outer fabric layer made of fabric, with the inner fabric layer facing the canopy assembly 200 and the outer fabric layer facing away from the canopy assembly 200. A cushioning material layer such as a sponge layer may be sandwiched between the inner fabric layer and the outer material layer. Certainly, in some embodiments, the material layer of the cover body 31 may include a single fabric layer made of fabric. The two second connecting members 32 are provided at the two ends of the cover body 31, one of the second connecting members 32 may be selectively and detachably connected to one of the two first connecting members 41 located on the left side of the accommodating body 100, and the other second connecting member 32 may be selectively and detachably connected to one of the two first connecting members 41 located on the right side of the accommodating body 100, such that the cover body 31 transversely covers the observation area 222 located at the front or rear of the canopy assembly 200.

Referring to FIG. 10, in some embodiments, the respective second connecting members 32 may, for example, be secured to two opposite ends of the cover body 31 by webbings 33. The second connecting members 32 are, for example, hook clasps, which may be easily connected to the loop structures of the first connecting members 41. In some alternative embodiments, the webbing 33 is, for example, an elastic strap, and the elastic strap is tensioned to fit the cover body 31 tightly to the canopy assembly 200 when the respective second connecting members 32 are connected to the corresponding first connecting members 41, so as to effectively enhance the impact resistance of the covered area of the canopy assembly 200. Furthermore, in some alternative embodiments, the number of first connecting members 41 provided on the left and right sides of the accommodating body 100 is not limited to two, and the number of first connecting members 41 may be one or more than two. When the number of first connecting members 41 is two or more than two, even if the distances between the second connecting members 32 at the two ends of the cover bodies 31 of different protective covers 300 are different, the cover bodies 31 may be made to fit to the covered area of the canopy assembly 200 by selectively connecting the respective second connecting members 32 with the plurality of first connecting members 41, thereby improving the compatibility of the accommodating body 100 and the protective cover 300.

Referring to FIGS. 1, 3, 4, 10, and 11, the surfaces of the cover body 31 and the canopy 22 in contact with each other are matched in shape. More specifically, in an example of the cover body 31 covering the observation area 222, a U-shaped bracket 21 between the adjacent observation sheets 2221 of the observation area 222 protrudes outwardly relative to the observation sheets 2221. The protective cover body 31 may be provided with a turning part 312 corresponding to the U-shaped bracket 21. When the protective cover 300 is connected to the accommodating body 100, the turning part 312 cooperates with the U-shaped bracket 21 to effectively prevent the cover body 31 from sliding downwardly relative to a canopy assembly 200. In some embodiments, the protective cover body 31 may also include a skirt 35, which may be wrapped around the outside of the top opening 10 of the accommodating body 100 to assist in positioning the protective cover body 31 relative to the canopy 22.

Referring to FIGS. 10 and 11, the protective cover 300 (i.e., the protection apparatus) includes an impact resistant body 311. Specifically, in some embodiments, the impact resistant body 311 may be provided at a transverse middle area of the cover body 31 (shown with dashed lines), to partially enhance the impact resistance (impact protection performance) of the area of the canopy assembly 200 that is most susceptible to impact. The impact resistant body 311 may be a single-layer structure or a multi-layer structure, and the impact resistant body 311 may be connected to a surface of the cover body 31 facing the canopy 22, or may be sandwiched between the outer fabric layer and the inner fabric layer of the cover body 31. When the impact resistant body 311 is a single-layer structure, it may, for example, be made of inert memory foam or other suitable materials. When the impact resistant body 311 is a multi-layer structure, it may, for example, be a combination of an EPP (expanded polypropylene) material layer, an EPS (expanded polystyrene) material layer, and an EPE (expanded polyethylene, also referred to as pearl cotton) material layer, or a combination of an inert memory foam material layer and a PE (polyethylene) material layer, or a combination of other suitable material layers. Certainly, in some embodiments, the impact resistant body 311 is not limited to being disposed in the transverse middle area of the cover body 31, and the areas of the cover body 31 covering the canopy assembly 200 may each be provided with the impact resistant body 311. Referring to FIGS. 12 and 13, in some embodiments, the entirety of the skirt 35 or the transverse middle area thereof may also be provided with the impact resistant body 311.

Referring again to FIG. 1, in some embodiments, a connecting structure 36 may be provided between an upper edge 316 of the cover body 31 of the protective cover 300 and the canopy assembly 200, and the connecting structure 36 includes, for example, a third connecting member 361 and a fourth connecting member 362. The third connecting member 361 is connected to the canopy assembly 200, for example to the canopy 22 or a U-shaped bracket 21. The fourth connecting member 362 is connected to the upper edge 316 of the canopy body 31. The third connecting member 361 is detachably connected to the fourth connecting member 362, to further prevent the cover body 31 from sliding downwardly relative to the canopy assembly 200. The third connecting member 361 may be, for example, a metal loop or a cloth loop, the fourth connecting member 362 may be a hook clasp or a cloth strap, and the cloth strap may be closed to form a loop when wrapped around the third connecting member 361.

In some embodiments not shown, it is also possible to perform the following variants of the carrier 1000 provided in the first embodiment of the first aspect of the present disclosure.

First, in some embodiments, the box body 110 of the accommodating body 100 may include a plastic shell and may not be provided with a bracket apparatus 120, and the seat fabric 150 may be not completely wrapped around the box body 110 but may be only wrapped around a portion of the box body 110 (e.g., a surface of the accommodating space 113). The box body 110 may be configured with a rigid handle, with two ends of the handle pivoted to the middles of the two opposite long rods of the first bracket 121, respectively. In this case, the canopy assembly 200 may not be provided with a carrying handle 23. Alternatively, in some embodiments, two ends of the shoulder strap (not shown) may be detachably connected to the idle first connecting member 41, and the shoulder strap may be slung over a user's shoulder to facilitate carrying the carrier 1000 during movement.

Second, in some embodiments, the bottom of the canopy assembly 200 is connected to the top of the accommodating box body 100, for example, by means of sewing, such that the canopy assembly 200 is not detachable from the accommodating body 100. In some embodiments, both the front and the rear of the canopy 22 may be provided with observation areas 222, and the shelter area 221 is located at the middle of the canopy 22. At this point, two protective covers 300 may be configured so as to cover the observation areas 222 at the front and rear of the canopy 22, respectively. It will be appreciated that the protective cover 300 not only serves to improve the impact resistance of the canopy 22, but also be served as a sunshade. In some embodiments, the carrier 1000 may be configured with two or more protective covers 300, and the protective covers 300 may cover not only the observation areas 222, but also the shading area 221 to improve the impact resistance of the various covered areas of the canopy assembly 200. In some embodiments, the shading area 221 of the canopy 22 may also be made of a light-permeable mesh fabric or a transparent material, and the protective covers 300 may be made as a cover covering the canopy 22.

Third, in some embodiments, the protective cover 300 may be detachably connected to both of the accommodating body 100 and the canopy assembly 200, or the protective cover 300 may be connected only to the canopy assembly 200. It is sufficient that the protective cover 300 may simply cover an area of the canopy assembly 200 with a relatively weak structural strength to enhance the impact resistance of the area. For example, in some embodiments, the canopy assembly 200 may be provided with one or more first connecting members 41, the first connecting members 41 are, for example, metal loops (e.g., D-shaped loops), a whole strip of a hook and loop fastener, or a plurality of snap fasteners, or other suitable structures disposed along the skirt 25, and the first connecting members 41 may be detached along with the canopy assembly 200. The skirt 35 of the cover body 31 may be provided with one or more second connecting members 32. The second connecting members 32 may be an entire strip of a hook and loop fastener, or a plurality of snap fasteners, or other suitable structures disposed along the skirt 35. The first connecting member 41 is detachably connected to the second connecting member 32 such that the protective cover 300 is detachably connected to the canopy assembly 200.

### Second embodiment of the first aspect

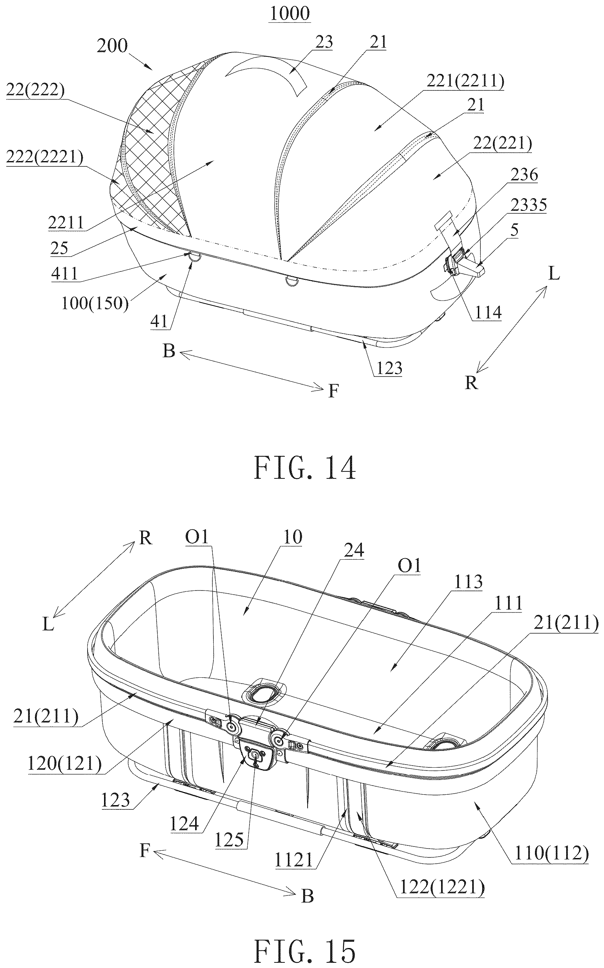

FIG. 14 shows a structure of a carrier 1000 provided according to the second embodiment of the first aspect of the present disclosure. The carrier 1000 is similar to that of the above-described first embodiment, and includes an accommodating body 100, a canopy assembly 200, and a protective cover 300 (not shown). This embodiment mainly provides a variation of the structure of the accommodating body 100 and the canopy assembly 200. In the absence of conflict, the structure of the components and the connection relationships between the components in this embodiment may be referred to as described in the first embodiment above, and the differences between this embodiment and the aforementioned first embodiment will be mainly described below.

The carrier 1000 may be placed on the vehicle seat and secured to a vehicle seat (not shown) by any suitable structures. It will be appreciated that, when the carrier 1000 is placed on the vehicle seat, the front-rear direction of the rectangular carrier 1000 may correspond to a left-right direction of the vehicle seat. Referring to FIG. 14, the carrier 1000 may also be provided with a side impact protection structure (also referred to as a "protection apparatus" or as an example or a part of the "protection apparatus"), and the side impact protection structure includes, for example, at least one side impact protection block 5. When the side impact protection block 5 is in use (in which the side impact protection block 5 is capable of cushioning an impact from a lateral direction, e.g., from a vehicle door), and the side impact protection block 5 corresponds to a side portion of the accommodating body 100. More specifically, the side impact protection block 5 may be provided at a middle position of at least one of the front and rear sides of the accommodating body 100. The side impact is cushioned by the side impact protection block 5, which is conducive to ensuring the side safety of the pet in the accommodating space 113. The side impact protection block 5 may be connected directly to the accommodating body 100 or to the canopy assembly 200. It is sufficient that the side impact protection block 5 corresponds to the side of the accommodating body 100 and is capable of transferring the subjected side impact to the accommodating body 100 when it is in use. It will be understood that when the side impact protection block 5 is connected to the canopy assembly 200, the side impact protection block 5 may be connected to the front and/or rear of the canopy assembly 200, and that when the canopy assembly 200 is in the unfolded state and is connected to the accommodating body 100, the side impact protection block 5 is located on the side of the accommodating body 100 to enable side impact protection.

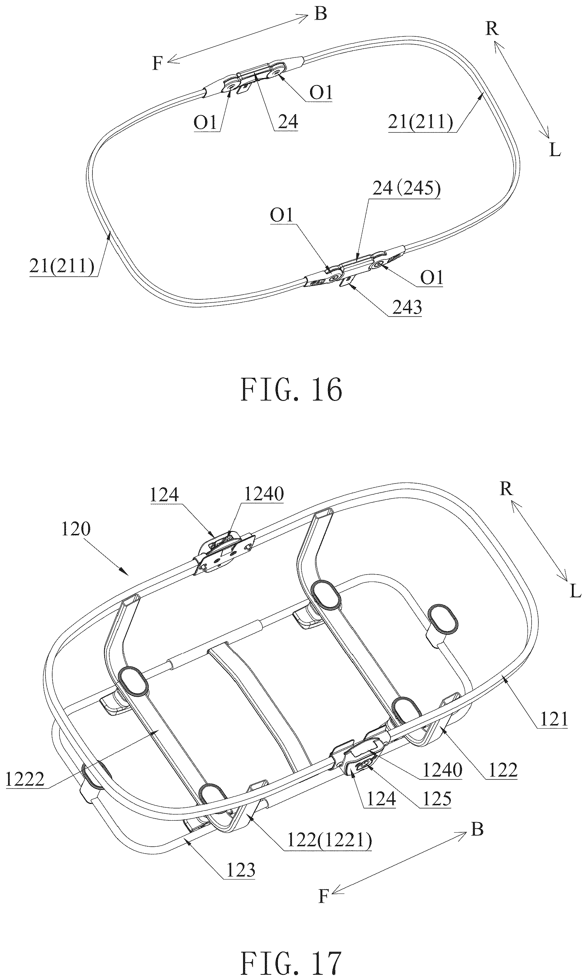

Referring to FIGS. 14, 16, and 18, in some embodiments, the plurality of U-shaped brackets 21 of the canopy assembly 200 further include two canopy frames (also referred to as pivot segments) 211 secured to the periphery of the canopy 22. Referring to FIGS. 15 and 16, ends of the two canopy frames 211 opposite each other are pivoted with two canopy locking apparatuses 24, respectively, such that the respective canopy frames 211 are capable of being rotated relative to the canopy locking apparatuses 24 about pivot points O1. Each of the canopy locking apparatuses 24 is configured to be detachably connected to the canopy locking parts 124 on the left and right sides of the accommodating body 100.

FIGS. 16 and 17 show exemplary embodiments of the canopy locking apparatus 24 and the canopy locking parts 124. Each of the canopy locking apparatuses 24 may include a locking member 243 and a housing (also be referred to as a locking segment) 245, with the locking member 243 mounted to the housing 245. The two canopy locking parts 124 are mounted, for example, on the first bracket 121, and more specifically, for example, at the middle of the long rods of the first bracket 121. Each of the canopy locking parts 124 has a groove 1240 for accommodating the locking member 243. A mating locking member (not shown) may be provided within the groove 1240, and the locking members 243 may be engaged with the mating locking members to lock relative positions between the canopy locking apparatuses 24 and the canopy locking parts 124. It should be noted that, in some embodiments, the seat fabric 150 may be wrapped around the canopy locking parts 124, and the seat fabric 150 may be provided with openings at locations corresponding to the slots 1240.

An unlocking member may be provided on either the canopy locking apparatus 24 or the canopy locking part 124 to disengage the locking member 243 from the mating locking member. In some embodiments, the unlocking member may be provided on the canopy locking apparatus 24, and the unlocking member is operably connected to the locking member 243. In this embodiment, the unlocking member 125 is disposed, for example, on the canopy locking part 124, and the unlocking member 125 is operably connected to the mating locking member. When it is necessary to remove the canopy assembly 200 from the accommodating body 100, the mating locking member is actuated by the unlocking member 125, causing the mating locking member to be disengaged from the locking member 243. In some embodiments, segment adjustment structures may be provided between ends of the respective canopy frames 211 and the housings 245. Each of the segment adjustment structures includes, for example, wavy-shaped end teeth to enable the respective canopy frames 211 to be maintained at different angles relative to the housing 245.

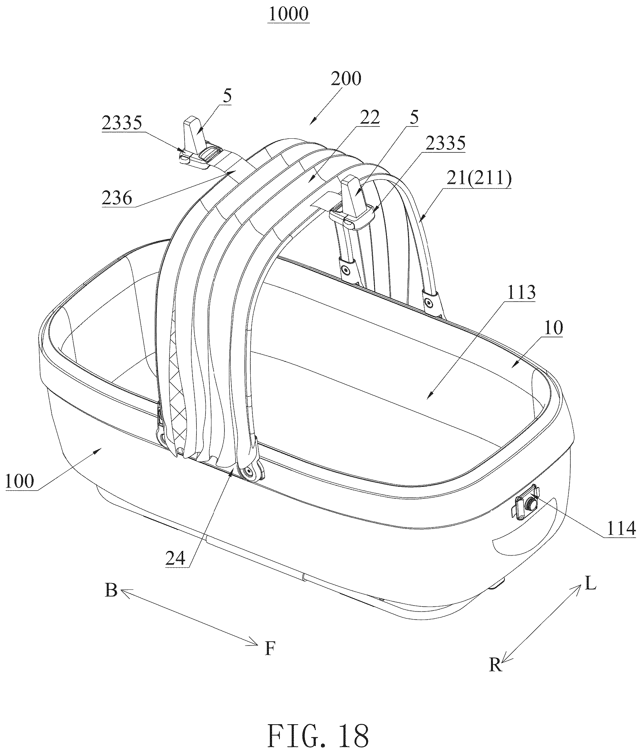

In conjunction with reference to FIGS. 14 and 15, the two canopy frames 211 are snapped at the top opening 10 of the accommodating body 100 in a front-rear symmetrical manner, and more specifically, the two canopy frames 211 are sleeved outside the box body 110 and disposed above the first bracket 121 of the bracket apparatus 120. Referring to FIG. 18, when it is necessary to open the canopy assembly 200 to place a pet into the accommodating space 113, it is available to flip any canopy frame 211 upwardly.

With reference to FIGS. 14 and 18, in some embodiments, both the front and rear sides of the accommodating body 100 are provided with fifth connecting members 114, respectively, both the front and the rear of the canopy 22 are respectively provided with mating connecting members 2335 corresponding to the respective fifth connecting members 114, and the fifth connecting members 114 are detachably connected to the corresponding mating connecting member 2335. When the fifth connecting members 114 is connected to the mating connecting members 2335, the canopy assembly 200 may be prevented from accidentally opening due to the canopy frames 211 flipping upwards by mistake, so that the canopy assembly 200 may be kept in the unfolded state. When it is necessary to remove the canopy assembly 200 from the accommodating body 100, the fifth connecting members 114 and the mating connecting members 2335 are disengaged. In some embodiments, one of each fifth connecting member 114 and each mating connecting member 2335 may be a male connector and the other may be a female connector, and the canopy assembly 200 is kept in the unfolded state when the male connectors are connected to the female connectors. The male connectors and the female connectors may be, but not limited to, magnetic snap assemblies, buckle assemblies that are engaged with each other. Referring to FIG. 18, in some embodiments, the side impact protection blocks 5 are attached to the mating connecting members 2335. In some alternative embodiments, the side impact protection blocks 5 may be attached to the fifth connecting members 114. In some embodiments, each of the mating connecting members 2335 may be connected to the canopy 22 by a connecting strap 236, and the fifth connecting members 114 may be secured to the seat fabric 150 or may be secured directly to the box body 110 and exposed from the seat fabric 150. Referring to FIG. 14, when the mating connecting members 2335 are connected to the fifth connecting members 114, each of the mating connecting members 2335 is located on an outer side of each of the fifth connecting members 114, and the side impact protection blocks 5 may be provided on the mating connecting members 2335, protruding outwardly from the housings of the mating connecting members 2335.

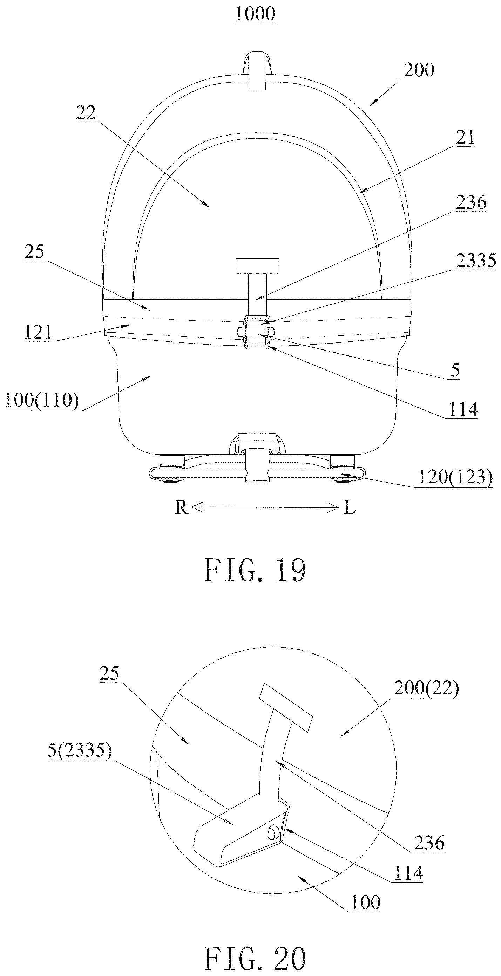

Referring to FIG. 19, in some embodiments, the location of the side impact protection block 5 corresponds to the first bracket 121. Certainly, in some embodiments, the location of the side impact protection block 5 may not correspond to the bracket apparatus 120 but directly correspond to the box body 110. In some embodiments, when the canopy assembly 200 is in the unfolded state and the mating connecting members 2335 and the fifth connecting members 114 are not connected, the skirt 25 may shield the fifth connecting members 114. When it is necessary to connect the mating connecting members 2335 to the fifth connecting members 114, the skirt 25 may be moved to expose the fifth connecting members 114, such that the fifth connecting members 114 are connected to the mating connecting members 2335. In some embodiments, the skirt 25 may be provided with notches at locations corresponding to the fifth connecting members 114 to allow the fifth connecting members 114 to be exposed. Certainly, in some embodiments, the canopy assembly 200 may not be provided with the skirt 25. Referring to FIG. 20, in some embodiments, the side impact protection block 5 may be integrally formed with a mating connecting member 2335.

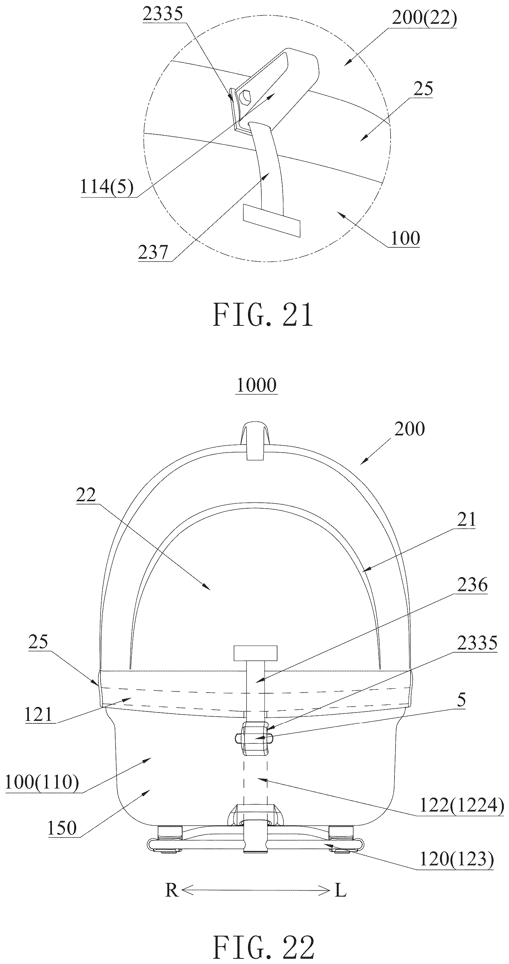

Referring to FIG. 21, in some embodiments, the mating connecting member 2335 (e.g., a male buckle in this example) may be directly connected to the canopy 22 (e.g., the skirt 25), the fifth connecting member 114 (e.g., a female buckle in this example) may be connected to the accommodating body 100, and the fifth connecting member 114 may be connected to the seat fabric 150 or the box body 110 of the accommodating body 100, for example, by the connecting strap 237. The side impact protection block 5 is provided on the fifth connecting member 114. Referring to FIG. 21, when the mating connecting member 2335 is connected to the fifth connecting member 114, the fifth connecting member 114 is located on the outer side of the mating connecting member 2335, and the side impact protection block 5 may be provided on the fifth connecting member 114 and protrude outwardly from the housing of the fifth connecting member 114. Certainly, in some embodiments, the side impact protection block 5 may be integrally formed with the fifth connecting member 114.

### Third embodiment of the first aspect

FIG. 22 shows the structure of a carrier 1000 provided according to the third embodiment of the first aspect of the present disclosure, and a variant of the bracket apparatus 120 of the aforementioned second embodiment is primarily performed in this embodiment. In the absence of conflict, the structure of the components and the connection relationships between the components in this embodiment may be referred to as described in the above second embodiment, and the following primarily describes the differences between this embodiment and the aforementioned second embodiment.

Referring to FIG. 22, in some embodiments, the bracket apparatus 120 is added with an additional second bracket 122 between the first bracket 121 and the third bracket 123 on the basis of the bracket apparatus 120 described in the above second embodiment. The added additional second bracket 122 includes, for example, a horizontal segment (not shown in the figure) and a vertical segment 1224 that are connected with each other, the horizontal segment is connected, for example, to the short rods of the third bracket 123, i.e. the horizontal segment extends in the longitudinal direction (i.e. in the direction of the extension of the long rods), and the vertical segment 1224 is connected, for example, to the short rods of the first bracket 121, specifically connected between the horizontal segment and the short rods of the first bracket 121. The vertical segment 1224 corresponds to a side of the box body 110, and more specifically, the peripheral wall 112 of the box body 110 may be provided with a groove (not shown), and the vertical segment 1224 may be embedded in the groove without protruding relative to the surface of the peripheral wall 112. Alternatively, in some embodiments, the vertical segment 1224 may, for example, be partially embedded in the groove and partially protruding relative to the surface of the peripheral wall 112.

Continuing to refer to FIG. 22, in some embodiments, the position of the side impact protection block 5 may correspond to the vertical segment 1224, such that impacts on the side impact protection block 5 may be transferred to the vertical segment 1224.

### Fourth embodiment of the first aspect

The first aspect of the present disclosure also provides a fourth embodiment that is not shown, which is a variant of the carrier 1000 provided in the second embodiment described above, and more specifically, the side impact protection block 5 protruding outwardly from the housing of the mating connecting member 2335 or the housing of the fifth connecting member 114 in the second embodiment is omitted. In the absence of conflict, the structure of the components and the connection relationships between the components in this embodiment may be referred to as described in the above second embodiment, and the following primarily describes the differences between this embodiment and the aforementioned second embodiment.

In this embodiment, the fifth connecting member 114 may be secured to the seat fabric 150 and correspond directly to the box body 110 (or the fifth connecting member 114 is secured directly to the box body 110 and is exposed from the seat fabric 150), such that the fifth connecting member 114 does not correspond to the bracket apparatus 120. The fifth connecting member 114 and the mating connecting member 2335 may be a magnetic snap assembly. The mating connecting member 2335 may be connected to the canopy assembly 200 (e.g., canopy 22) by a connecting strap 236. After the mating connecting member 2335 is flipped downwardly and connected to the fifth connecting member 114, the aforementioned protective cover 300 is placed over the canopy assembly 200, and the protective cover 300 may cover the mating connecting member 2335 and the fifth connecting member 114.

In connection with the foregoing, it will be understood that when the carrier 1000 is mounted on the vehicle seat, the left or right side of the accommodating body 100 abuts against the vehicle seat, and the front or rear side of the accommodating body 100 faces the vehicle door. In the event of a side impact of the carrier 1000 mounted on the vehicle seat (i.e., when the front or rear side of the accommodating body 100 is impacted), the carrier 1000 is impacted in the order of the protective cover 300, the magnetic snap assembly (the mating connecting member 2335 and the fifth connecting member 114), and the box body (e.g., made of foam material) 110. In some embodiments, the protective cover 300 in the use state does not cover the magnetic snap assembly, and in the event of a side impact of the carrier 1000 mounted on the vehicle seat, the carrier 1000 is impacted in the order of the magnetic snap assembly (the mating connecting member 2335 and the fifth connecting member 114), and the box body (e.g., made of foam) 110. The magnetic snap assembly of this embodiment is used as a side impact protection block (side impact protection structure), without a need for an additional side impact protection block, which is conducive to cost reduction.

Certainly, in some embodiments, the fifth connecting member 114 may be secured to the seat fabric 150, and the fifth connecting member 114 corresponds to the bracket apparatus 120, and more specifically, for example, to the first bracket 121 (referring to FIG. 19). The mating connecting members 2335 are connected to the canopy assembly 200, and more specifically, the mating connecting members 2335 may be connected to the canopy 22 by the connecting strap 236. The protective cover 300 may cover the mating connecting member 2335 and the fifth connecting member 114 connected to each other. When the carrier 100 is mounted on a vehicle seat and a side impact occurs, the carrier 1000 is impacted in the order of the protective cover 300, the magnetic snap assembly (mating connecting member 2335 and fifth connecting member 114), and the bracket apparatus 120.

### Fifth embodiment of the first aspect

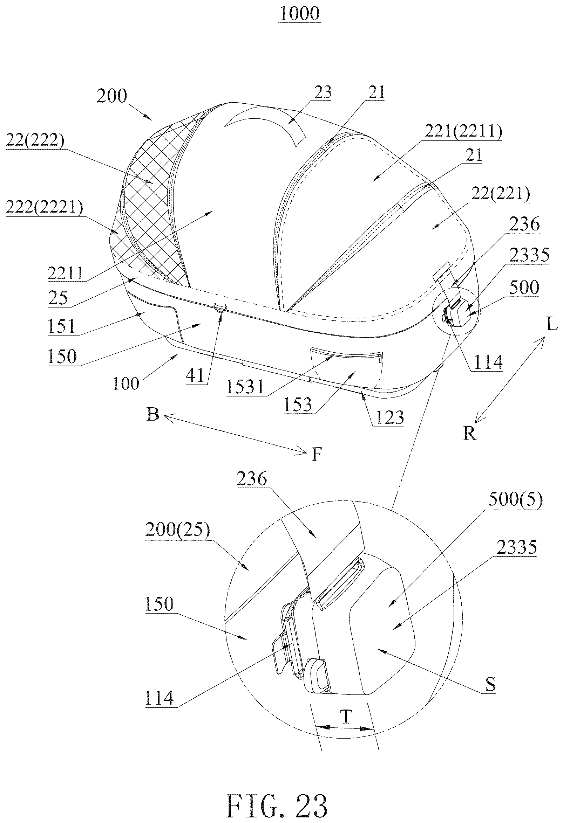

FIG. 23 shows a perspective view of a carrier 1000 provided in accordance with the fifth embodiment of the first aspect of the present disclosure. The carrier 1000 includes, for example, an accommodating body 100 and a canopy assembly 200. The carrier 1000 may be configured with the protective cover 300 in the above embodiment or may not be configured with the protective cover 300. In the absence of conflict, the structure of the accommodating body 100 and the canopy assembly 200 of this embodiment may be referred to as described in the above second embodiment, and the following primarily describes the differences between this embodiment and the aforementioned second embodiment.

Referring to FIG. 23, each of the front and rear sides of the accommodating body 100 is provided with a fifth connecting member 114. The fifth connecting member 114 may be secured to the seat fabric 150 or may be fixed directly to the box body 110 and exposed from the seat fabric 150. The canopy assembly 200 is provided with a mating connecting member 2335 corresponding to each fifth connecting member 114, the mating connecting member 2335 is connected to the canopy 22 of the canopy assembly 200, for example, by means of a connecting strap 236. As described in the second embodiment, the fifth connecting member 114 is detachably connected to the mating connecting member 2335. When the fifth connecting member 114 is connected to the mating connecting member 2335, the canopy assembly 200 may be prevented from accidentally opening due to the canopy frames 211 flipping upwards by mistake, so that the canopy assembly 200 may be kept in the unfolded state. When it is necessary to remove the canopy assembly 200 from the accommodating body 100, the fifth connecting members 114 is disengaged from the mating connecting members 2335. In some embodiments, one of each fifth connecting member 114 and each mating connecting member 2335 may be a male connector and the other may be a female connector, and the canopy assembly 200 is kept in the unfolded state when the male connectors are connected to the female connectors. The male connector and the female connector may be, but not limited to, magnetic snap assemblies, buckle assemblies that are engaged with each other.

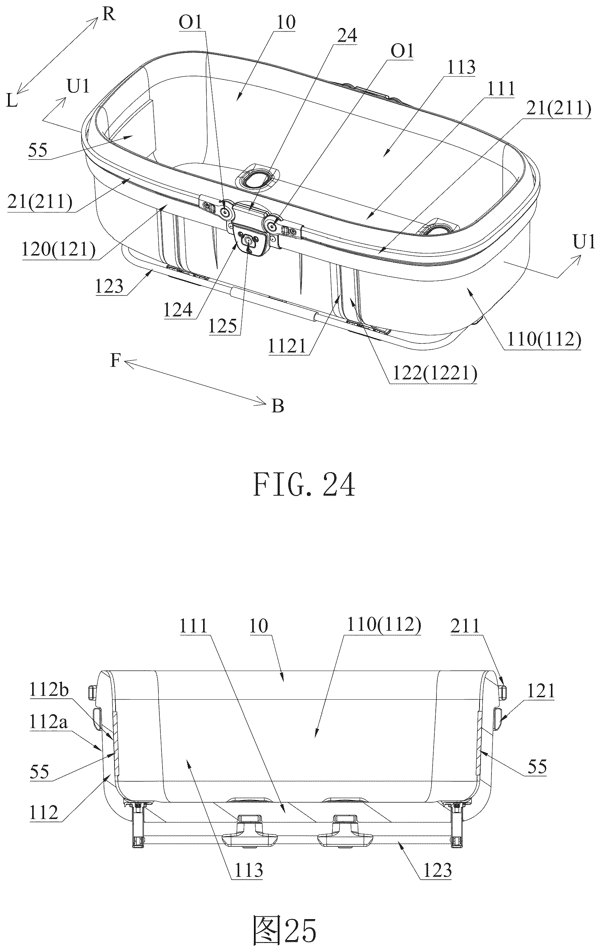

As can be seen in FIG. 23, in some embodiments, the carrier 1000 may include a side impact protection structure 500 (also referred to as a "protection apparatus" or as an example or a part of the "protection apparatus"), the side impact protection structure 500 may be located on the accommodating body 100 and/or the canopy assembly 200, and the side impact protection structure 500 includes, for example, a side impact protection block 5. When the carrier 1000 is in the use state shown in FIG. 23, the canopy assembly 200 is in the unfolded state, and the side impact protection block 5 is in the use state and corresponds to a side of the accommodating body 100 (more specifically, to at least one of the front and rear sides of the accommodating body 100). Referring to FIG. 24, when the carrier 1000 is secured to the vehicle seat and is subjected to a side impact, the side impact protection block 5 reduces the effect of the side impact (e.g., an impact from a vehicle door) on the accommodating body 100 (in particular, the box body 110) and ensures the side safety of the pet in the accommodating space 113.

The mating connecting member 2335, in FIG. 23, is connected to the canopy 22 by means of a connecting strap 236. When the mating connecting member 2335 is connected to the fifth connecting member 114, the mating connecting member 2335 is located on the outer side of the fifth connecting member 114. The side impact protection structure 500 includes, for example, a side impact protection block 5 integrated on the housing of the mating connecting member 2335. That is, the side impact protection block 5 is attached to or integrally formed with or formed directly from the housing of the mating connecting member 2335. Alternatively, in some embodiments, the side impact protection block 5 may protrude outwardly relative to the housing of the mating connecting member 2335 as described in the second embodiment of this aspect.

In some embodiments, the housing of the mating connecting member 2335 itself may be used as the side impact protection block 5 by means of changing dimensions of the housing of the mating connecting member 2335.

In some embodiments, for example, in conjunction with FIG. 21, the mating connecting member 2335 is connected, for example, directly to the canopy 22 of the canopy assembly 200, and the fifth connecting member 114 may be connected to the seat fabric 150 of the accommodating body 100 or to the box body 110 by the connecting strap 237. When the mating connecting member 2335 is connected to the fifth connecting member 114, the fifth connecting member 114 is located on the outer side of the mating connecting member 2335. The side impact protection structure 500 may include a side impact protection block 5 integrated onto the housing of the fifth connecting member 114, i.e., the side impact protection block 5 is attached to or integrally formed with the housing of the fifth connecting member 114. Similarly, the housing of the mating connecting member 114 itself may be used as the side impact protection block 5 by means of changing dimensions of the housing of the mating connecting member 114. Alternatively, the side impact protection block 5 may protrude outwardly relative to the housing of the fifth connecting member 114.

In some embodiments, as shown in FIG. 23, the housing of the mating connecting member 2335 or the housing of the fifth connecting member 114 used as the side impact protection block 5 has, for example, a great thickness T and a large side-impact contact area (area of the side-impact contact surface subjected to the side impact) S to achieve a side impact protection effect. In some embodiments, the side-impact contact area S is preferably 40 cm² to 80 cm². In some embodiments, a height of the housing of the mating connecting member 2335 or the housing of the fifth connecting member 114 used as the side impact protection block 5 that protrudes relative to the accommodating body 100, which is oriented in the same direction as a direction of the thickness T, may be in a range of 10 mm to 30 mm.

It should be noted that in some embodiments, when the mating connecting member 2335 is connected to the fifth connecting member 114, the mating connecting member 2335 and the fifth connecting member 114 may undergo a relative rotation when subjected to the side impact under the action of the connecting strap 236 or the connecting strap 237. This relative rotation may disperse an instantaneous force direction, so that the mating connecting member 2335 and the fifth connecting member 114 are not easily separated from each other. As a result, in the event of an impact, the canopy assembly 200 can still securely cover the accommodating body 100 without opening the top opening 10 of the accommodating body 100, thereby protecting the pet in the accommodating space 113 from falling out of the accommodating body 100.

Continuing to refer to FIG. 23, in some embodiments, the seat fabric 150 wrapped around the outer surface of the box body 110 may be provided with an open pocket 151 and/or a pocket 153 having a closing member 1531 to provide the user with a plurality of spaces for storing objects. The closing member 1531 may be, but not limited to, for example, a zipper. The pocket 153 may, for example, be a hidden pocket hidden within the seat fabric 150.

Refer to FIG. 24 for a perspective view of the box body 110 and bracket apparatus 120 of the accommodating body 100, and the canopy frame 211 of the canopy assembly 200, and FIG. 25 for a sectional view. In some embodiments, the side impact protection structure 500 may also include a cushioning block 55, the cushioning block 55 is disposed on an inner side 112b of the peripheral wall 112 of the box body 110, and more specifically, on the inner side 112b of the peripheral wall 112 on a front side and/or a rear side (i.e., either side along the longitudinal direction) of the box body 110. The cushioning block 55 is configured to cushion a side impact between the pet in the accommodating space 113 and the box body 110. In some embodiments, the box body 110 is, for example, made of foam material, and the cushioning block 55 is, for example, integrally formed with the box body 110. In some embodiments, a first side of the cushioning block 55 may be attached to the box body 110 by bonding or other ways. The material of the cushioning block 55 may be selected from a material having an elastic shock-absorbing effect, and the cushioning block 55 may have a large area as well as an appropriate thickness.

In some embodiments, when the cushioning block 55 is a single-layer structure, it may, for example, be made of inert memory foam or other suitable materials. When the cushioning block 55 is the multi-layer structure, it may, for example, be a combination of an EPP (expanded polypropylene) material layer, an EPS (expanded polystyrene) material layer, and an EPE (pearl cotton) material layer, or a combination of an inert memory foam material layer and a PE (polyethylene) material layer, or a combination of other suitable material layers.

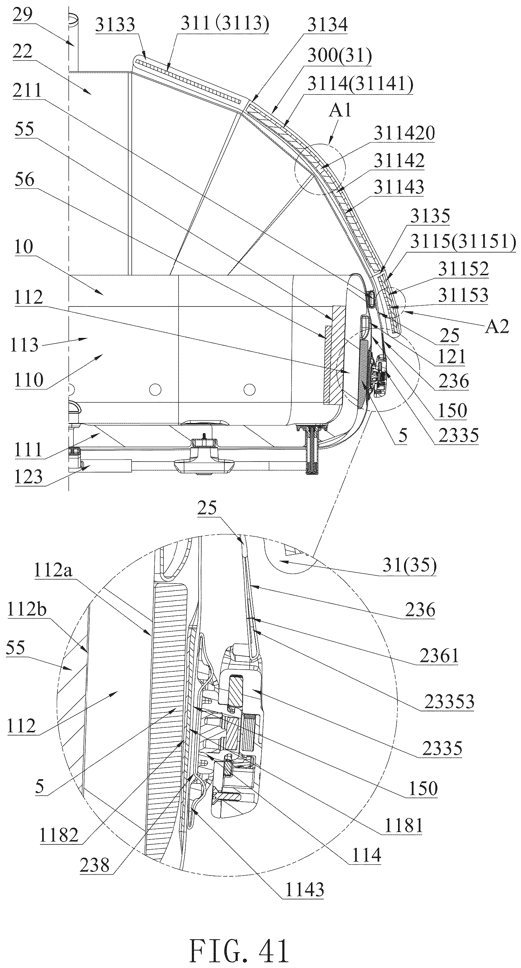

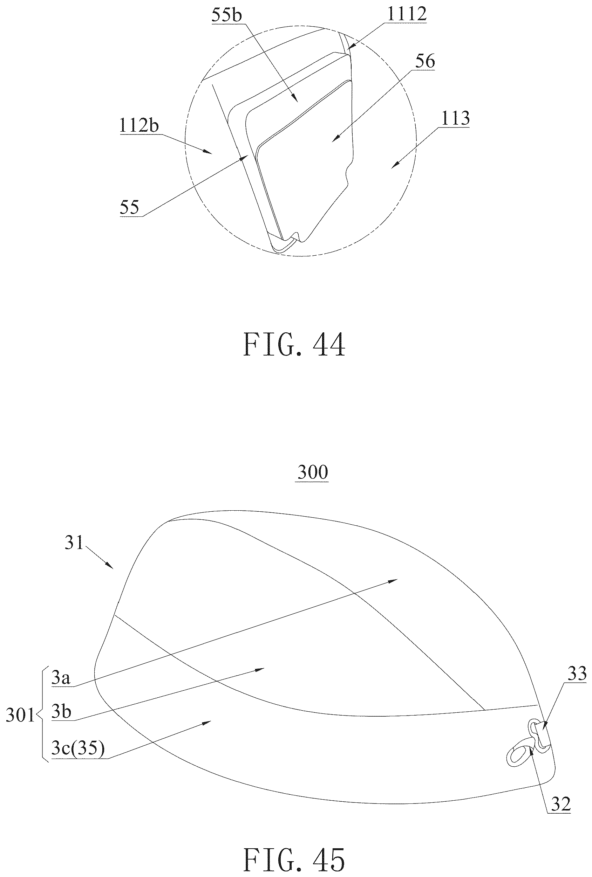

In some embodiments, a second side of the cushioning block 55 opposite to the first side may be provided with a hard sheet (see FIGS. 41 and 44 for relative relationships between the hard sheet 56 and the box body 110, the accommodating space 113), the hard sheet may be a plastic sheet made of PE (polyethylene), PC (polycarbonate), PP (polypropylene), PVC (polyvinyl chloride), PET (polyethylene terephthalate), PMMA (polymethylene terephthalate), PUMA (polyphenylene terephthalate), PUMA (polyphenylene terephthalate), and PUMA (polypropylene). ester), PMMA (polymethylmethacrylate), etc. Alternatively, the hard sheet may be a metal sheet having high hardness, deformability and toughness. When a pet is impacted with the cushioning block 55 of the accommodating body 100, the hard sheet on the inner surface of the cushioning block 55 can quickly disperse the impact force and avoid over-concentration of the impact force.

In some embodiments, the peripheral wall 112 of the box body 110 and the cushioning block 55 may be provided with a hole structure for ventilation. The hard sheet on the inner surface of the cushioning block 55 may be, for example, T-shaped or H-shaped, and the hard sheet of this configuration may avoid the hole structure on the cushioning block 55.

### Sixth embodiment of the first aspect

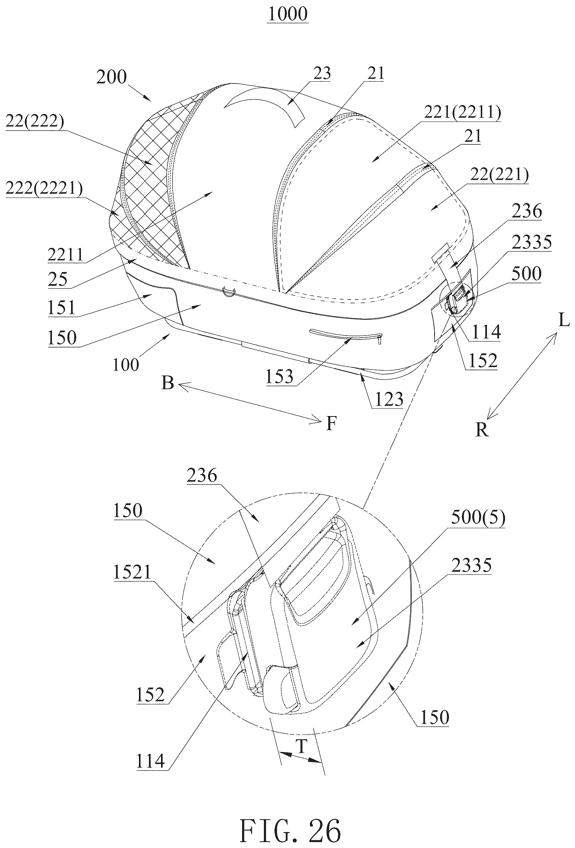

FIG. 26 shows a perspective view of a carrier 1000 according to a sixth embodiment of the first aspect of the present disclosure, and this embodiment is a variant of the carrier 1000 provided in the above fifth embodiment. In the absence of conflict, the structure of the accommodating body 100 and the canopy assembly 200 of this embodiment may be referred to as described in the above fifth embodiment, and the following primarily describes the differences between this embodiment and the aforementioned fifth embodiment.

Referring to FIG. 26, in this embodiment, an open pocket 152 is provided on the front and/or rear side of the seat fabric 150 wrapped around the outer surface of the box body 110. The pocket 152 is, for example, pasted or sewn to the seat fabric 150 for placing a small object such as a strap. In addition, the pocket 152 may at least partially accommodate the corresponding side impact protection block 5 to avoid the side impact protection block 5 from affecting the appearance or being damaged due to a collision. In some embodiments, an opening edge 1521 of the pocket 152 may be provided as an elastic structure that is elastically extendable, thereby facilitating better placement of the object.

In some embodiments, the fifth connecting member 114 is disposed within the corresponding pocket 152, and the side impact protection block 5 is provided on the mating connecting member 2335. When the mating connecting member 2335 is connected to the fifth connecting member 114, the mating connecting member 2335 and the side impact protection block 5 in the use state are at least partially stowed within the pocket 152.

### Seventh embodiment of the first aspect

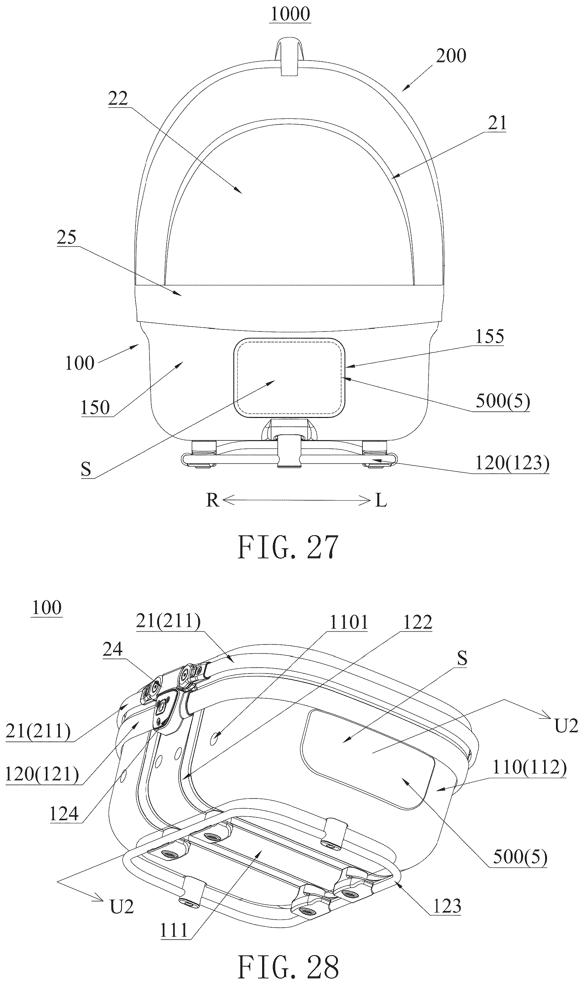

FIG. 27 shows a side view of a carrier 1000 provided in accordance with the seventh embodiment of the first aspect of the present disclosure. This embodiment is a variant of the carrier 1000 provided in the above fifth embodiment, and the main difference between this embodiment and the fifth embodiment is the implementation of the side impact protection structure 500. In the absence of conflict, the structure of the accommodating body 100 and the canopy assembly 200 of this embodiment may be referred to as described in the above fifth embodiment, and the following primarily describes the differences between this embodiment and the aforementioned fifth embodiment.

Referring to FIG. 27, in this embodiment, a holding pocket 155 is provided on the front and/or rear side of the seat fabric 150 wrapped around the outer surface of the box body 110, the side impact protection structure 500 includes a side impact protection block 5, and the side impact protection block 5 is wrapped within the holding pocket 155. The side impact protection block 5 is disposed below the first bracket 121 of the bracket apparatus 120. The side impact protection block 5 may be a plastic block, and the material of the plastic block is selected, for example, from PC (polycarbonate) plastic, PP (polypropylene) plastic, and the like. Alternatively, the side impact protection block 5 may be made of foam material. The foam material is selected, for example, from EPS, EPP, EPE, inert memory foam (also referred to as inert foam), sponge, and the like. Alternatively, the side impact protection block 5 may be made of a soft gel (the soft gel is for example selected from silicone or rubber). In some embodiments, the side impact protection block 5 may, for example, be made of an elastic member (e.g., a spring, a sheet spring, etc.). When the carrier 1000 is subjected to a side impact. The side impact is transmitted to the box body 110 and/or the bracket apparatus 120 through the side impact protection block 5.

In some embodiments, the holding pocket 155 may be formed by a fabric piece sewn onto an outer surface of the seat fabric 150. The side impact protection block 5 is sandwiched between the fabric piece and the seat fabric 150.

In some embodiments, the holding pocket 155 may be connected to the seat fabric 150 to form a pocket opening, the pocket opening may be provided with a closing member (not shown), and the closing member is, for example, a zipper. The closing member may open or close the pocket opening, such that the side impact protection block 5 is secured within or taken out from the holding pocket 155. In some embodiments, the holding pocket 155 is detachably connected to the seat fabric 150 by the closing member. For example, when the closing member utilizes a zipper, the zipper may be disposed around a periphery of the holding pocket 155 and allow the holding pocket 155 to be detached from the seat fabric 150, which facilitates cleaning the holding pocket 155 and the replacement of the side impact protection block 5.

In some embodiments, the holding pocket 155 may utilize a cloth pocket, the pocket opening of the cloth pocket is closed by means of sewing or closed by means of an openable closing member after the side impact protection block 5 is loaded into the cloth pocket, and then the cloth pocket is sewn to the outer surface of the seat fabric 150.

It should be noted that based on a different material of the side impact protection block 5, an area of a side-impact contact surface S of the side impact protection block 5, a height of the side impact protection block 5 protruding relative to the seat fabric 150 (also referred to as a thickness of the side impact protection block 5) may be different. For example, when the side impact protection block 5 is made of a plastic block, the area S of the side-impact contact surface of the side impact protection block 5 may be small due to the high hardness and the good impact resistance of the plastic block, for example, in the range of 20 cm² to 60 cm²; and the height of the side impact protection block 5 protruding relative to the seat fabric 150 may be in the range of 40 mm to 100 mm, preferably 75 mm. When the side impact protection block 5 is made of the foam material, the hardness of the side impact protection block 5 is relatively low. In this case, the area S of the side-impact contact surface of the side impact protection block 5 may be large, for example, in the range of 80 cm² to 180 cm²; and the height of the side impact protection block 5 protruding relative to the seat fabric 150 may be in the range of 20 mm to 60 mm, and preferably 40 mm.

### Eighth embodiment of the first aspect

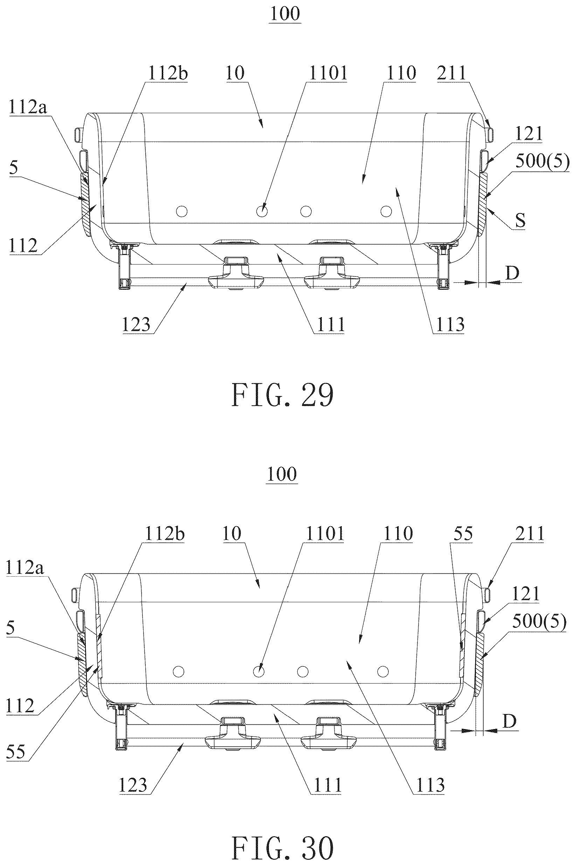

FIG. 28 shows a perspective view of a carrier according to an eight embodiment of the first aspect of the present disclosure, and FIG. 29 shows a sectional structure of FIG. 28. As shown, this embodiment is a variant of the carrier 1000 provided in the above seventh embodiment, and the main difference between this embodiment and the seventh embodiment is the implementation of the side impact protection structure 500. In the absence of conflict, the structure of the accommodating body 100 and the canopy assembly 200 of this embodiment may be referred to as described in the above second embodiment, and the following primarily describes the differences between this embodiment and the aforementioned second embodiment.

Referring to FIGS. 28 and 29, in this embodiment, the side impact protection structure 500 may include a side impact protection block 5, the side impact protection block 5 is disposed, for example, on an outer side 112a of a peripheral wall 112 of the box body 110, and more specifically, on an outer side 112a of a peripheral wall 112 of a front side and/or a rear side of the box body 110. When the box body 110 is made of foam material, the side impact protection block 5 may, for example, be integrally formed with the box body 110. Certainly, in some embodiments, the side impact protection block 5 may be attached to the box body 110, for example, by bonding, secondary forming, snap-fitting, etc. In some embodiments, the box body 110 may be provided with a plurality of hole structures 1101.

In some embodiments, the side impact protection block 5 may be made of foam material, and the side impact protection block 5 may be, for example, rectangular in shape, but not limited to such shape. An area of the side-impact contact surface S of the side impact protection block 5 may be in the range of 80 cm² to 180 cm², and a thickness D thereof may be within 60 mm, preferably 40 mm. It will be appreciated that the materials, the shapes and the dimensions of the side impact protection block 5 are not limited to the above examples.

For example, in some embodiments, the side impact protection block 5 may include a side-impact contact surface S in a planar shape, and the side-impact contact surface S may be provided with a plurality of bulges evenly spaced apart. In some embodiments, the side-impact contact surface S of the side impact protection block 5 may not be planar, and may for example be a spherical or hemispherical surface.

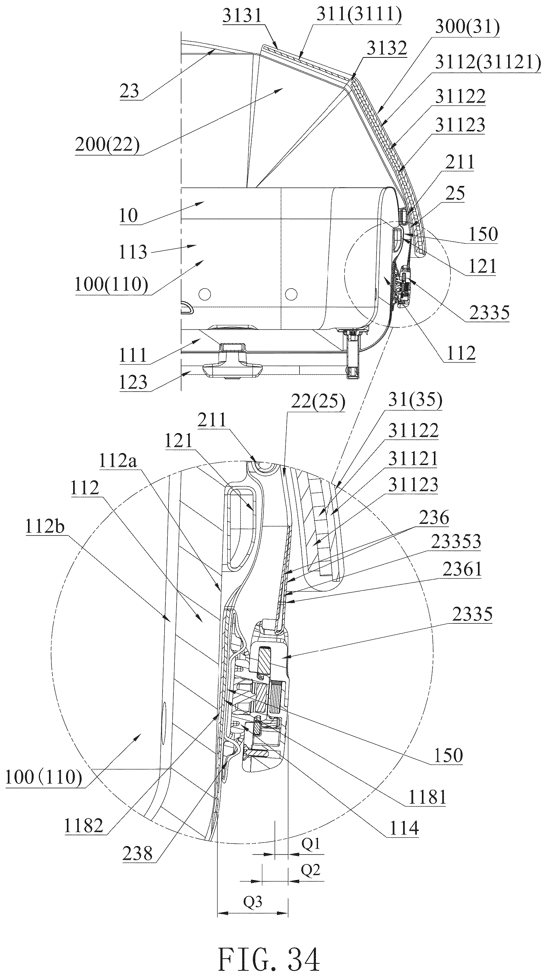

FIG. 30 shows a variant implementation of the sectional structure shown in FIG. 29, in which a side impact protection structure 500 may further include a cushioning block 55, the cushioning block 55 is disposed on the inner side 112b of the peripheral wall 112 of the box body 110, and more specifically, on the inner side 112b of the peripheral wall 112 on the front and/or rear side of the box body 110. In some embodiments, the positions of the cushioning blocks 55 correspond, for example, with the positions of the side impact protection blocks 5 in one-to-one correspondence. The material of the cushioning block 55 may be referred to the relevant description of the cushioning block 55 in the fifth embodiment. In some embodiments, an inner side of the cushioning block 55 facing the accommodating space 113 may be provided with a hard sheet (referring to the hard sheet 56 in FIG. 34).

It will be appreciated that the accommodating body 100 may further include a seating fabric 150, the seating fabric 150 wrapped around an outer surface of the box body 110 may be wrapped around the side impact protection block 5, and the seating fabric 150 wrapped around an inner surface of the box body 110 may be wrapped around the cushioning block 55, leading to a neat appearance of the accommodating body 100.

### Ninth embodiment of the first aspect

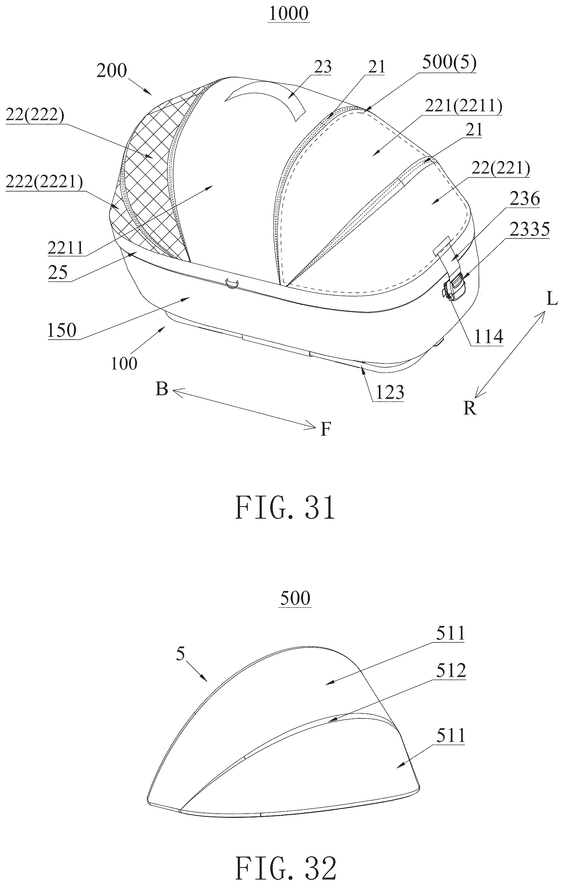

FIG. 31 shows the structure of a carrier 1000 according to a ninth embodiment of the first aspect of the present disclosure, and this embodiment is a variant of the carrier 1000 provided in the above fifth embodiment. In the absence of conflict, the structure of the accommodating body 100 and the canopy assembly 200 of this embodiment may be referred to as described in the above fifth embodiment, and the following primarily describes the differences between this embodiment and the aforementioned fifth embodiment. For example, in this embodiment, it is also possible to include a side impact protection structure provided at the canopy, or additionally another side impact protection structure and the like based on the structure of the aforementioned fifth embodiment is provided, which will be described hereinafter.

In conjunction with FIGS. 31 and 32, in this embodiment, the side impact protection structure 500 includes a side impact protection block 5 connected to a front and/or a rear portion of the canopy 22. When the canopy assembly 200 is in the unfolded state, surfaces of the side impact protection blocks 5 and the canopy 22 in contact with each other are matched with each other in shape.

Referring to the foregoing, it will be appreciated that in some embodiments, the canopy 22 of the canopy assembly 200 may include a shading area 221 and an observation area 222. At least one side impact protection block 5 may be provided at an area of the shading area 221 away from the observation area 222 (corresponding to the front of the canopy 22 in FIG. 31). And/or, at least one side impact protection block 5 may be provided in an area of the observation area 222 away from the shading area 221 (for example, corresponding to the rear of the canopy 22).

Referring to the exemplary structure of the side impact protection block 5 shown in FIG. 32, in some embodiments, the respective side impact protection block 5 may include a sheet integrally formed, and the sheet may be made of foam material (the foam material being selected, for example, from EPS, EPP, EPE, inert memory foam, sponge, or a combination thereof, etc.). The side impact protection block 5 may be secured to the inner side of the canopy 22 by means of sewing. The thickness of the side impact protection block 5 may be in the range of 20 mm to 60 mm, preferably 40 mm. When the canopy assembly 200 is folded, the sheet may be folded along with the canopy fabric 22.

Continuing to refer to FIG. 32, when the side impact protection block 5 in the form of the sheet corresponds to at least two shading sheets 2211 or at least two observation sheets 2221, the side impact protection block 5 accordingly includes at least two sheet parts 511, and a bending part 512 formed between two adjacent sheet parts 511. The dimensions of the respective sheet parts 511 are, for example, approximate to the dimensions of the corresponding shading sheets 2211 or observation sheets 2221. The bending part 512 corresponds to the U-shaped bracket 21 and a transversely extending slit may be included at the bending part 512, allowing the side impact protection block 5 to fit more closely into the arched shape of the protective cover 300 and the canopy 22. Certainly, in some embodiments, the side impact protection block 5 in the form of the sheet may include only one sheet part 511, the shape of the sheet part 511 is matched with the shape of a corresponding shading sheet 2211 or a corresponding observation sheet 2221.

### Tenth embodiment of the first aspect

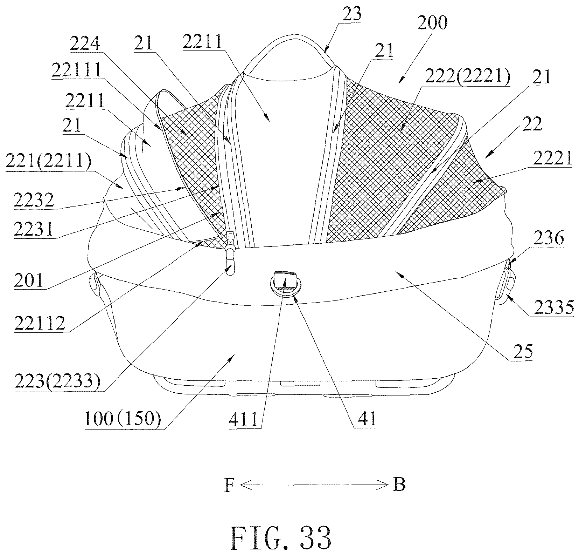

FIG. 33 shows a perspective view of a carrier 1000 provided in accordance with the tenth embodiment of the first aspect of the present disclosure. The carrier 1000 primarily performs a variant of the canopy 22 of the canopy assembly 200 of the carrier 1000 provided in any one of the above embodiments. In the absence of conflict, the structure of the various components of the carrier 1000 of this embodiment and the connection relationships between the components may be described with reference to the above description and will not be repeated herein.

Referring to FIG. 33, a portion of the canopy 22 (e.g., the shading area 221) is provided with a canopy opening 201, and a closing member 223 is provided at the canopy opening 201 and is capable of closing or opening the canopy opening 201. The canopy opening 201 is not in communication with the accommodating space 113 after being opened, but rather exposes the extended observation area 224, and the material and function of the extended observation area 224 may be referred to those of the observation area 222 as described previously. When the extended observation area 224 is not required for use, the canopy opening 201 is closed by the closing member 223, and the extended observation area 224 is then covered by the shading sheets 2211.

In some embodiments, the closing member 223 includes, for example, a zipper chain 2231, a zipper chain 2232 and a zipper head 2233. The zipper chain 2231 and the zipper chain 2232 are connected by the zipper head 2233 to close the canopy opening 201. As can be seen in FIG. 33, the zipper chain 2232 is mounted at an edge 22111 of the shading sheet 2211 for covering the extended observation area 224, and edges 22112 of the shading sheet 2211 adjacent to two ends of the zipper chain 2232 are separated from the skirt 25. In this way, when the closing member 223 fully opens the canopy opening 201, the zipper chain 2231 and the zipper chain 2232 are separated from each other, and the shading sheet 2211 for covering the extended observation area 224 may be folded downwardly to expose the extended observation area 224. It will be appreciated that the implementation of the closing member 223 is not limited to the zipper structure described above.

Furthermore, in this embodiment, the first connecting member 41, which is configured to be connected with the second connecting member 32 of the protective cover 300, may be provided at a suitable location of the skirt 25. The first connecting member 41 may, for example, be a metal loop or a plastic loop, which may be connected to the skirt 25 by a webbing 411.

Referring to FIGS. 33 to 35, in this embodiment, the fifth connecting members 114 are provided on two opposite sides (front and rear sides) of the box body 110. The fifth connecting members 114 may be secured to the seat fabric 150 or may be secured directly to the box body 110 and exposed from the seat fabric 150. Mating connecting members 2335 are provided on corresponding sides of the canopy 22 of the canopy assembly 200 (front and rear of the canopy 22). More specifically, the mating connecting members 2335 are connected, for example to the skirt 25 of the canopy 22 by means of connecting straps 236. The mating connecting members 2335 are detachably connected to the corresponding fifth connecting members 114. As described in the fifth embodiment, when the mating connecting members 2335 is connected to the fifth connecting members 114, the canopy assembly 200 is kept in the unfolded state and the canopy 22 closes the top opening 10 of the accommodating body 100. In some embodiments, one of the fifth connecting member 114 and the mating connecting member 2335 may be a male connector and the other may be a female connector, and the canopy assembly 200 is kept in the unfolded state when the male connectors are connected to the female connectors. The male connector and the female connector may be, but not limited to, magnetic snap assemblies, buckle assemblies that are engaged with each other.

Referring to FIG. 34, when the mating connecting members 2335 is connected to the fifth connecting members 114 in this embodiment, a mating connecting member 333 located on either the front side or the rear side of the accommodating body 100 itself may be used as a side impact protection block, without the need to configure the mating connecting member 2335 with the side impact protection block 5 shown in FIG. 14 protruding outwardly relative to the housing of the mating connecting member 2335, and without the need to additionally change the dimensions of the housing (e.g., the thickness and the surface area of the housing) of the mating connecting member 2335. In some embodiments, the mating connecting member 2335 protrudes outwardly, for example, relative to the canopy frame 211 by a certain distance Q1 (i.e., a first distance), or the mating connecting member 2335 protrudes outwardly relative to the accommodating body 100 (more specifically, relative to the first bracket 121) by a certain distance Q2 (i.e., a second distance), or relative to the box body 110 by a certain distance Q3 (i.e., a third distance), with Q1 < Q2 < Q3, so as to allow the mating connecting member 2335 to provide better side impact protection.

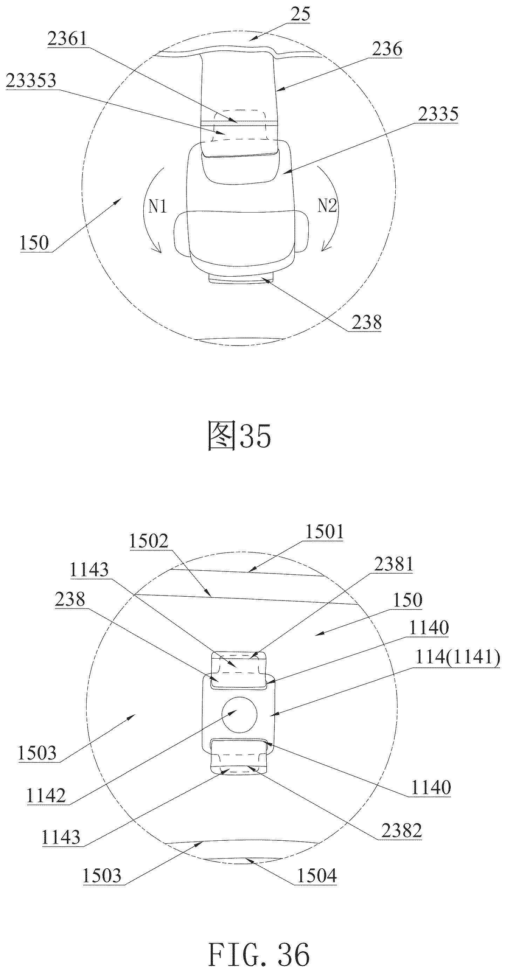

Referring to FIGS. 36 to 38, the structure of a fifth connecting member 114 as well as the connection manner between the fifth connecting member 114 and the accommodating body 100 are exemplarily shown.

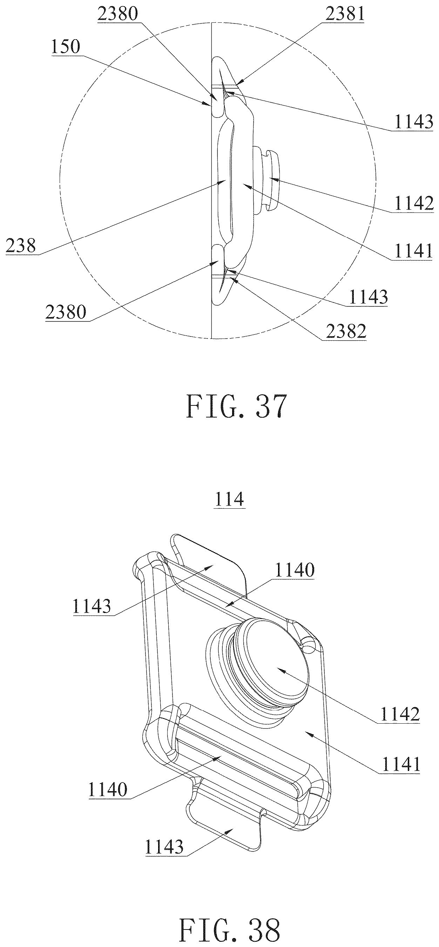

Referring to FIG. 38, the housing of the fifth connecting member 114 includes a first buckling body 1141, two first connecting holes 1140 disposed on two opposite sides of the first buckling body 1141, and two first connecting tongues 1143 extending outwardly from two opposite sides of the first buckling body 1141. A magnetic member may be provided within the first buckling body 1141. The first buckling body 1141 has a protrusion 1142 at a central part of the first buckling body 1141, and the protrusion 1142 is, for example, a rounded protrusion. The two first connecting tongues 1143 are adjacent to the two first connecting holes 1140, respectively, and the housing of the first buckling body 1141 is, for example, integrally injection molded with the two first connecting tongues 1143.

Referring to FIGS. 36 and 37, the fifth connecting member 114 may be connected to the accommodating body 100 by a connecting strap 238. More specifically, two ends 2380 of the connecting strap 238 are folded over after passing through the two first connecting holes 1140 from a side of the first buckling body 1141 facing away from the protrusion 1142, while the two first connecting tongues 1143 are sandwiched within the connecting strap 238, and then the first connecting tongues 1143, the connecting strap 238, and the seating fabric 150 are connected together, e.g., by means of sewing or riveting or the like. In this embodiment, the connecting strap 238, the first connecting tongues 1143, and the seat fabric 150 are specifically connected together by a sewing line 2381 and a sewing line 2382. The first connecting tongues 1143 can effectively prevent the fifth connecting member 114 from flipping around the connecting strap 238, thereby avoiding that the fifth connecting member 114 is flipped over by 180° to cause the protrusion 1142 to face the seat fabric 150.

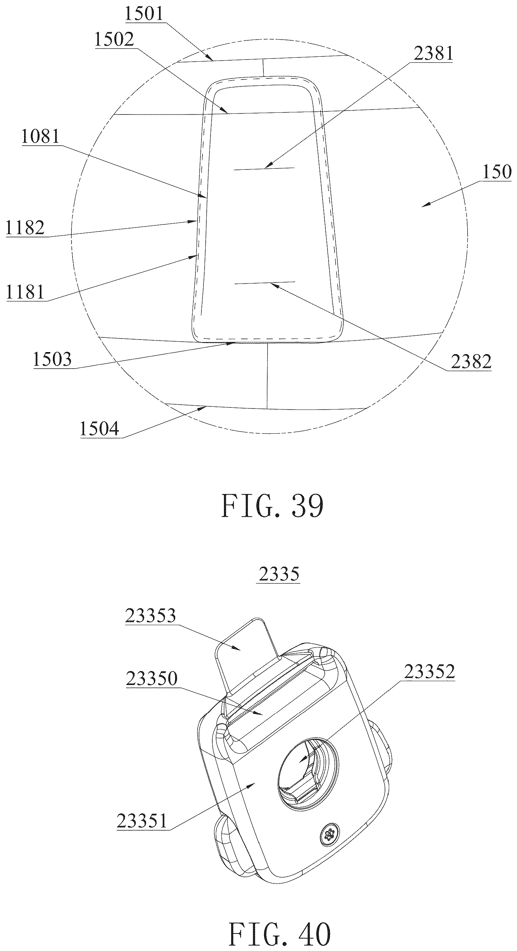

With reference to FIGS. 34 and 39, in some embodiments, a rigid protective sheet 1181 may also be provided between the seat fabric 150 and the box body 110, and a position of the protective sheet 1181 corresponds to that of the fifth connecting member 114. The protective sheet 1181 may, for example, be a hard sheet, and the hard sheet may, for example, refer to the description of the hard sheet in the fifth embodiment. In this way, when the fifth connecting member 114 is subjected to a side impact, the protective sheet 1181 can quickly disperse the impact force, to avoid the impact force from being too concentrated to possibly damage the box body 110 made of foam material.

Referring to FIG. 39, in some embodiments, the sewing line 2381 and sewing line 2382 for sewing the connecting strap 238, the first connecting tongue 1143, and the seat fabric 150 may also be connected to the protective sheet 1181, which ensures a relative position of the protective sheet 1181 and the fifth connecting member 114. In some embodiments, the protective sheet 1181 may, for example, be secured to a pad 1182. The pad 1182 may include, for example, a single-layer or multi-layer structure made of fabric. In this embodiment, the protective sheet 1181 (shown in dashed lines in FIG. 39) is connected to the pad 1182, for example, by the sewing line 1081, and the sewing line 1081 is routed, for example, around a periphery of the protective sheet 1181. In some embodiments, the protective sheet 1181 may be connected to the pad 1182, for example, by adhesive bonding or riveting. In some embodiments, the pad 1182 is adjacent to the box body 110, the protective sheet 1181 is adjacent to the seat fabric 150, and an area of the pad 1182 is not smaller than that of the protective sheet 1181, which prevents the protective sheet 1181 from directly contacting the box body 110 made of foam material and causing wear of the box body 110. Certainly, in some embodiments, the area of the pad 1182 may also be smaller than that of the protective sheet 1181.

Continuing to refer to FIG. 39, in some embodiments, the seat fabric 150 includes, for example, a sewing line 1501, a sewing line 1502, a sewing line 1503, and a sewing line 1504 arranged in a top-to-bottom sequence, and the respective sewing lines are configured to sew two adjacent portions (include but not limited to, the fabric) of the seat fabric 150 together. The sewing line 1502 is connected, for example, to both of the protective sheet 1181 and the pad 1182. The fabric disposed between the sewing line 1503 and the sewing line 1504 corresponds, for example, to a turning portion between the peripheral wall 112 and the bottom part 111 of the box body 110, and a bottom edge of the protective sheet 1181 is disposed, for example, above the sewing line 1503. At this point, the sewing line 1081 may be broken at the bottom of the protective sheet 1181 without forming a closed loop, so that the pad 1182 can be easily bent and connected to the seat fabric 150 by the sewing line 1503, while the sewing line 1503 need not to be connected to the protective sheet 1181. Certainly, in other embodiments, the seat fabric 150 may be implemented in other ways, and the manner in which the pad 1182 is connected to the protective sheet 1181 and the pad 1182 is connected to the seat fabric 150 is not limited to the above examples.

Referring to FIG. 40, a mating connecting member 2335 structure is exemplarily shown. The mating connecting member 2335 includes, for example, a second buckling body 23351, a second connecting hole 23350 located on one side of the second buckling body 23351, and a second connecting tongue 23353 extending outwardly from the side on which the second connecting hole 23350 is disposed. A magnetic member may be provided within the second buckling body 23351. The central part of the second buckling body 23351 has a recess 23352, and the recess 23352 is configured to be buckled with the protrusion 1142 of the first buckling body 1141 in a magnetically attractive manner. In conjunction with FIG. 34 and 35, the mating connecting member 2335 may be connected to the skirt 25 by the connecting strap 236. More specifically, the connecting strap 236 passes through the second connecting hole 23350 and has portions respectively disposed on two sides of the second connecting tongue 23353. The portions of the connecting strap 236 disposed on the two sides of the second connecting tongue 23353 may be connected to the second connecting tongue 23353 by means of sewing or riveting. In this embodiment, the connecting strap 236 is connected to the second connecting tongue 23353 by sewing 2361.

Referring again to FIGS. 33 and 35, when the mating connecting member 2335 and the fifth connecting member 114 are connected and subjected to a side impact, a middle portion of the canopy 22 is securely connected to a canopy locking part 124 of the accommodating body 100 by the canopy locking apparatus 24 (referring to the description in the above second embodiment), and the canopy 22 is relatively easy to be detached from the accommodating body 100 from the front or from the rear. In this embodiment, since the front or the rear of the canopy 22 is connected to the mating connecting member 2335 by the connecting strap 236, the mating connecting member 235 is rotatable in a direction of N1 or N2 relative to the fifth connecting member 114 (the connecting strap 236 may limit a rotation angle of the mating connecting member 235 in the direction of N1 or N2 to be less than 90 degrees). This relative rotation may disperse an instantaneous force direction, so that the mating connecting member 2335 and the fifth connecting member 114 are not easily separated from each other, thereby avoiding separation of the front or rear of the canopy 22 from the accommodating body 100.

### Eleventh embodiment of the first aspect

FIG. 41 shows a partially sectional view of a carrier 1000 according to an eleventh embodiment of the first aspect of the present disclosure. In the absence of conflict, the structure of the carrier 1000 shown in this embodiment may be referred to the above description of the carrier 1000 shown in FIG. 34. It should be noted that the structure of the carrier 1000 shown in FIG. 34 is generally used in small to medium sized carriers. For the small to medium sized carriers, since the accommodating body 100, the canopy assembly 200, and the protective cover 300 are all small in size and light in weight, a carrying handle 23 may be provided on the canopy 22 and the user may lift the carrier 1000 by using the carrying handle 23. The structure of the carrier 1000 shown in FIG. 41 is generally used in medium to large sized carriers 1000. For the medium to large sized carriers, since the accommodating body 100, the canopy assembly 200, and the protective cover 300 are all large in size and heavy in weight, a handle 29 may be mounted on the accommodating body 100, and the user may lift the carrier 1000 by using the handle 29.

Referring to FIG. 41, an outer side 112a of the peripheral wall 112 of the box body 110 may be provided with a side impact protection block 5, and the implementation of the side impact protection block 5 may be referred to the description of the side impact protection block 5 in the eighth embodiment of this aspect. In this embodiment, the position of the side impact protection block 5 corresponds to that of the fifth connecting member 114 and the protective sheet 1181, the side impact protection block 5 may be made of energy-absorbing foam and located below the first bracket 121, and the side impact protection block 5 may further enhance the side impact protection performance of the accommodating body 100.

With reference to FIGS. 41 and 44, in some medium to large carriers 1000, a slot structure 1112 may be provided on an inner side 112b of the peripheral wall 112 of the box body 110 of the accommodating body 100, and a cushioning block 55 may be mounted in the slot structure 1112 and protrudes relative to the inner side 112b. The cushioning block 55 is configured to cushion a side impact between the pet in the accommodating space 113 and the box body 110. In some embodiments, an inner side 55b of the cushioning block 55 facing away from the peripheral wall 112 may be provided with a hard sheet 56, and the hard sheet 56 may be a plastic sheet made of PE (polyethylene), PC (polycarbonate), PP (polypropylene), PVC (polyvinyl chloride), PET (polyethylene terephthalate), PMMA (polymethylene terephthalate), PUMA (polyphenylene terephthalate), PUMA (polyphenylene terephthalate), and PUMA (polypropylene). ester), PMMA (polymethylmethacrylate), etc. In some embodiments, the cushioning block 55 and the hard sheet 56 may both be T-shaped. Alternatively, for the medium to large carriers 1000, instead of providing a carrying handle on the canopy 22, it may be possible to mount a rigid handle 29 on the bracket apparatus 120, by which the accommodating body 100 may be easily moved.

It should be noted that the fifth connecting member 114 and its protrusion 1142 may also be used as a side impact protection block when the canopy 22 is not connected to the accommodating body 100. When the fifth connecting member 114 is subjected to a side impact, the protrusion 1142 may transmit the impact force toward the protective sheet 1181, the side impact protection block 5, and the box body 110. The protective sheet 1181 may quickly disperse the impact force, the side impact protection block 5 may cushion the impact force and absorb energy, and the box body 110 made of foam material itself may also absorb the impact force. When the canopy 22 is connected to the accommodating body 100, the mating connecting member 2335 is connected to the fifth connecting member 114 , and the recess 23352 of the mating connecting member 2335 and the protrusion 1142 of the fifth connecting member 114 are engaged in a concave-convex manner to increase the surface area for transmitting the impact force (for the integrally formed side impact protection block, no such transmitting transition area is provided), which improves the impact force transmitting and dispersion effect. In addition, the interior of the protrusion 1142 may include a metal structure to stabilize the structure of the protrusion 1142, thereby better transmitting the impact force.

Additionally, the bracket apparatus 120 of the accommodating body 100 may also provide side impact protection. For example, when the accommodating body 100 is subjected to a large side impact that deforms the box body 110, the deformed box body 110 transmits the impact force to the bracket apparatus 120 and may transmit the impact force to the snap-in seat by the third bracket 123 of the bracket apparatus 120.

### Twelfth embodiment of the first aspect

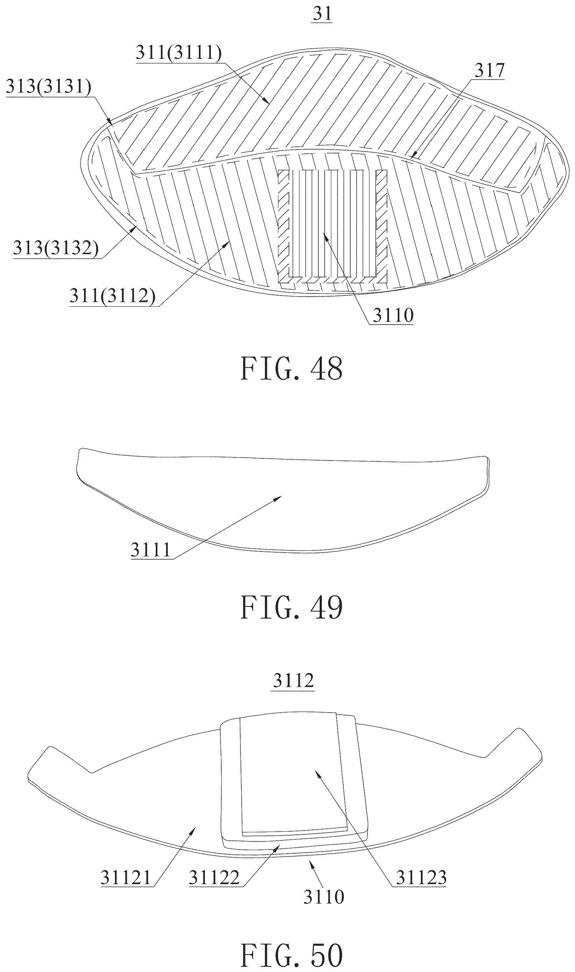

FIGS. 45 to 47 shows perspective views of a protective cover provided according to the twelfth embodiment of the first aspect of the present disclosure. FIG. 48 shows the internal structure of the cover body 31 of the protective cover 300. FIGS. 49 and 50 show perspective views of two impact resistant bodies 311. The protective cover 300 provided in this embodiment serves the same function as the protective cover 300 in the first embodiment. The protective cover 300 is configured to cover at least a part of the canopy assembly 200 of the carrier 1000, to improve the impact resistance of the covered area of the canopy assembly 200. In addition, similar to the first embodiment, the "protective cover" of this embodiment may also serve as an example or a part of a "protection apparatus".

Referring to FIGS. 45 to 47, the protective cover 300 may include a cover body 31 and at least one second connecting member 32. The cover body 31 extends in the transverse direction (i.e., the left-right direction of the accommodating body 100) to cover the front or the rear of the canopy assembly 200 in the transverse direction. The cover body 31 in this embodiment has a shape of narrow at both ends and wide in the middle, and two hook clasps are provided at two ends of the cover body 31, and the two hook clasps are used as two second connecting members 32. The two second connecting members 32 are configured to be detachably connected to the two first connecting members 41 on the accommodating body 100 or on the canopy assembly 200. As can be seen in conjunction with the description of the above first embodiment, the implementation of the second connecting members 32 is not limited to hook clasps.

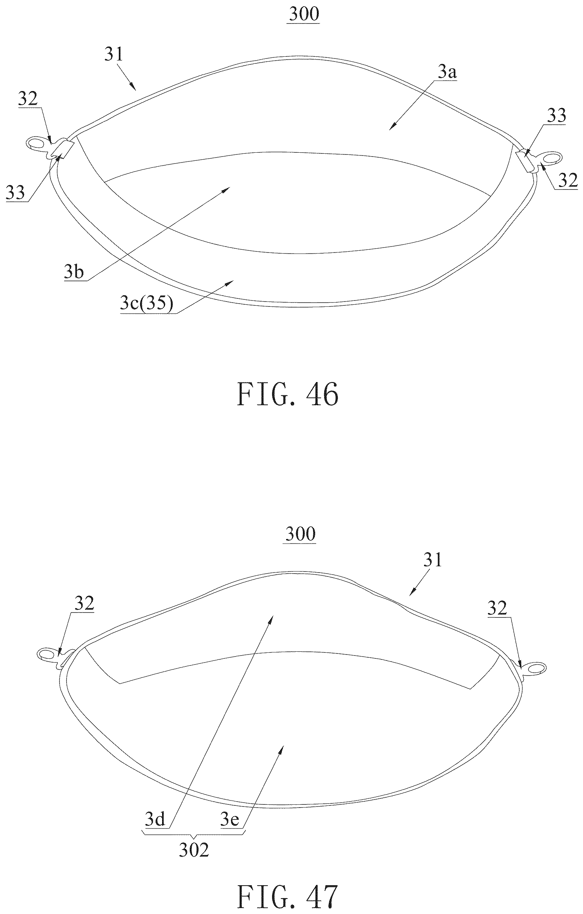

Referring to FIGS. 45 and 47, the cover body 31 includes an outer fabric layer 301 and an inner fabric layer 302. When the protective cover 300 is in a use state, the cover body 31 is arched, with the outer material layer 301 facing away from the canopy assembly 200 and the inner fabric layer 302 facing the canopy assembly 200. Both of the outer fabric layer 301 and the inner fabric layer 302 may be made of fabric. In some embodiments, the outer fabric layer 301 and the inner fabric layer 302 may both be formed by a plurality of fabric pieces joined together. In this embodiment, the outer fabric layer 301 may be formed by a fabric piece 3a, a fabric piece 3b, and a fabric piece 3c joined together. The fabric piece 3c corresponds, for example, to the skirt 35 of the cover body 31. The second connecting member 32 is connected, for example, to the fabric piece 3c. Two ends of the fabric piece 3a are connected to two ends of the fabric piece 3c, and the fabric piece 3b is connected between the fabric piece 3a and the fabric piece 3c. The inner fabric layer 302 may be formed by a fabric piece 3d and a fabric piece 3e joined together. In some embodiments, the fabric piece 3d corresponds, for example, to the fabric piece 3a. The fabric piece 3e corresponds, for example, to the fabric piece 3b and the fabric piece 3c. Certainly, in other embodiments, the implementations of the outer fabric layer 301 and the inner fabric layer 302 are not limited to those described above.

Referring to FIG. 48, the outer fabric layer 301 and the inner fabric layer 302 define one or more receiving spaces 313 in which one or more impact resistant bodies 311 are disposed (the contour of the respective impact resistant bodies 311 are shown with dashed lines in FIG. 48), and the sizes of the outer contours of the respective impact resistant bodies 311 correspond, for example, to those of the corresponding receiving spaces 313. When the protective cover 300 is in the use state, the respective impact resistant bodies 311 of the protective cover 300 may provide better impact protection for the canopy assembly 200.

Continuing to refer to FIG. 48 and in conjunction with FIG. 34, in some embodiments, when the size of the protective cover 300 is matched with a small to medium sized carrier 1000 of a small size, the outer fabric layer 301 and the inner fabric layer 302 define, for example, two receiving spaces 313. The two receiving spaces 313 are a first receiving space 3131 and a second receiving space 3132. Both of the first receiving space 3131 and the second receiving space 3132 extend substantially in a transverse direction. The first receiving space 3131 and the second receiving space 3132 are arranged sequentially along a longitudinal direction. The first receiving space 3131 corresponds, for example, to an area covered by the fabric piece 3d, and the second receiving space 3132 corresponds, for example, to an area covered by the fabric piece 3e. Two impact resistant bodies 311 are provided in the two receiving spaces 313, respectively, and the two impact resistant bodies 311 are a first impact resistant body 3111 and a second impact resistant body 3112. The first impact resistant body 3111 is located in the first receiving space 3131 and the second impact resistant body 3112 is located in the second receiving space 3132. The two receiving spaces 313 are spaced apart, for example, by a structure such as a sewing line 317 or a bond line connecting the outer fabric layer 301 and the inner fabric layer 302. In this way, the respective impact resistant bodies 311 are located within the corresponding receiving spaces 313 and are not easily displaced into other receiving spaces 313. In some embodiments, the sewing line 317 extends, for example, along the junction between the fabric piece 3d and the fabric piece 3e.

Referring to FIGS. 48 and 49, in some embodiments, the first impact resistant body 3111 may be in a single-layer structure, for example, made of a single-layer sheet. The first impact resistant body 3111 extends in a transverse direction to act as a support for the outer fabric layer 301 and the inner fabric layer 302 while providing impact protection. The single-layer sheet may, for example, be a soft sheet made of a cushioning material. In some embodiments, the soft sheet may, for example, be made of foam material. The foam material may, for example, be EPP, EPS, EPO (expanded polystyrene polyethylene blend), EPE, etc. In some embodiments, the soft sheet may be made of foam (e.g., inert memory foam). Certainly, in other embodiments, the first impact resistant body 3111 as a whole may be in a multi-layer structure, or a transverse middle area of the first impact resistant body 3111 (corresponding to the transverse middle area of the cover body 31) may be in a multi-layer structure. The multi-layer structure may be formed by stacking multiple layers of sheets. The multiple layers of sheets may include at least one soft sheet and at least one hard sheet. Alternatively, the multiple layers of sheets may all be soft or hard sheets. Adjacent sheets may be secured together by adhesive bonding, or the multiple layers may be bound together by straps. Certainly, in some embodiments, the first impact resistant body 3111 may also be made of a single-layer hard sheet, which may, for example, be a plastic sheet.

Referring to FIGS. 48 and 50, at least a portion of the second impact resistant body 3112 may be in a multi-layer structure, to at least partially enhance the impact protection of the second impact resistant body 3112. Certainly, in some embodiments, the second impact resistant body 3112 may also be made of a single-layer soft sheet or a single-layer hard sheet. Alternatively, in some embodiments, the second impact resistant body 3112 as a whole may be the multi-layer structure. Specific embodiments of the multi-layer structure may be referred to the above description of the multi-layer structure of the first impact resistant body 3111.

In this embodiment, it is considered that when the pet's head is located below the protective cover 300, the transverse middle area of the second impact resistant body 3112 is closer to the pet's head and is more susceptible to impact. In this way, a middle impact resistant part 3110 is provided at the transverse middle area of the second impact resistant body 3112, and the middle impact resistant part 3110 is a multi-layer structure, which can partially enhance the impact resistant protection effect of the transverse middle area of the second impact resistant body 3112 and effectively reduce costs.

FIG. 50 shows an exemplary embodiment of the second impact resistant body 3112. The second impact resistant body 3112 includes a transversely extending sheet 31121, a sheet 31122 is provided at the transverse middle area of the sheet 31121, and the sheet 31122 is provided with a sheet 31123. Both of the sheet 31121 and the sheet 31122 may be soft sheets, and the sheet 31123 may be a hard sheet. The multi-layer structure of the middle impact resistant part 3110 includes a sheet 31121, a sheet 31122, and a sheet 31123 stacked together, with adjacent sheets fixed together, for example, by adhesive bonding. The sheet 31121 is adjacent to the outer fabric layer 301 and the sheet 31123 is adjacent to the inner fabric layer 302. The size of the outer contour of the sheet 31121 corresponds to the size of the second receiving space 3132, and the transversely extending sheet 31121 provides the outer material layer 301 a relatively flat appearance while supporting the outer material layer 301 and the inner fabric layer 302. A periphery of the sheet 31122, for example, does not protrude relative to the sheet 31121. A periphery of the sheet 31123, for example, does not protrude relative to the sheet 31122, which prevents the edges of the hard sheet 31123 from wearing through the inner fabric layer 302 when pressed. Certainly, in some embodiments, the periphery of the sheet 31123 may also protrude from the sheet 31122, i.e., the size of the sheet 31123 may be larger than that of the sheet 31122. In some embodiments, corners of the sheet 31123 are circular arc-shaped. In some embodiments, a portion of the middle impact resistant part 3110 extends to the skirt 35 and may provide side impact protection.

In some embodiments, the sheet 31121 may, for example, be made of foam material, which may, for example, be EPP, EPS, EPO (expanded polystyrene polyethylene blend), EPE, etc. The sheet 31122 may be made of foam (e.g., inert memory foam). The sheet 31123 is, for example, a plastic sheet. In some embodiments, the rigid plastic sheet may be made of PE (polyethylene), PC (polycarbonate), PP (polypropylene), PVC (polyvinyl chloride), PET (polyethylene terephthalate), PMMA (polymethyl methacrylate), etc. In the case where the sheet 31123 is a hard sheet, the sheet 31123 can disperse the impact force and avoid the impact force from being too concentrated when the pet is impacted with the sheet 31123.

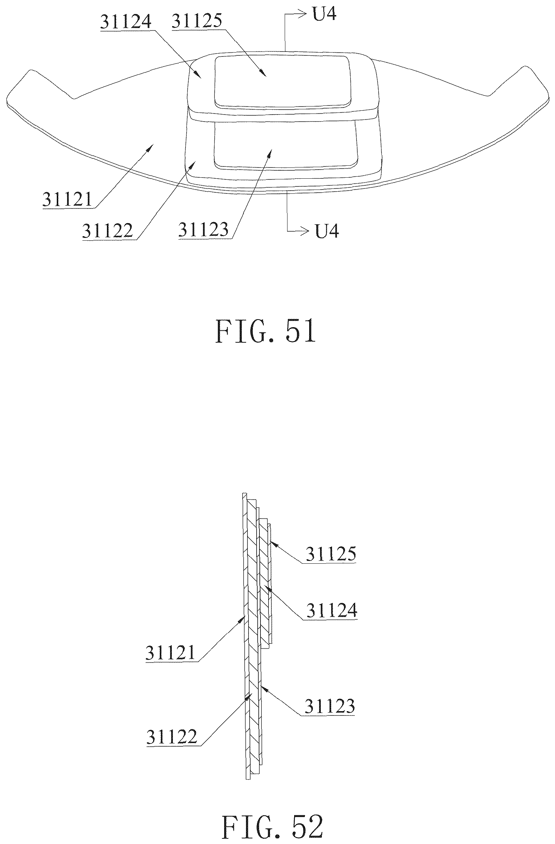

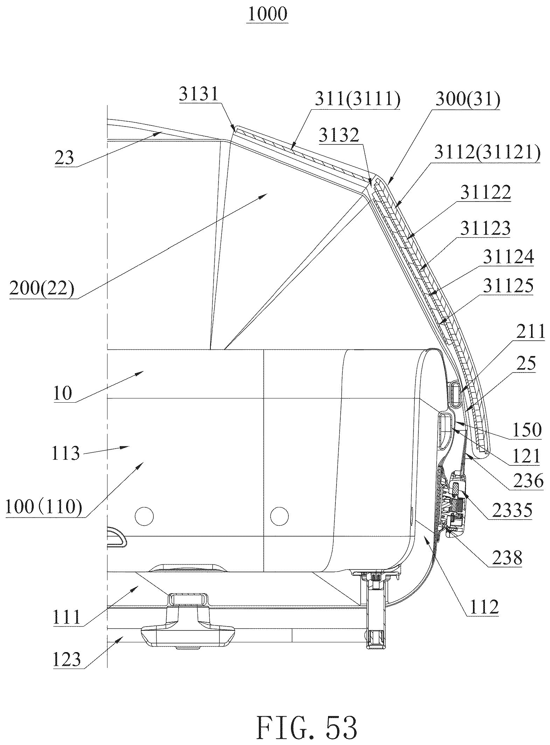

FIGS. 51 and 52 show a variant implementation of the second impact resistant body 3112 shown in FIG. 50, and FIG. 53 shows a partially sectional view of a carrier 1000 configured with a protective cover 300 including this second impact resistant body 3112. Referring to FIGS. 51 and 52, in the variant implementation of the second impact resistant body 3112, a sheet 31122 is provided in a transverse middle area of the sheet 31121, a sheet 31123 is provided on the sheet 31122, a sheet 31124 is provided on the sheet 31123, and a sheet 31125 is provided on the sheet 31124.

In some embodiments, the sheets of the second impact resistant body 3112 adjacent to each other are fixed together, for example, by means of adhesive. The sheet 31121 is, for example, a flexible sheet (include but not limited to, an EPP sheet). A transverse dimension of the sheet 31122 may be smaller than that of the sheet 31121 and a longitudinal dimension of the sheet 31122 is not larger than that of the sheet 31121. The material of the sheet 31122 is, for example, the same as that of the sheet 31124, and both of the sheet 31122 and the sheet 31124 are soft sheets (include but not limited to, foam sheets) having a thick thickness. The material of the sheet 31123 is, for example, the same as that of the sheet 31125, and both of the sheet 31123 and the sheet 31125 are hard sheets (include but not limited to, PE sheets) having a thin thickness. A dimension of the sheet 31123 may be smaller than that of the sheet 31122. A transverse dimension of the sheet 31124 may be larger than that of the sheet 31123, but not larger than that of the sheet 31122. A dimension of the sheet 31125 may be smaller than that of the sheet 31124. With reference to FIGS. 51 to 53, the second impact resistant body 3112 is, for example, step-shaped. The sheet 31124 is positioned, in a longitudinal direction, corresponding to an upper offset position of the sheet 31121 and substantially above the box body 110.

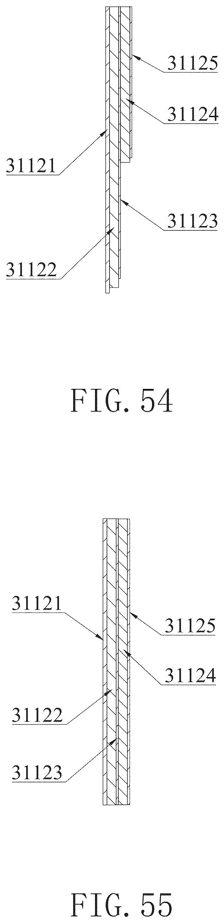

Certainly, the implementation of the second impact resistant body 3112 is not limited to the above examples. Referring to FIGS. 54 and 55, in some alternative embodiments, upper ends of the respective sheets of the second impact resistant body 3112 are flush with one another, and/or lower ends of the respective sheets of the second impact resistant body 3112 are flush with one another. In FIG. 54, the upper ends of the respective sheets of the second impact resistant body 3112 are flush. In FIG. 55, both the upper ends and the lower ends of the respective sheets of the second impact resistant body 3112 are flush with one another.

In some embodiments, the sheet 31123 and the sheet 31125 may all be designed with rounded corners, which prevents the edges of the hard sheet 31123 from wearing through the inner fabric layer 302 when pressed. The periphery of the sheet 31123, for example, does not extend beyond the periphery of the sheet 31122, and the periphery of the sheet 31125, for example, does not extend beyond the periphery of the sheet 31124. Certainly, in some alternative embodiments, at least a portion of the periphery of the sheet 31123 may extend beyond the periphery of the sheet 31122 and at least a portion of the periphery of the sheet 31125 may extend beyond the periphery of the sheet 31124.

### Thirteenth embodiment of the first aspect

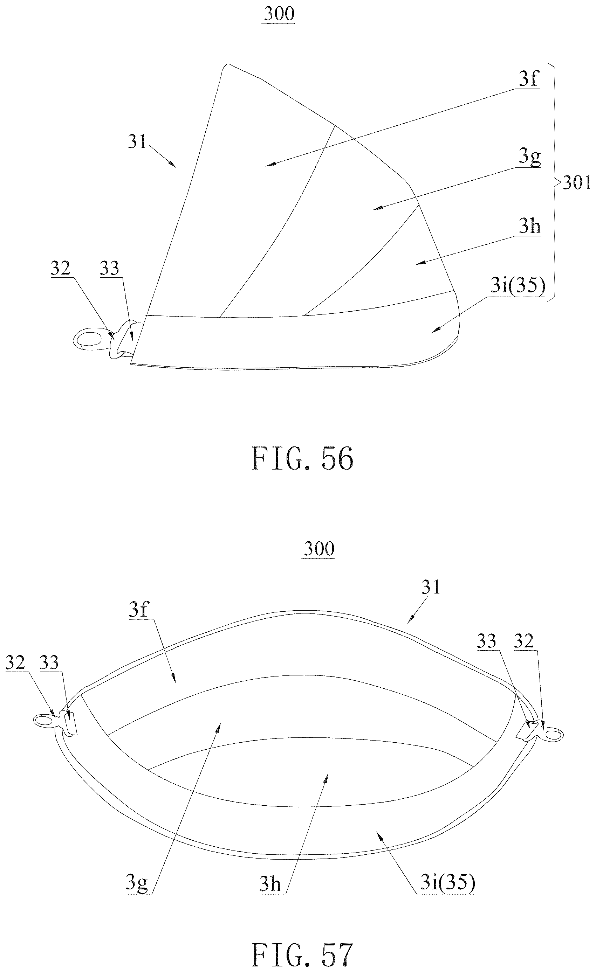

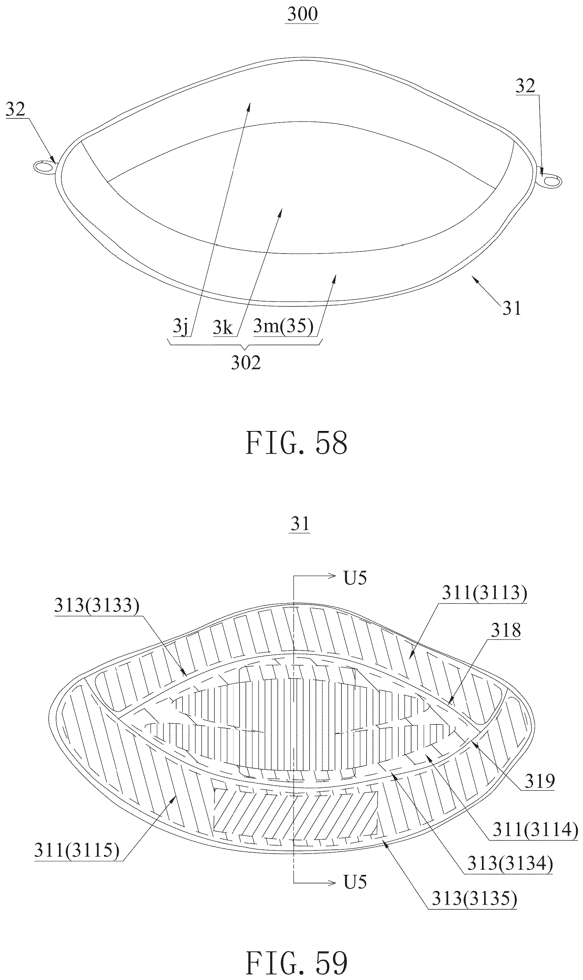

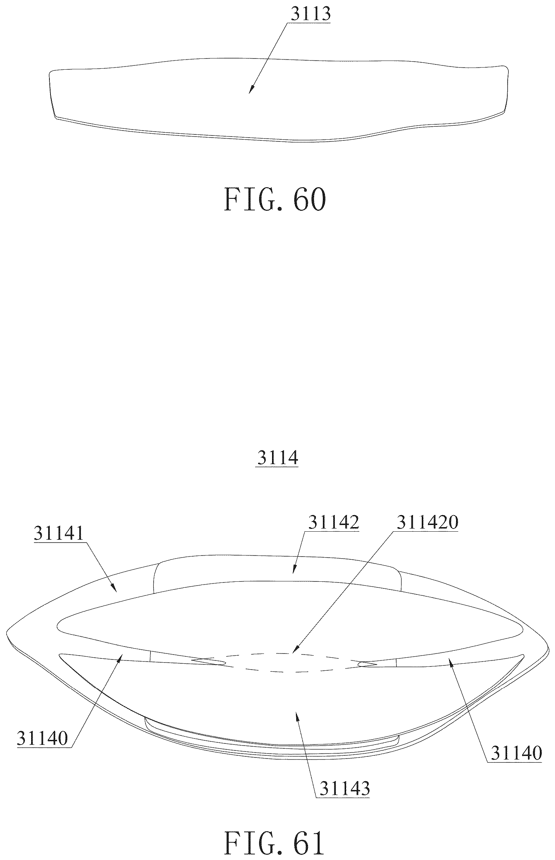

FIGS. 56 to 58 shows perspective views of a protective cover provided according to the thirteenth embodiment of the first aspect of the present disclosure. FIG. 59 schematically shows an internal structure of the protective cover shown in FIG. 58. FIGS. 60 to 62 show perspective views of three impact resistant bodies 311. The protective cover 300 provided in this embodiment is a variant of the protective cover 300 provided in the above twelfth embodiment, and the following primarily describes the differences between the protective cover 300 of this embodiment and the protective cover 300 of the twelfth embodiment. In addition, the "protective cover" of this embodiment may also serve as an example or a part of a "protection apparatus".

Referring to FIGS. 56 to 58, a cover body 31 of the protective cover 300 includes an outer fabric layer 301 and an inner fabric layer 302. The outer fabric layer may include a fabric piece 3f, a fabric piece 3g, a fabric piece 3h and a fabric piece 3i. The fabric piece 3i corresponds, for example, to the skirt 35 of the cover body 31, and the second connecting member 32 is connected, for example, to the fabric piece 3i. Two ends of the fabric piece 3f are connected to two ends of the fabric piece 3i, respectively. The fabric piece 3g and the fabric piece 3h are sequentially arranged along the longitudinal direction and connected between the fabric piece 3f and the fabric piece 3i. The inner fabric layer 302 may be formed by the fabric piece 3j, the fabric piece 3k and the fabric piece 3m joined together. Two ends of the fabric piece 3j are connected to two ends of the fabric piece 3m, respectively, and the fabric piece 3k is connected between the fabric piece 3j and the fabric piece 3m. In some embodiments, the fabric piece 3j corresponds, for example, to the fabric piece 3f, the fabric piece 3k corresponds, for example, to the fabric piece 3g and the fabric piece 3h, and the fabric piece 3m corresponds, for example, to the fabric piece 3i. Certainly, in other embodiments, the implementations of the outer fabric layer 301 and the inner fabric layer 302 are not limited to those described above.

Referring to FIG. 59 and in conjunction with FIGS. 41 to 43, in some embodiments, the outer fabric layer 301 and the inner fabric layer 302 define, for example, three receiving spaces 313 when the protective cover 300 is matched with to a medium to large sized carrier 100 of a large size. The three receiving spaces 313 are a third receiving space 3133, a fourth receiving space 3134, and a fifth receiving space 3135. Each of the three receiving spaces 313 extends along a transverse direction, and the three receiving spaces 313 are sequentially arranged along a longitudinal direction. The third receiving space 3133 corresponds, for example, to an area covered by the fabric piece 3j, the fourth receiving space 3134 corresponds, for example, to an area covered by the fabric piece 3k, and the fifth receiving space 3135 corresponds, for example, to an area covered by the fabric piece 3m.

The three receiving spaces 313 are provided with three impact resistant bodies 311 (the contour of each impact resistant body 311 is shown with dashed lines in FIG. 59), and the three impact resistant bodies 311 are respectively a third impact resistant body 3113, a fourth impact resistant body 3114, and a fifth impact resistant body 3115. The third impact resistant body 3113 is located within the third receiving space 3133, the fourth impact resistant body 3114 is located within the fourth receiving space 3134, and the fifth impact resistant body 3115 is located within the fifth receiving space 3135. The dimensions of the outer contour of the respective impact resistant bodies 311 correspond, for example, to the dimensions of the corresponding receiving spaces 313. Adjacent receiving spaces 313 are spaced apart, for example, by a structure such as a sewing line 318, a sewing line 319, or a bond line connecting the outer fabric layer 301 and the inner fabric layer 302. In some embodiments, the sewing line 318 extends along the junction between the fabric piece 3j and the fabric piece 3k, and the sewing line 319 extends along the junction between the fabric piece 3m and the fabric piece 3j, the fabric piece 3k.

Referring to FIGS. 59 and 60, and in conjunction with FIG. 41, the third impact resistant body 3113 may be in a single-layer structure, i.e., a better impact protection effect can be achieved. The third impact resistant body 3113 of the single-layer structure may be a single-layer soft sheet or a single-layer hard sheet, and the specific implementation of the single-layer soft sheet or the single-layer hard sheet may be referred to the above description of the first impact resistant body 3111 in the twelfth embodiment. In this embodiment, the third impact resistant body 3113 is, for example, a single-layer soft sheet that extends transversely. Certainly, in some embodiments, the transverse middle area of the third impact resistant body 3113 may be in a multi-layer structure to partially enhance the impact resistance of the transverse middle area of the third impact resistant body 3113. Alternatively, in some embodiments, the third impact resistant body 3113 as a whole may be in a multi-layer structure. Specific implementation of the multi-layer structure may be referred to the description of the multi-layer structure in the twelfth embodiment.

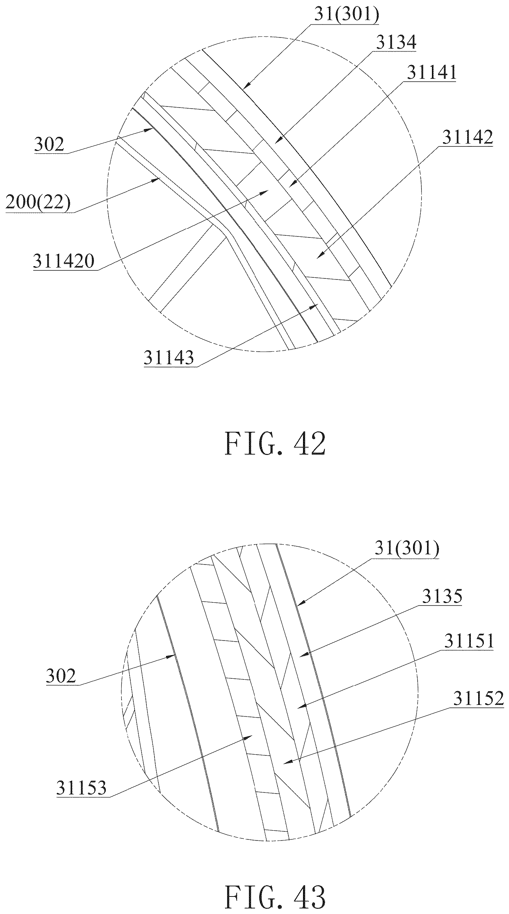

Referring to FIGS. 59 and 61, and in conjunction with FIGS. 41 and 42, in some embodiments, either the fourth impact resistant body 3114 as a whole or a transverse middle area of the fourth impact resistant body 3114 is in a multi-layer structure, to at least partially enhance the impact resistance of the fourth impact resistant body 3114. Specific implementation of the multi-layer structure may be referred to the description of the multi-layer structure in the twelfth embodiment.

In this embodiment, the fourth impact resistant body 3114 may include a sheet 31141, a sheet 31142, and a sheet 31143. The sheet 31141 is adjacent to the outer fabric 301 and the sheet 31143 is adjacent to the inner fabric 302. The sheet 31141 may be a soft sheet, the material of which may be, but not limited to, for example, EPP. The sheet 31141 extends transversely inside the fourth receiving space 3134, an outer contour size of the sheet 31141, for example, corresponds to the size of the corresponding fourth receiving space 3134, to support the outer fabric layer 301 and the inner fabric layer 302, as well as to provide the outer fabric layer 301 a flat appearance. The sheet 31142 may also be a soft sheet, the material of which may be, but not limited to, for example, inert memory foam. The sheet 31142 may have a smaller area than the sheet 31141 and is secured to the lateral center of the sheet 31141, for example, by adhesive bonding. The sheet 31143 may be a hard sheet, so that when the pet is impacted with the sheet 31143, the hard sheet 31143 disperses the impact force to avoid over-concentration of the impact force.

In some embodiments, the size of the outer contour of the sheet 31143 corresponds, for example, to the size of the fourth receiving space 3134, and the sheet 31143 has a shape that is narrow at both ends and wide in the middle. As required, a plurality of sheets of the fourth impact resistant body 3114 may be stacked without being secured to each other, e.g., by adhesive bonding, alternatively, at least some of the adjacent sheets of the fourth impact resistant body 3114 may be secured together by adhesive bonding. For example, in some embodiments, when the protective cover 300 is matched with accommodating body 100 and the canopy assembly 200 has small sizes, the protective cover 300 also has a small size, and all or at least a portion of the adjacent sheets of the fourth impact resistant body 3114 may be secured together by means of adhesive bonding. The plurality of sheets of the fourth impact resistant body 3114 secured by adhesive bonding are also less prone to debonding when the protective cover 300 of a small size is squeezed or bent. When the protective cover 300 is matched with the accommodating body 100 and the canopy assembly 200 having large sizes, the protective cover 300 also has a large size, and some sheets (e.g., but not limited to a hard sheet) of the fourth impact resistant body 3114 and their adjacent sheets on at least one side may be stacked together without being secured together by adhesive bonding or the like, which prevents the hard sheet from debonding due to arcing of deformation when the protective cover 300 is squeezed or bent. The connection manner of the plurality of sheets of the fourth impact resistant body 3114 is configured as required, so that the fourth impact resistant body 3114 can better fit and support the outer and inner fabric layers of the protective cover 300 to avoid wrinkles.

In some embodiments, notches 31140 extending toward the middle of the sheet 31143 are provided at two ends of the sheet 31143, and the notches 31140 provide deformation allowance for the sheet 31143, avoiding wrinkles that may cause the protective cover 300 to be uneven. In some embodiments, corners of the sheet 31143 are circular arc-shaped to avoid puncturing the inner fabric layer 302. Moreover, in some embodiments, the periphery of the sheet 31143, for example, does not protrude relative to the sheet 31141, which prevents the edges of the hard sheet 31143 from wearing through the inner fabric layer 302 when pressed.

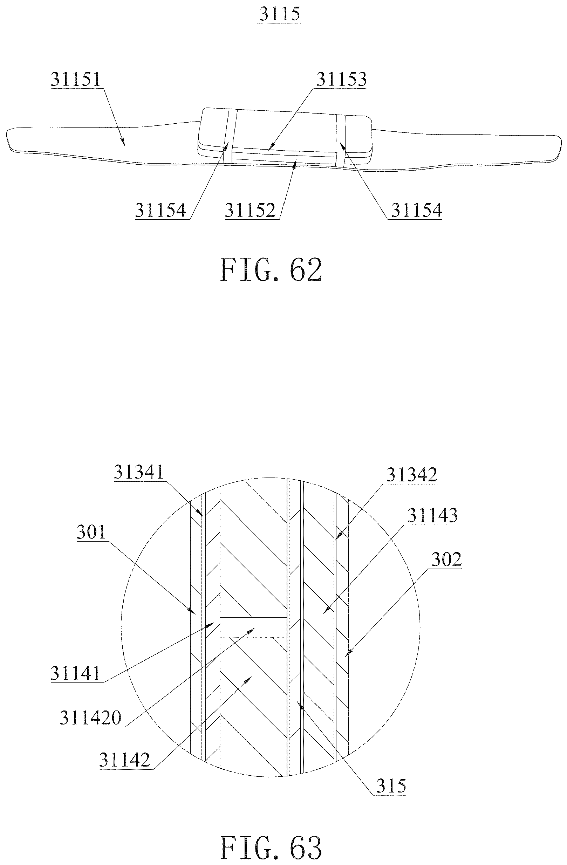

Referring to FIGS. 61 and 63, in some embodiments, a transversely extending slit 311420 may be provided at the middle of the sheet 31142, and the slit 311420 may be deformed according to a morphology change of the sheet 31143, so as to facilitate a better fit of the soft sheet 31142 and the hard sheet 31143, as well as a better fit of the sheet 31142 and the sheet 31141, such that the fourth impact resistant body 3114 fits more closely into the arched shape of the protective cover 300 and the canopy 22.

Referring to FIGS. 59, 61, and 63, in some embodiments, when the same impact resistant body 311 includes a plurality of sheets and the sheets in the plurality of sheets are not secured together, at least one spacer layer 315 may be disposed in the receiving space 313 accommodating the plurality of sheets, and the spacer layer 315 is an intermediate fabric layer disposed between the inner fabric layer 302 and the outer fabric layer 301 and may be an inner fabric. The spacer layer 315 may divide the receiving space 313 into at least two layered spaces, and the sheets that are not secured together are mounted into the corresponding layered spaces. The respective spacer layers 315 help to locate the positions of the sheets that are not secured together. Specifically in this embodiment, one spacer layer 315 may be provided in the fourth receiving space 3114, and the spacer layer 315 divides the fourth receiving space 3134 into a layered space 31341 and a layered space 31342. The sheets 31141 and the sheet 31142 secured together are accommodated in the layered space 31341, and the sheets 31143 are accommodated in the layered space 31342. Certainly, in some embodiments, no spacer layer 315 is provided in the receiving space 313, the impact resistant body 311 corresponding to the receiving space 313 with no spacer layer 315 may include a plurality of sheets, the plurality of sheets may be unbonded to each other, or sequentially bonded, or partially bonded and partially unbonded, and the impact resistant body 311 may be accommodated directly in the receiving space 313 with no spacer layer 315.

Referring to FIGS. 59 and 62, and in conjunction with FIGS. 41 and 43, the skirt 35 is wrapped around the outside of the top opening 10 of the accommodating body 100 when the protective cover 300 is in the use state. The fifth impact resistant body 3115 corresponds to the skirt 35. In some embodiments, the fifth impact resistant body 3115 may be a single-layer structure, such as a single-layer soft sheet or a single-layer hard sheet. The specific implementation of the single-layer soft sheet or the single-layer hard sheet may be referred to the above description of the first impact resistant body 3111 in the twelfth embodiment. In some embodiments, the fifth impact resistant body 3115 may also have a multi-layer structure overall or a multi-layer structure in the transverse middle area. Specific implementation of the multi-layer structure may be referred to the description of the multi-layer structure in the twelfth embodiment of this aspect. By making the transverse middle area of the fifth impact resistant body 3115 in the multi-layer structure, the fifth impact resistant body 3115 may also provide side impact protection.

Referring to FIG. 62, specifically in this embodiment, the fifth impact resistant body 3115 may include a transversely extending sheet 31151, a sheet 31152 stacked on a transverse middle area of the sheet 31151, and a sheet 31153 stacked on the sheet 31152. The sheet 31151 is, for example, adjacent to the outer fabric layer 301, and the size of the outer contour of the sheet 31151 corresponds to the size of the fifth receiving space 3135 to serve to support the outer fabric layer 301 and the inner fabric layer 302. The sheet 31153 is, for example, adjacent to the inner fabric layer 302.

The respective sheets (the sheet 31151, the sheet 31152, and sheet 31153) of the fifth impact resistant body 3115 may be secured together by adhesive bonding, or the respective sheets may be bound together by strips 31154. The sheet 31151 and the sheet 31153 may be soft sheets of the same material, the material of which may be, but not limited to, for example, EPP. The sheet 31152 may also be a soft sheet, and the material of sheet 31152 may be, but not limited to, for example, inert memory foam. In some embodiments, the materials of sheet 31151, sheet 31152, and sheet 31153 may be the same or completely different.

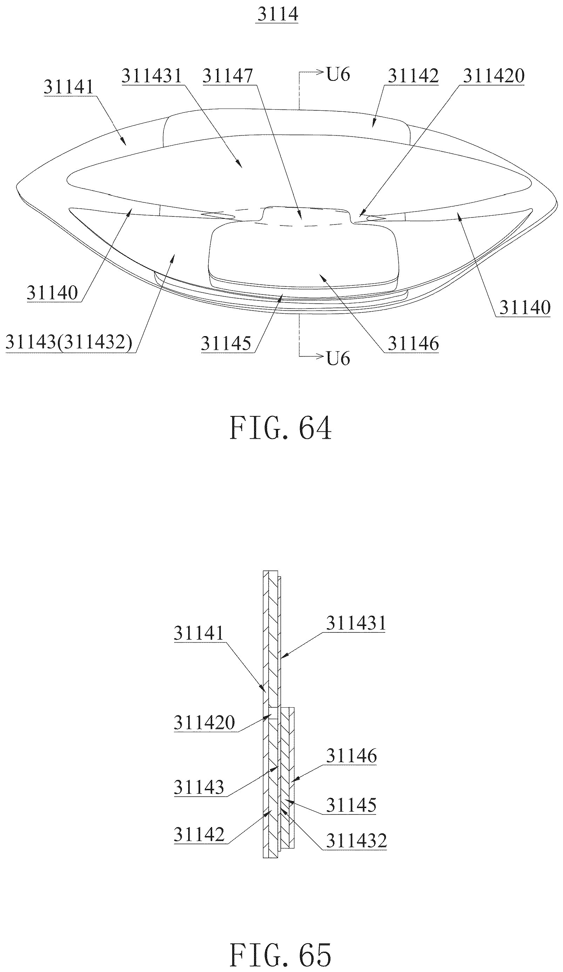

FIGS. 64 and 65 show a variant implementation of the fourth impact resistant body 3114 shown in FIG. 61. Referring to FIGS. 64 and 65, the hard sheet 31143 may be further provided with a sheet 31145 and a sheet 31146, both of which are, for example, soft sheets. The sheet 31145 is secured to the sheet 31143 for example by adhesive bonding, and the sheet 31146 is secured to the sheet 31145 for example by adhesive bonding. The material of the sheet 31145 is, for example, the same as the material of the sheet 31142 (include but not limited to, foam), and the material of the sheet 31146 is, for example, the same as the material of the sheet 31141 (include but not limited to, EPP sheet). A notch 31140 divides sheet 31143 into two portions of upper and lower portions, which are respectively an upper portion 311431 and a lower portion 311432. Transverse middle positions of the upper portion 311431 and the lower portion 311432 are connected, and lower portion 311432 is closer to the skirt 35 relative to the upper portion 311431. Referring to FIGS. 64 to 66, the sheet 31145 and sheet 31146 are located, for example, at the transverse middle position of the lower portion 311432 and may have an intermediate protrusion 31147 extending towards the upper portion 311431, and the intermediate protrusion 31147 is configured not to shield the notch 31140 so as not to be affect sheet 31143 to be deformed in accordance with the shape of the protective cover.

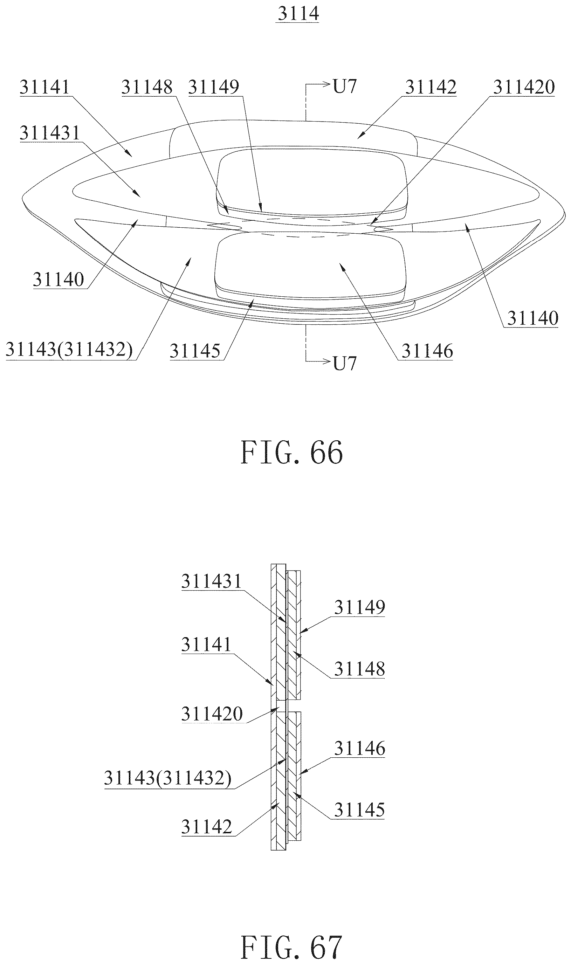

FIGS. 66 and 67 show a variant implementation of the fourth impact resistant body 3114 shown in FIG. 64. As can be seen from FIGS. 66 and 67, in addition to the sheet 311445 and the sheet 31146 provided on the lower portion 311432, a sheet 31148 and a sheet 31149 are provided at the transverse middle position of the upper portion 311431, and the sheet 31148 and the sheet 31149 are, for example, soft sheets. The sheet 31148 is secured to the upper portion 311431 for example by adhesive bonding, and the sheet 31149 is secured to the sheet 31148 for example by adhesive bonding. The material of the sheet 31148 is for example the same as the material of sheet 31145. The material of the sheet 31149 is for example the same as the material of sheet 31146.

### Fourteenth embodiment of the first aspect

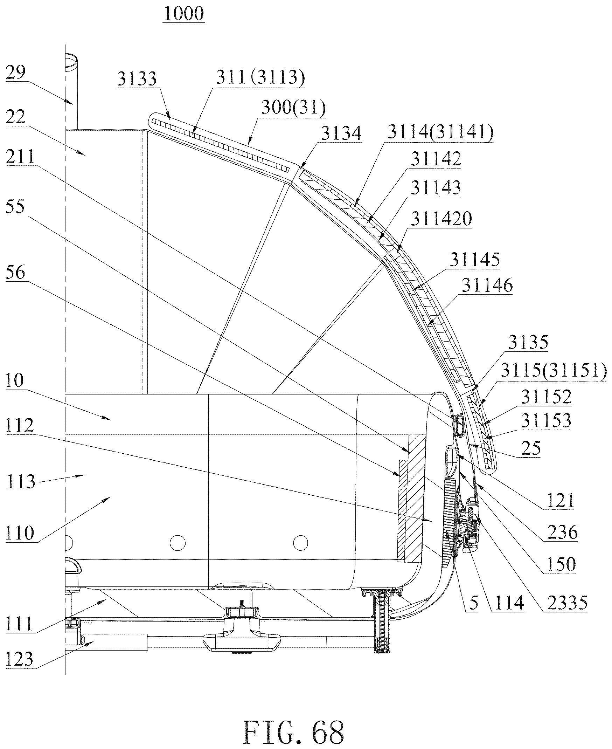

FIG. 68 shows a partially sectional view of a carrier 1000 provided in accordance with the fourteenth embodiment of the first aspect of the present disclosure. The carrier 1000 is mounted with a protective cover 300, the protective cover 300 includes a third impact resistant body 3113 shown in FIG. 60, a fourth impact resistant body 3114 shown in FIG. 64, and a fifth impact resistant body 3115 shown in FIG. 62. In the absence of conflict, the structure of the carrier 1000 provided in this embodiment may be referred to the above description of the carrier 1000 shown in FIG. 41 and will not be repeated herein.

It should be noted that the carrier 1000 provided in any of the embodiments (include but not limited to, the fifth embodiment to the tenth embodiment) of the present disclosure may be configured with a protective cover 300 provided in accordance with the embodiments of the present disclosure. The structure of the protective cover 300 and the engaging relationships thereof with the accommodating body 100 and the canopy assembly 200 may be referred to the above description, and will not be repeated herein. It should be understood that it is sufficient that the protective cover 300 is capable of being connected with the accommodating body 100 and/or the canopy assembly for covering at least a part of the canopy assembly (preferably, the front and/or the rear of the canopy assembly) when the canopy assembly is in the unfolded state. The protective cover 300 may be, but not limited to, the specific implementations exemplified in the above embodiments.

In a second aspect of the present disclosure, provided are a travel device and a carrier and a protection apparatus thereof, various specific embodiments of which will be described below in conjunction with the accompanying drawings.

First, in the context of the second aspect of the present disclosure, the travel device includes a carrier and a protection apparatus, and the carrier is configured to carry an animal, such as a pet, and confine the animal therein. When viewed from the top of the carrier, the carrier may be substantially rectangular-shaped, with a longitudinal axis/direction (indicated by the arrow A in the figures) and a transverse axis/direction (indicated by the arrow B in the figures). In the present disclosure, the carrier may be exemplarily arranged and mounted on a back seat in the vehicle with its longitudinal axis parallel to the vehicle seat, that is, with its transverse axis parallel to a traveling direction (the direction B6) of the vehicle. The protection apparatus provides the travel device with improved impact resistance to prevent the animal confined therein from impact or injury caused by side collision, and such side collision may be caused by hitting by an external object in an accident, or by a sudden change in vehicle speed or direction in traveling. It should be noted that the "side impact protection block" and/or "cushioning block" and/or "impact resistant body" and/or "protective cover" in the aforementioned embodiments of the first aspect may also be considered as examples of protection apparatuses.

### First embodiment of a second aspect

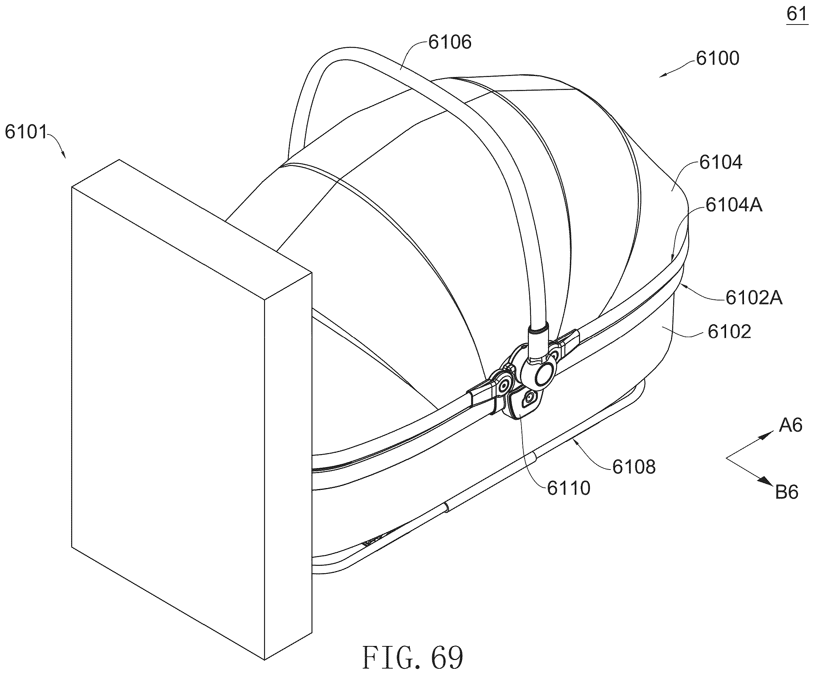

Referring to FIG. 69, FIG. 69 is a perspective view schematically showing a travel device 61 according to a first embodiment of a second aspect of the present disclosure. The travel device 61 includes a carrier 6100 and a protection apparatus 6101. The carrier 6100 is configured to accommodate an animal therein, and the protection apparatus 6101 is attached to the carrier 6100 at a side of the carrier 6100. According to the present disclosure, the carrier 6100 may be mounted to a base (not shown) that is installed in a vehicle. According to the present disclosure, the protection apparatus 6101 may be constructed as a cushioning structure absorbing the energy or shock caused by side collision or by a sudden change in the vehicle direction or speed. In this manner, the animal may be stably supported in the carrier 6100 so as not to shake or move therein, and the carrier 6100 may be provided with the improved impact resistance to keep the animal therein from injury.

As mentioned above, in the present disclosure, the carrier 6100 may be mounted to a base (not shown) that is installed in the vehicle. It is not specifically shown herein how the carrier is mounted to the base to avoid obscuring the present disclosure.

In this embodiment, the carrier 6100 includes a box portion 6102 (also referred to as a "box body" and optionally including a "seat fabric" wrapped around the exterior of the box body), a canopy portion 6104 (e.g., serve as or include a "canopy assembly" as described in the aforementioned first aspect, i.e., may include a "canopy frame" and a "canopy") and a carrying handle 6106. The box portion defines an accommodating space for the animal. The canopy portion 6104 is detachably attached to the box portion 6102 of the carrier 6100. Two ends of the carrying handle 6106 are pivotally and detachably attached to opposite sides of the box portion 6102. The carrier 6100 further includes a bracket assembly 6108 (also referred to as a "bracket apparatus") connected to the outer bottom of the box portion 6102, through which the carrier 6100 may be mounted to the base (not shown) installed in the vehicle. It should also be noted that, similar to the first aspect, the "box portion" and the "bracket assembly" in the embodiments of the second aspect may also be considered to be constituent parts of the "accommodating body", i.e., the accommodating body may include the box portion and the bracket assembly, which will not be repeated hereinafter.

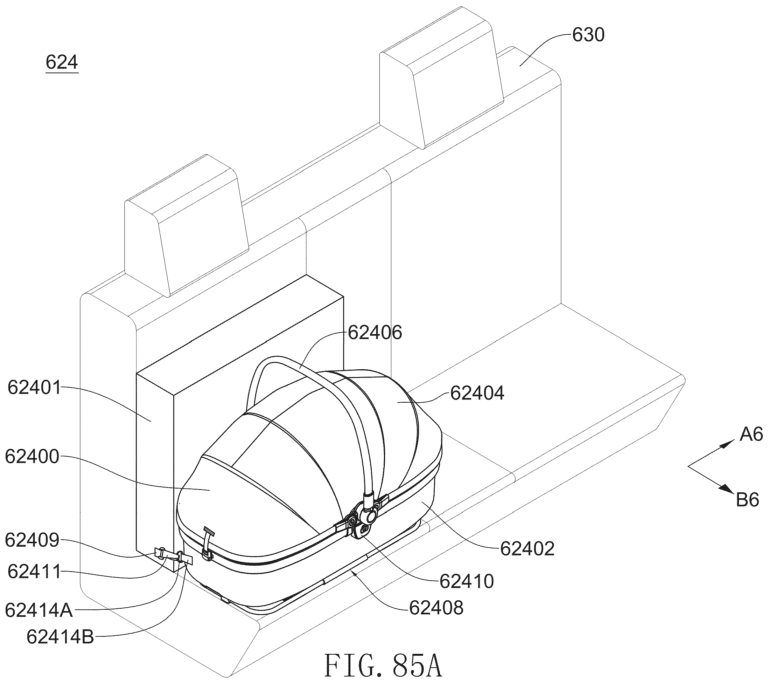

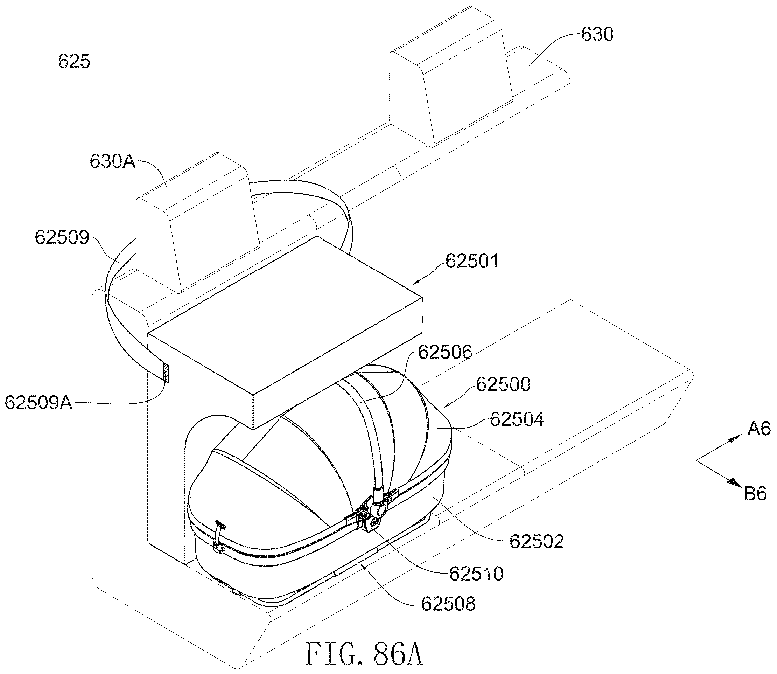

The box portion 6102 may be rectangular-shaped when viewed from the top thereof, defined by a pair of opposite long sides extending in the longitudinal direction A6 and a pair of opposite short sides extending in the transverse direction B6. In this embodiment, the protection apparatus 6101 may be attached to the carrier 6100 at the side surface of the carrier 6100 corresponding to one of the short sides. In alternative embodiments, the protection apparatus 6101 may be alternatively or additionally attached to the carrier 6100 at the side surface corresponding to one of the long sides, which will be further described with reference to the embodiments as shown in FIGS. 85A to 85C, and FIGS. 86A to 86C.

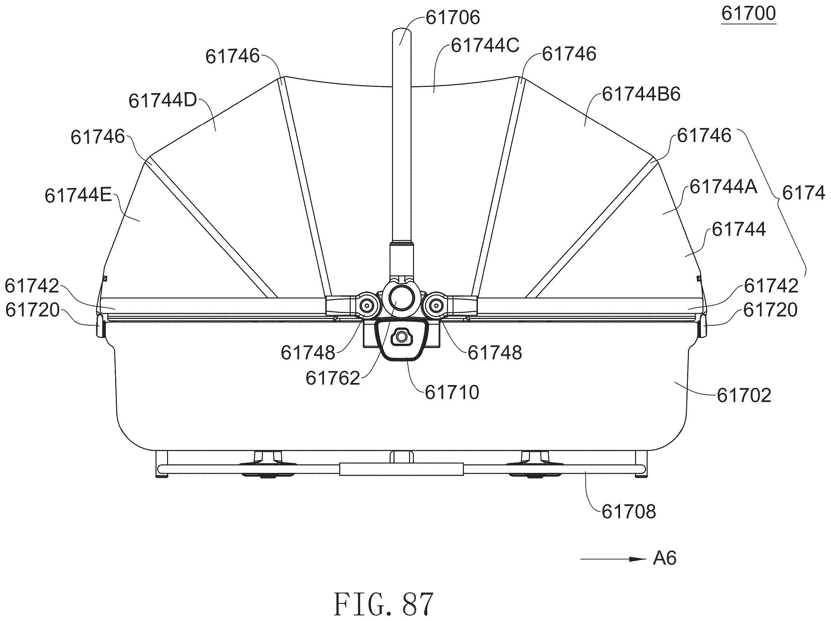

In this embodiment, the canopy portion 6104 is dome-shaped. The canopy portion 6104 has a lower periphery 6104A (also configured as or provided with a "canopy frame", e.g., referring to corresponding portions in the first aspect), and the lower periphery 6104A corresponds to an upper periphery 6102A of the box portion 6102. The canopy portion 6104 may be detachably attached to the upper periphery 6102A of the box portion 6102 at the lower periphery 6104A thereof. In this embodiment, the canopy portion 6104 may be attached to the box portion 6102 by, for example, a buckle assembly 6110 (which may also be considered as an example of a "canopy locking part"). As shown, the canopy portion 6104 is foldable, from its opposite short sides to the central (or folded from the central to the opposite short sides), to have the box portion 6102 uncovered by the canopy portion 6104 in a folded state, or to have the box portion 6102 closed with the canopy portion 6104 in an unfolded state. The interior of the box portion 6102 is open and accessible for the animal when the canopy portion 6104 is in the folded state. The structure of the canopy of the carrier according to the present disclosure will be further illustrated with reference to FIGS. 87 to 93.

In this embodiment, the protection apparatus 6101 is formed as a plate-like member. As mentioned, the protection apparatus 6101 is attached to the carrier 6100 at the side surface of the carrier 6100 corresponding to one of the short sides. Preferably, the protection apparatus 6101 is attached to the carrier 6100 in such a manner that the protection apparatus 6101 may be located between the carrier 6100 and a rear door (not shown) of the vehicle. In this manner, it is possible to avoid the carrier 6100 from hitting the rear door, or to avoid the animal confined in the carrier 6100 from being impacted or injured by side collision or by a sudden change in vehicle speed or direction while traveling.

### Second embodiment of the second aspect

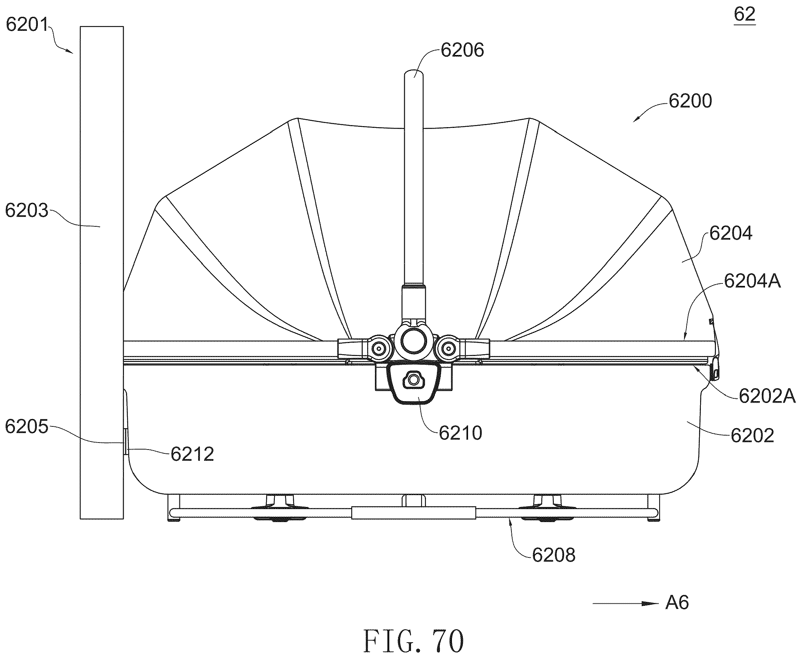

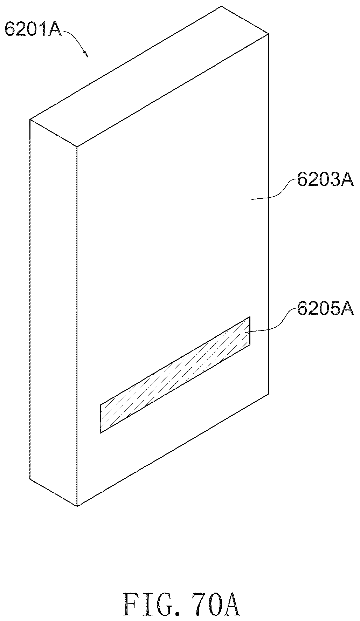

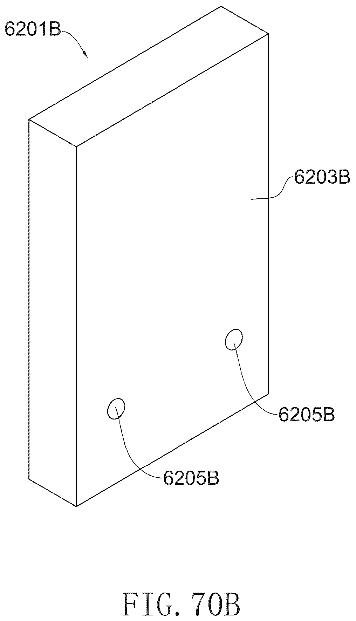

Referring to FIG. 70, FIG. 70 schematically shows a side view of a travel device 62 according to a second embodiment of the second aspect of the present disclosure. The travel device 2 includes a carrier 6200, and a protection apparatus 201 attached to the carrier 6200 at a side surface thereof. The carrier 6200 has a structure and a configuration similar to those of the carrier 6100 as shown in FIG. 69, including the box portion 6202, the canopy portion 6204 detachably attached to the box portion 6202 by the buckle assembly 6210, the carrying handle 6206 detachably and pivotably connected to opposite sides of the box portion 6202, and the bracket assembly 6208 connected to the outer bottom of the box portion 6202. In this embodiment, the carrier 6200 is provided with a first attaching portion 6212 on one outer side surface of the box portion 6202. The protection apparatus 6201 is constructed mainly by a plate-like body 6203 made of an energy-absorbing or shock-absorbing material. The protection apparatus 6201 is provided with a second attaching portion 6205, corresponding to the first attaching portion 6212 of the carrier 6200, on the plate-like body 6203. In this embodiment, the protection apparatus 6201 is attached to the carrier 6200 with the cooperation of the first and second attaching portions 6212, 6205. In this embodiment, the protection apparatus 6201 may be pushed to attach to the carrier 6200 along the longitudinal direction A6. It should be noted that the "first attaching portion" and the "second attaching portion" in the second aspect of the present disclosure may be referred to as a "coupling apparatus", or used as an example of or a part of the "coupling apparatus". It should also be noted that the "plate-like body" described herein refers to a body having a certain thickness, but not limited to the shape of a "plate", for example, may have a spherical shape or a concave-convex shape having a different thickness.

Referring to FIGS. 70A and 70B, FIGS. 70A and 70B are perspective views schematically showing the respective attaching portion of the protection apparatus according to the embodiments of the present disclosure.

As shown in FIG. 70A, the second attaching portion configured on the plate-like body 6203A may be a hook and loop tape, or a so-called hook and loop fastener, a so-called touch fastener and a so-called magic tape. To be more specific, the second attaching portion may be a hook portion 6205A of the hook and loop tape, while the first attaching portion (not shown) of the carrier may be correspondingly a loop portion (and vice versa). In this manner, the protection apparatus 6201A may be attached to the carrier by fastening the loop portion (the first attaching portion) and hook portion 6205A (the second attaching portion).

Alternatively, as shown in FIG. 70B, the second attaching portion configured on the plate-like body 6203B may be a magnetic part 6205B, and the first attaching portion (not shown) of the carrier may be a corresponding magnetic part, so that the protection apparatus 6201B may be attached to the carrier by the magnetic attraction of the first and second magnetic parts. In the embodiment of FIG. 70B, the protection apparatus 6201B is shown as including two magnetic parts 6205B as the second attaching portions; however, the present disclosure is not limited thereto. In alternative embodiments, the number of second attaching portions of the protection apparatus may be varied, while the number of first attaching portions of the carrier may also be correspondingly varied. In addition, the number of first attachment portions may be different from the number of second attachment portions, e.g., one first attachment portion may be provided corresponding to two or more second attachment portions, or two or more attachment portions may be provided corresponding to one second attachment portion, etc., i.e., as long as the first attachment portions and the second attachment portions may be cooperated with each other to allow the protection apparatus 6201B to be attached to the carrier.

### Third embodiment of the second aspect

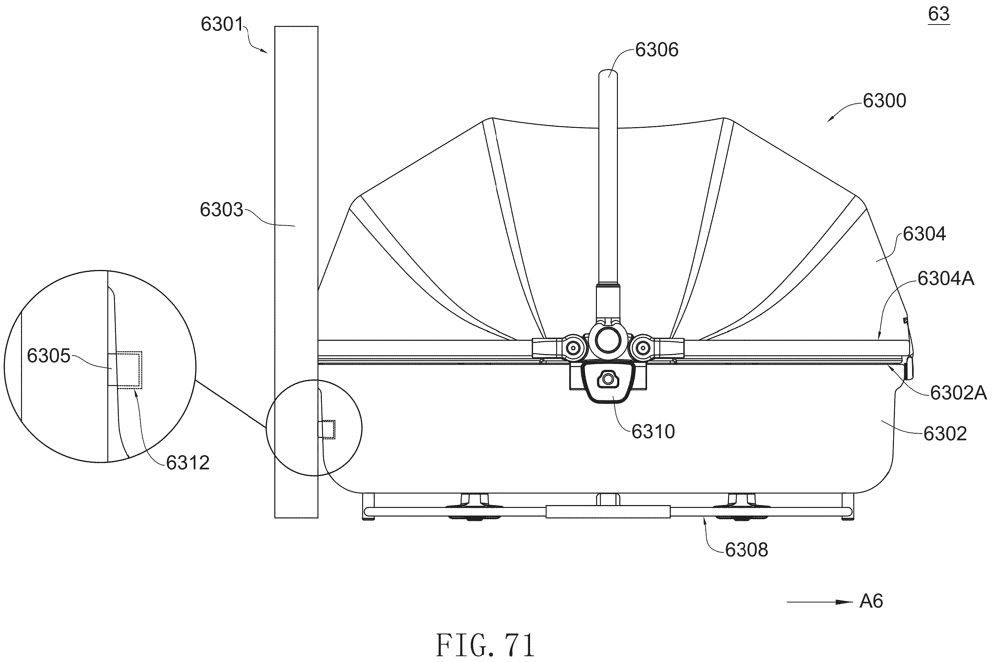

Referring to FIG. 71, FIG. 71 schematically shows a side view of a travel device 63 according to a third embodiment of the second aspect of the second aspect of the present disclosure. The travel device 63 includes a carrier 6300, and a protection apparatus 6301 attached to the carrier 6300 to provide improved impact resistance to the carrier 6300. The carrier 6300 has a structure and a configuration similar to those of the carrier 6100 as shown in FIG. 69 and the carrier 6200 as shown in FIG. 70, including the box portion 6302 with the buckle assembly 6310, the canopy portion 6304 detachably attached to the box portion 6302, the carrying handle 6306 detachably and pivotably connected to opposite sides of the box portion 6302, and the bracket assembly 6308 connected to the outer bottom of the box portion 6302.

The carrier 6300 is different from the carrier 6200 in that, in this embodiment, the first attaching portion of the carrier 6300 is formed as a recess 6312. Correspondingly, the second attaching portion of the protection apparatus 6301 is formed as a bump or block 6305 that is fitted with the recess 6312 of the carrier 6300. In this embodiment, the protection apparatus 6301 may be attached to the carrier 6300 with the interference fit of the bump or block 6305 to the recess 6312. In this embodiment, the protection apparatus 6301 may be pushed to attach to the carrier 6300 along the longitudinal direction A6.

### Fourth embodiment of the second aspect

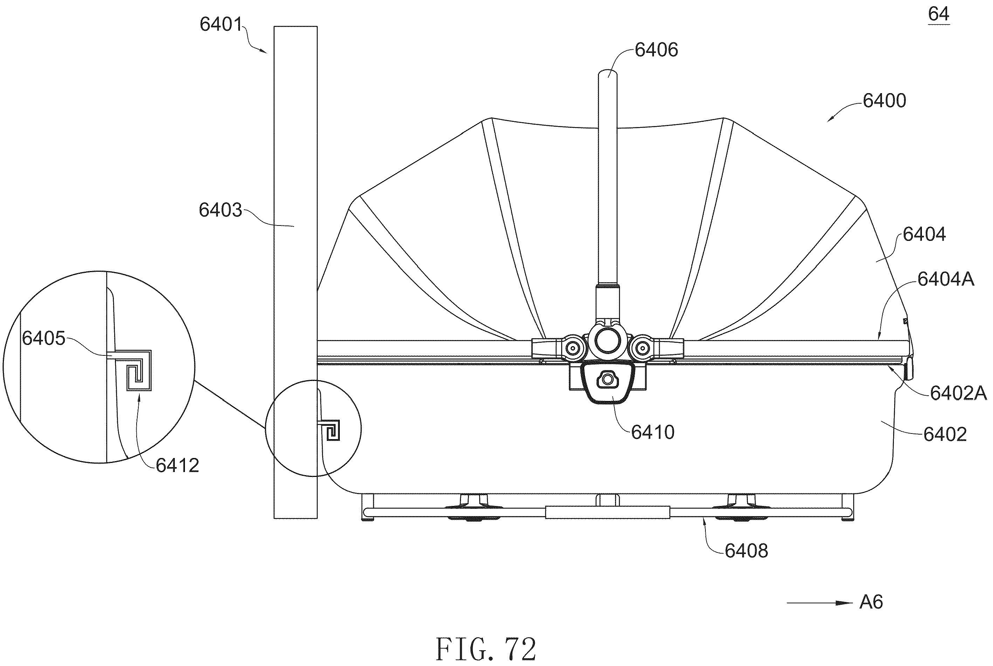

Referring to FIG. 72, FIG. 72 schematically shows a side view of a travel device 64 according to a fourth embodiment of the second aspect of the second aspect of the present disclosure. The travel device 64 includes a carrier 6400, and a protection apparatus 6401 attached to the carrier 6400 to provide improved impact resistance to the carrier 6400. The carrier 6400 has a structure and a configuration similar to those of the carrier 6300 as shown in FIG. 71, including the box portion 6402 with the buckle assembly 6410, the canopy portion 6404 detachably attached to the box portion 6402, the carrying handle 6406 detachably and pivotably connected to opposite sides of the box portion 6402, and the bracket assembly 6408 connected to the outer bottom of the box portion 6402.

The carrier 6400 is different from the carrier 6300 in that, the carrier 6400 according to this embodiment is provided with a first attaching portion having a specific shape or contour other than that of the carrier 6300. This corresponds to the specific contour of the second attaching portion of the protection apparatus 6401. To be more specific, the second attaching portion 6405 formed on the plate-like body 6403 of the protection apparatus 6401 is formed with a curled end portion. The first attaching portion 6412 of the carrier 6400 is formed as a recess having a contour corresponding to that of the curled end portion of the second attaching portion 6405. In this embodiment, the protection apparatus 6401 may be attached to the carrier 400 in a transverse direction of the carrier, i.e. a direction parallel to a direction from the front of the vehicle to the rear. With the curled end portion, the second attaching portion 6405 may be engaged with the first attaching portion 6412 of the carrier 6400 in a relatively firm manner, so that the attachment of the protection apparatus 6401 to the carrier 6400 may be further secured. In this embodiment, the protection apparatus 6401 may be pushed to be attached to the carrier 6400 along the transverse direction B, in a direction from the front seat to the back seat of the vehicle.

### Fifth embodiment of the second aspect

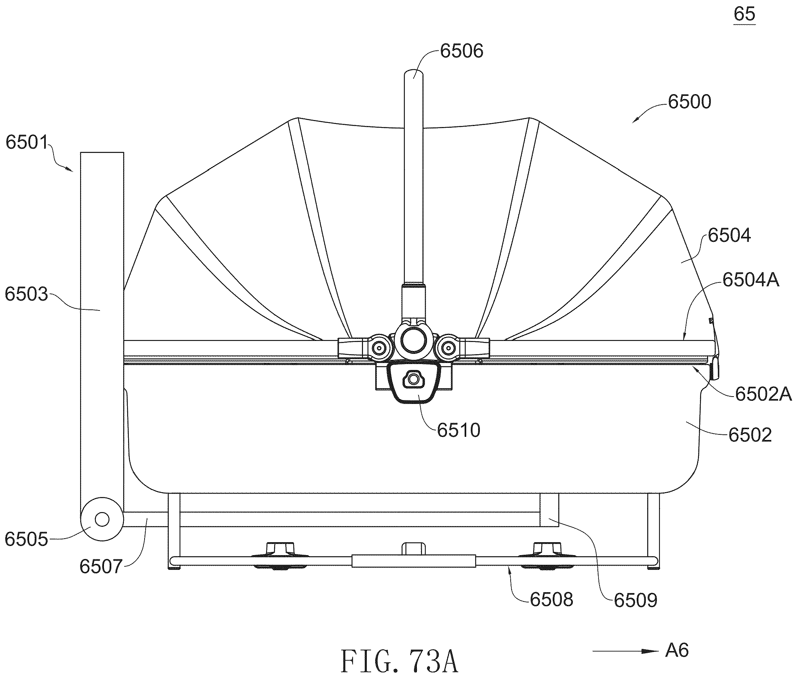

Referring to FIGS. 73A to 73C, FIGS. 73A to 73C are side views schematically showing a travel device 65 according to a fifth embodiment of the second aspect of the second aspect of the present disclosure. The travel device 65 includes a carrier 6500, and a protection apparatus 6501 attached to the carrier 6500 to provide improved impact resistance to the carrier 6500. The carrier 6500 has a structure and a configuration similar to those of the carriers 6100, 6200, 6300, and 6400 as mentioned, including the box portion 6502 with the buckle assembly 6510, the canopy portion 6504 detachably attached to the box portion 6502, the carrying handle 6506 detachably and pivotably connected to opposite sides of the box portion 6502, and the bracket assembly 6508 connected to the outer bottom of the box portion 6502.

Referring to FIG. 73A, the protection apparatus 6501 of the travel device 65 includes a plate-like body 6503 made of an energy-absorbing or shock-absorbing material. The plate-like body 6503 is connected to a guiding member 6507 by a pivot shaft 6505 at the lower side thereof, such that the plate-like body 6503 may be caused to pivot in relation to the guiding member 6507. One end of the guiding member 6507 is connected to the plate-like body 6503 by the pivot shaft 6505, and a distal end (i.e., another end) of the guiding member 6507 is fixed to the outer bottom of the box portion 6502 of the carrier 6500 by a connection part 6509. In this embodiment, the guiding member 6507 is arranged in a space defined between the outer bottom of the box portion 6502 and the bracket assembly 6508. It should be noted that the "guiding member 6507" and the "pivot shaft 6505" in this embodiment may be used as an example or a part of the "coupling apparatus".

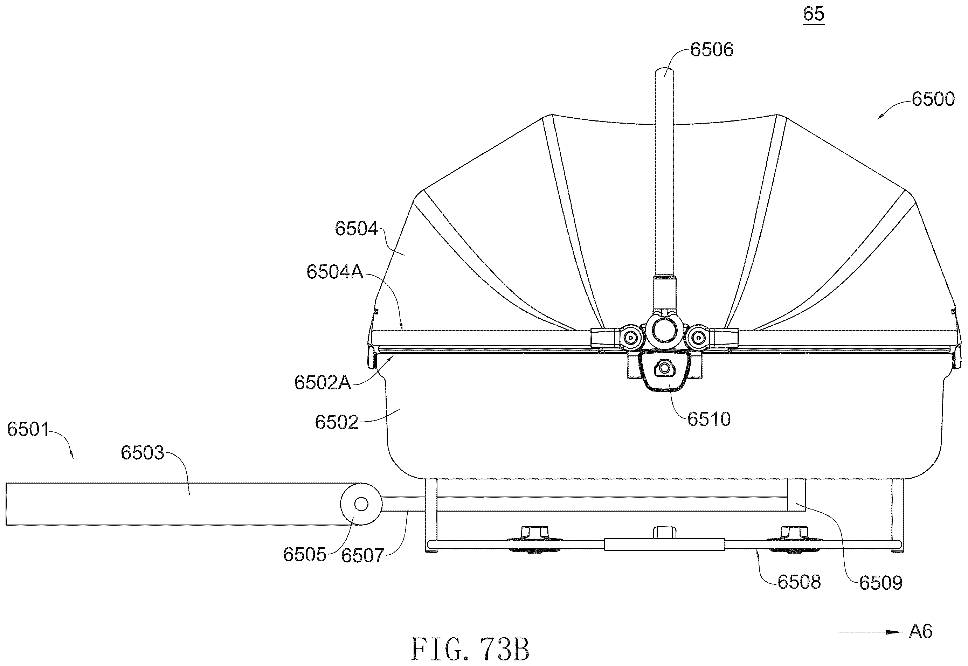

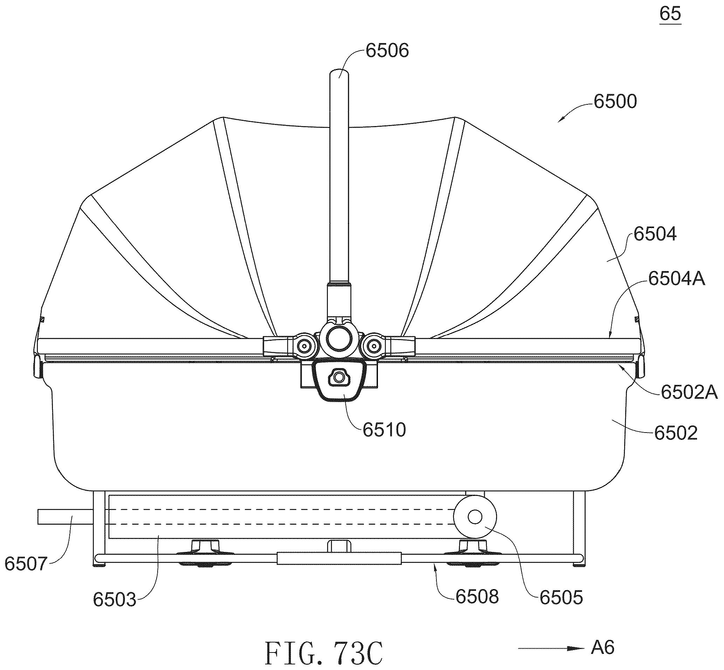

When the protection apparatus 6501 is attached to the carrier 6500 to give the impact resistance, as shown in FIG. 73A, the plate-like body 6503 and thus the protection apparatus 6501 are pivoted to upstand, and are pushed along the longitudinal direction A6 to be attached to the carrier 6500. The attached protection apparatus 6501 is positioned between the carrier 6500 and the rear door of the vehicle, to prevent the carrier 6500 from unexpectedly hitting the rear door of the vehicle (not shown) due to the side collision or a sudden change in vehicle speed or direction while traveling. When the protection apparatus 6501 is detached (i.e., separated) from the carrier 6500, the plate-like body 6503 is first pivoted to a horizontal position by the pivot shaft 6505. That is, the plate-like body 6503 will be parallel to the outer bottom surface of the carrier 6500, as shown in FIG. 73B. Then, the plate-like body 6503 may be pushed and guided to move along the guiding member 6507 towards the carrier 6500, until fully located under the bottom of the carrier 6500. In this manner, the plate-like body 6503 may be received and contained in the space between the outer bottom of the box portion 6502 and the bracket assembly 6508, as shown in FIG. 73C.

### Sixth embodiment of the second aspect

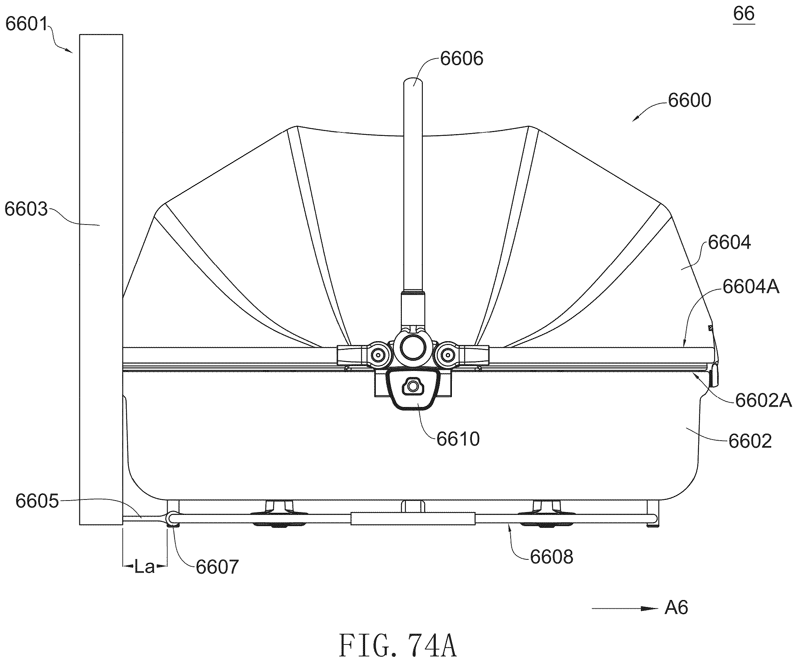

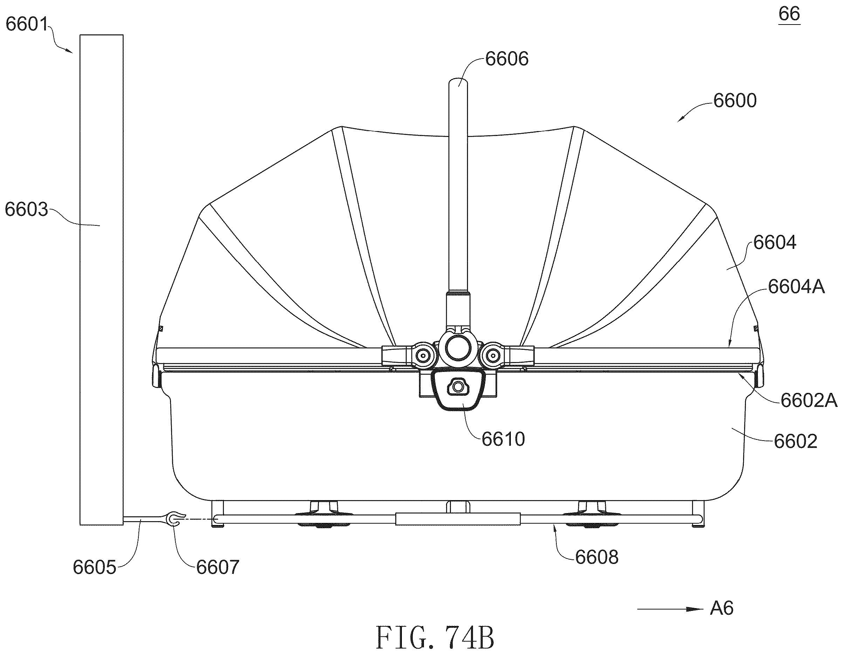

FIGS. 74A and 74B are side views schematically showing a travel device 66 according to a sixth embodiment of the second aspect of the present disclosure. To be more specific, FIG. 74A shows that the protection apparatus 6601 is attached to the carrier 6600 to provide improved impact resistance to the carrier 6600, while FIG. 74B shows that the protection apparatus 6601 is separated from the carrier 6600. The carrier 600 has a structure and a configuration similar to those of the carriers 6100, 6200, 6300, 6400 and 6500 as mentioned, including the box portion 6602 with the buckle assembly 6610, the canopy portion 6604 detachably attached to the box portion 6602, the carrying handle 6606 detachably and pivotably connected to opposite sides of the box portion 6602, and the bracket assembly 6608 connected to the outer bottom of the box portion 6602.

In this embodiment, the protection apparatus 6601 to be attached to the carrier 6600 includes a plate-like body 6603 and a coupling member 6605 arranged at the bottom of the plate-like body 6603. The coupling member 6605 has its one end connected to the bottom of the plate-like body 6603, and is provided with a coupling portion 6607 such as a clamping structure at a distal end thereof. The coupling portion 6607 has a contour corresponding to the rod structure of the bracket assembly 6608, such that the protection apparatus 6601 may be attached to the carrier 6600 by coupling or clamping the coupling portion 6607 to the bracket assembly 6608. Preferably, the length La of the coupling member 6605 is dimensioned to allow the plate-like body 6603 to abut against the side surface of the carrier 6600 when the protection apparatus 6601 is attached to the carrier 6600, so that the animal in the carrier 6600 may be supported and protected in a relatively safe and stable manner. In this embodiment, the protection apparatus 6601 is pushed to be attached to the carrier 6600 along the longitudinal direction A6. It should be noted that the "coupling member 6605" and/or the "coupling portion 6607" in this embodiment may be used as an example or a part of the "coupling apparatus".

### Seventh embodiment of the second aspect

Referring to FIG. 7, FIG. 7 is a side view schematically showing a travel device 67 according to a seventh embodiment of the second aspect of the present disclosure. The travel device 67 includes a carrier 6700, and a protection apparatus 6701 attached to the carrier 6700 to provide improved impact resistance to the carrier 6700. The carrier 6700 has a structure and a configuration similar to those of the carriers as mentioned, including the box portion 6702 with the buckle assembly 6710, the canopy portion 6704 detachably attached to the box portion 6702, the carrying handle 6706 detachably and pivotably connected to opposite sides of the box portion 6702, and the bracket assembly 6708 connected to the outer bottom of the box portion 6702. In the embodiment as shown, the carrier 6700 is mounted to a base 6750 that is installed in the vehicle (not shown). The details of structure and configuration of the base 6750 and the mounting of the carrier 6700 to the base 6750 are not the object of the present disclosure, and are thus omitted herein to avoid obscuring the present disclosure.

In this embodiment, the protection apparatus 6701 is attached to the base 6750 instead of the carrier 6700. The protection apparatus 6701 includes a plate-like body 6703 made of an energy-absorbing or shock-absorbing material, and a connecting rod 6705 connecting to the bottom of the plate-like body 6703. A distal end of the connecting rod 6705 is connected to the base 6750. The length Lb of the connecting rod 6705 is sized to allow the plate-like body 6701 to abut against the side surface of the carrier 6700 when the protection apparatus 6701 is attached to the base 6750, so that the animal in the carrier 6700 may be supported and protected in a relatively safe and stable manner.

### Eighth embodiment of the second aspect

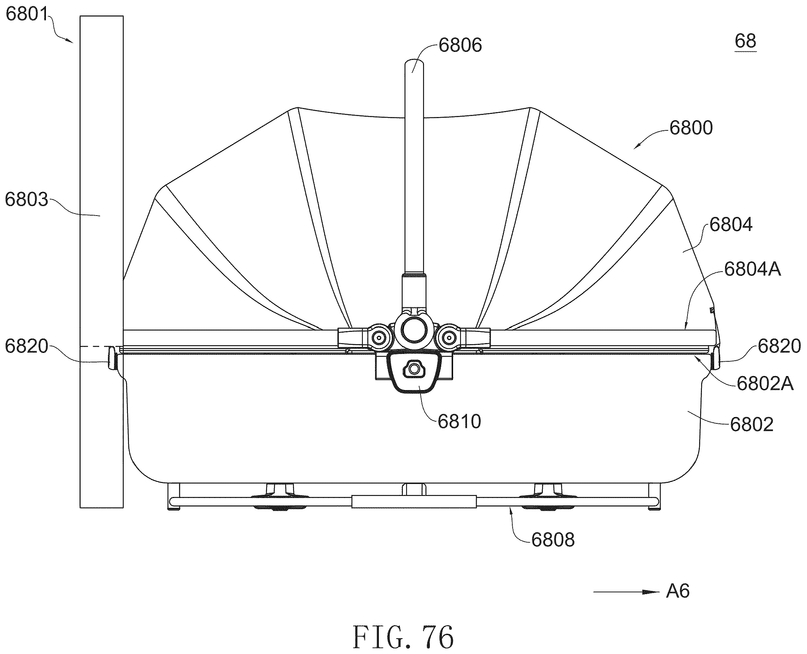

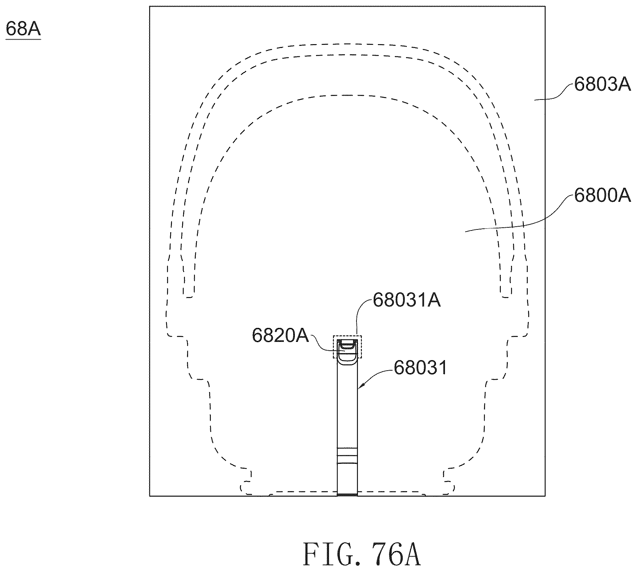

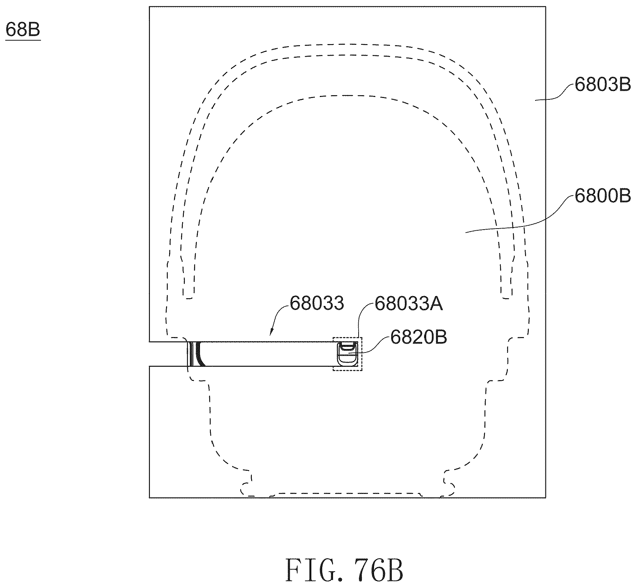

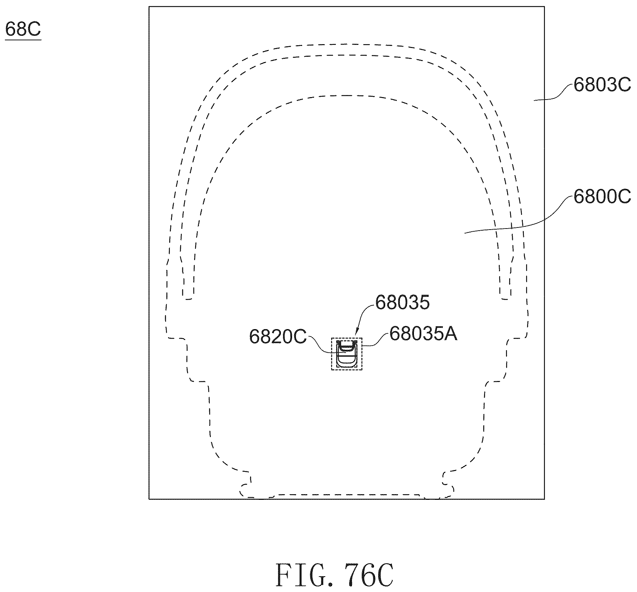

Referring to FIG. 76, FIG. 76 schematically shows a side view of a travel device 68 according to an eighth embodiment of the second aspect of the present disclosure. The travel device 68 includes a carrier 6800, and a protection apparatus 6801 attached to the carrier 6800 to provide improved impact resistance to the carrier 6800. The carrier 6800 has a structure and a configuration similar to those of the carriers as mentioned, including the box portion 6802 with the buckle assembly 6810, the canopy portion 6804 detachably attached to the box portion 6802, the carrying handle 6806 detachably and pivotably connected to opposite sides of the box portion 6802, and the bracket assembly 6808 connected to the outer bottom of the box portion 6802.

The carrier 6800 is different from the above-mentioned carriers in that, in this embodiment, the carrier 6800 includes connectors 820, and the connectors 820 are arranged on opposite sides, in particular the opposite short sides, of the upper periphery 6802A of the box portion 6802. In this manner, the canopy portion 6804 in an unfolded state may be connected to the box portion 6802 by the connectors 6820 of the carrier 6800. To be more specific, the connector 6820 may be arranged on the accommodating body and/or the canopy assembly, and may be a magnetic connector including a pair of magnets that are able to attract to each other, with one of the magnets arranged on the short side of the upper periphery 6802A of the box portion 6802, and the other of the magnets arranged on the short side of the lower periphery 6804A of the canopy portion 6804. In this manner, the canopy portion 6804 may be attached to the box portion 6802 with such magnetic attraction. In order to avoid the protection apparatus 6801 from impeding or obstructing the connection between the canopy portion 6804 and the box portion 6802, the plate-like body 6803 may be formed with an opening or a recess (or a groove) corresponding to the connectors 6820.

With reference to FIGS. 76A to 76C, various designs for the plate-like body of the protection apparatus. As shown in FIG. 76A, the plate-like body 6803A of the travel device 68A is formed with a vertical through opening, or a vertical recess (e.g., a sliding groove, or a notch) 68031 to allow the plate-like body 6803A to be mounted in a direction from the top to the bottom of the carrier 6800A, so that the plate-like body 6803A including the protection apparatus is attached to the carrier 6800A. When the protection apparatus including the plate-like body 6803A is attached to the carrier 6800A, the connector 6820A may be disposed within the top of the vertical recess 68031 or may be disposed at an end of the vertical recess 68031 adjacent to a central position of the protection apparatus. On the periphery of the top of the vertical recess 68031, it is possible to arrange a magnetic strip or tape 68031A that is corresponding to the magnetic connector 6820A of the carrier 6800A. In this manner, the protection apparatus may be attached to the carrier 6800A with the magnet attractive force between the magnet strip or tape 68031A of the plate-like body 6803A and the magnetic connector 6820A of the carrier 6800A. It should be noted that the "connector 6820" and the "vertical recess 68031" in this embodiment may be used as an example or a part of the "coupling apparatus", and the "magnetic connector 6820A" and the "magnetic strip or tape 68031A" may also be used as an example or a part of the "coupling apparatus".

Alternatively, as shown in FIG. 76B, the plate-like body 6803B of the travel device 68B is formed with a horizontal through opening, or a horizontal recess (e.g., a sliding groove, or a notch) 68033 to allow the plate-like body 6803B to be mounted in a direction from the right to the left of the carrier 6800B, so that the plate-like body 6803B including the protection apparatus is attached to the carrier 6800B. When the protection apparatus including the plate-like body 6803B is attached to the carrier 6800B, the connectors 6820B may be located within the right end of the horizontal recess 68033. On the periphery of the right end of the horizontal recess 68033, it is possible to arrange the magnetic strip or tape 68033A that is corresponding to the magnetic connector 6820B of the carrier 6800B. In this manner, the protection apparatus may be attached to the carrier 6800B with the magnet attractive force between the magnet strip or tape 68033A of the plate-like body 6803B and the magnetic connector 6820B of the carrier 6800B.

Alternatively, as shown in FIG. 76C, the plate-like body 6803C of the travel device 68C is formed with a central through hole 68035 of a closed periphery, and the magnetic strip or tape 68035A is arranged on the periphery of the opening 68035. When the protection apparatus including the plate-like body 6803C is attached to the carrier 6800C, the connectors 6820C may be located within the central through hole 68035. In this manner, the plate-like body 6803C may be loaded to the inside of the vehicle from the door in the longitudinal direction A, and the protection apparatus may be attached to the carrier 6800C with the magnet attractive force between the magnet strip or tape 68035A of the plate-like body 6803C and the magnetic connector 6820C of the carrier 6800C.

### Ninth embodiment of the second aspect

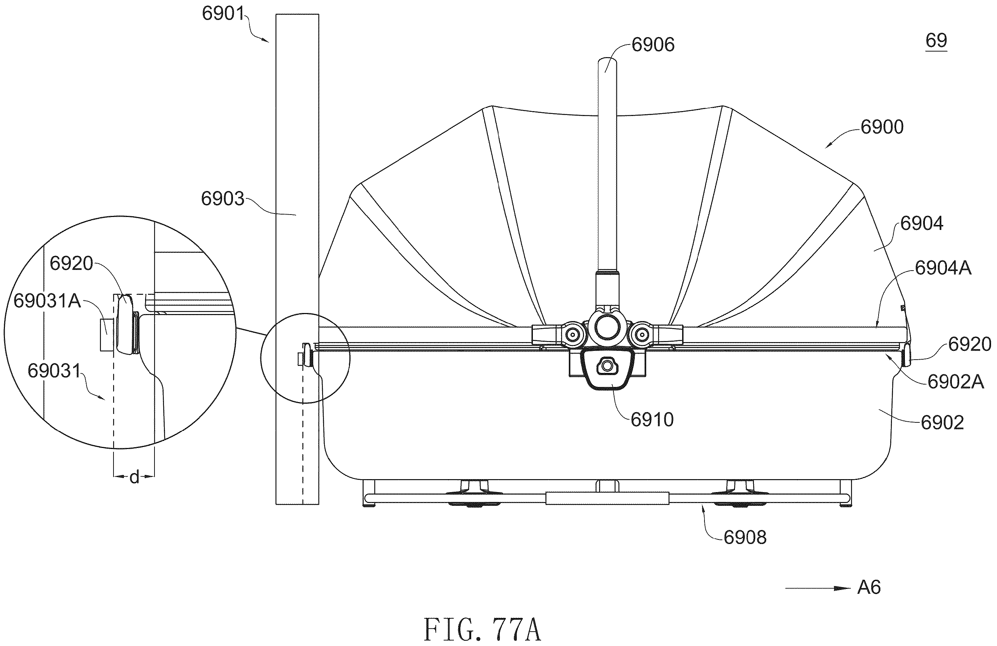

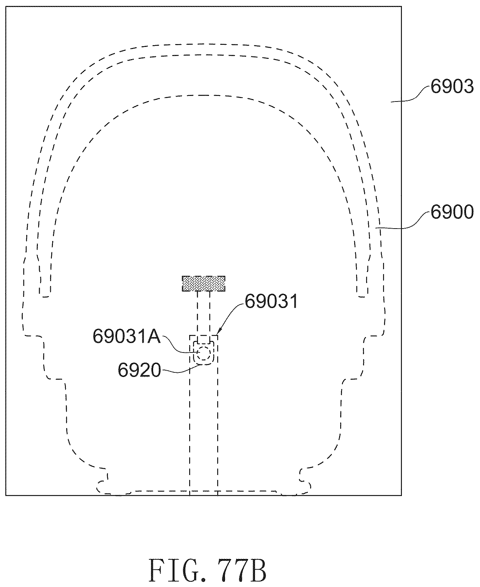

Referring to FIG. 77A and FIG. 77B. FIG. 77A schematically shows a travel device 69 according to a ninth embodiment of the second aspect of the present disclosure, and FIG. 77B is a schematic side view showing the protection apparatus attached to the carrier of the travel device of FIG. 77A. The travel device 69 includes a carrier 6900, and a protection apparatus 6901 attached to the carrier 6900 to provide improved impact resistance to the carrier 6900. The carrier 6900 has a structure and a configuration similar to those of the carriers as mentioned, including the box portion 6902 with the buckle assembly 6910, the canopy portion 6904 detachably attached to the box portion 6902 with the buckle assembly 6910, the carrying handle 6906 detachably and pivotably connected to opposite sides of the box portion 6902, and the bracket assembly 6908 connected to the outer bottom of the box portion 6902. The canopy portion 6904 may be attached to the box portion 6902 by the magnetic attraction of the connectors 6920 arranged on the short sides of the box portion 6902 when unfolded. Also, in order to avoid the protection apparatus 6901 from impeding or obstructing the connection between the canopy portion 6904 and the box portion 6902, the plate-like body 6903 may be formed with an opening or a recess corresponding to the connectors 6920.

In this embodiment, the plate-like body 6903 is formed with a recess 69031 corresponding to the connectors 6920 instead of the above-mentioned through holes 68031, 68033 and 68035. The depth d of the recess 69031 is dimensioned to allow the connector 6920 to be unimpededly located therein when the protection apparatus 6901 is attached to the carrier 6900. On the top of the recess 69031, it is possible to arrange a magnetic connector 69031A that is corresponding to the magnetic connector 6920 of the carrier 6900. In this manner, the protection apparatus 6901 may be attached to the carrier 6900 by the magnet attractive force between the magnetic connector 69031A of the plate-like body 6903 and the magnetic connector 6920 of the carrier 6900. It should be noted that the "connector 6920" and the "opening or recess" in this embodiment may be used as an example or a part of the "coupling apparatus", and the "magnetic connector 6920" and the "magnetic connector 69031A" may also be used as an example or a part of the "coupling apparatus".

### Tenth embodiment of the second aspect

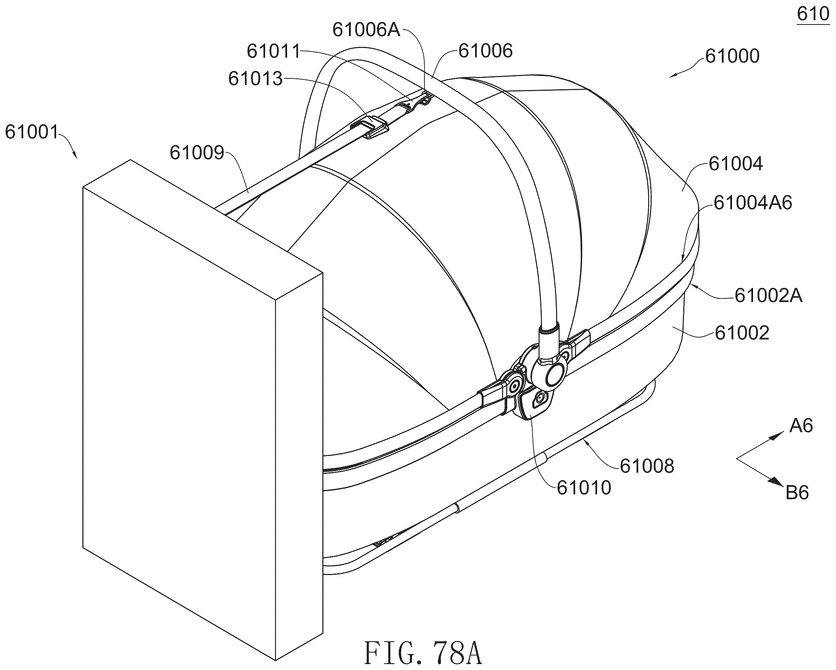

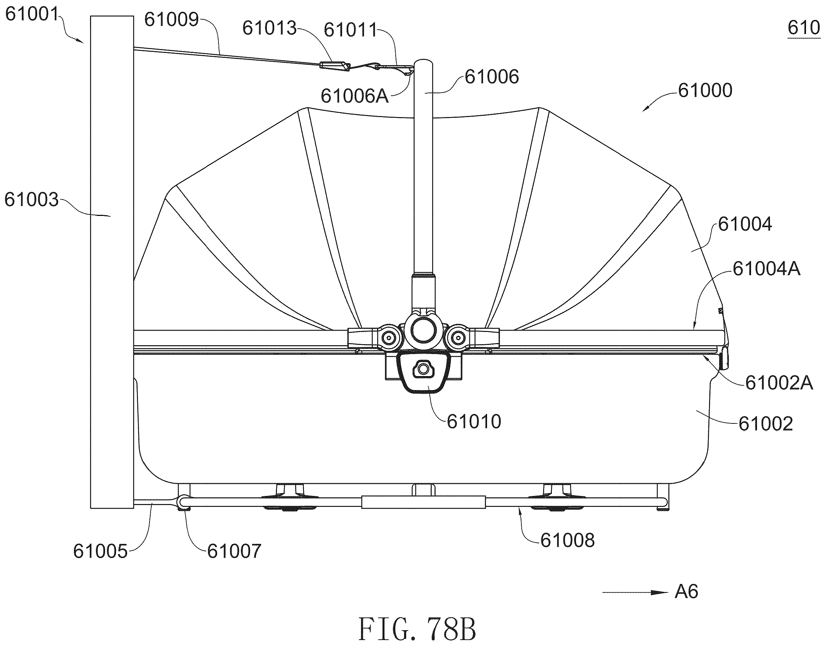

Referring to FIGS. 78A and 78B, a travel device 610 according to a tenth embodiment of the second aspect of the present disclosure is schematically shown. FIG. 78A is a perspective view of the travel device 610, and FIG. 78B is a side view of the travel device 610. The travel device 610 includes a carrier 61000, and a protection apparatus 61001 attached to the carrier 61000 to provide improved impact resistance to the carrier 61000. The carrier 61000 has a structure and a configuration similar to those of the carriers as mentioned, including the box portion 61002 with the buckle assembly 61010, the canopy portion 61004 detachably attached to the box portion 61002, the carrying handle 61006 detachably and pivotably connected to opposite sides of the box portion 61002, and the bracket assembly 61008 connected to the outer bottom of the box portion 61002.

Alternatively or additionally, in this embodiment, the protection apparatus 61001 may be attached to the carrier 61000 with a securing strap 61009 that is connected to the upper portion of the plate-like body 61003 and extends outwardly therefrom. Optionally, the plate-like body 61003 may be covered with a cloth for the ease of being connected with the securing strap 61009. In more specific, as shown in FIG. 78B, one end of the securing strap 61009 is connected to the upper portion of the plate-like body 61003 of the protection apparatus 61001, and the securing strap 61009 extends and is connected to the carrying handle 61006 in the longitudinal direction A6 of the carrier 61000. Specifically, the carrying handle 61006 is provided with a connecting portion 61006A, and the connecting portion 61006A is, for example, a ring and provided at a middle position of the carrying handle 61006. The securing strap 61009 is provided with a connection member 61011 (for example a hook) at its distal end, and is connected to the connecting portion 61006A of the carrying handle 61006 by the connection member 61011. Optionally, the securing strap 61009 is provided with a secure member 61013, such as an adjusting buckle and a ladder lock, such that the length of the securing strap 61009 is fixed after adjustment. In an example, the secure member 61013 may include a length adjuster, or be constructed as a length adjuster, for adjusting the length of the securing strap 61009.

In this embodiment, the carrier 61000 may be supported and protected in a relatively stable manner by the connection between the plate-like body 61003 and the carrying handle 1006 in addition to the optional connection of the coupling member 61005 to the bracket assembly 61008 through the coupling portion 61007. Furthermore, it should be noted that the "guiding member 6605", the "connecting portion 61006A" and/or the "connection member 61011" in this embodiment may be used as an example or a part of the "coupling apparatus".

### Eleventh embodiment of the second aspect

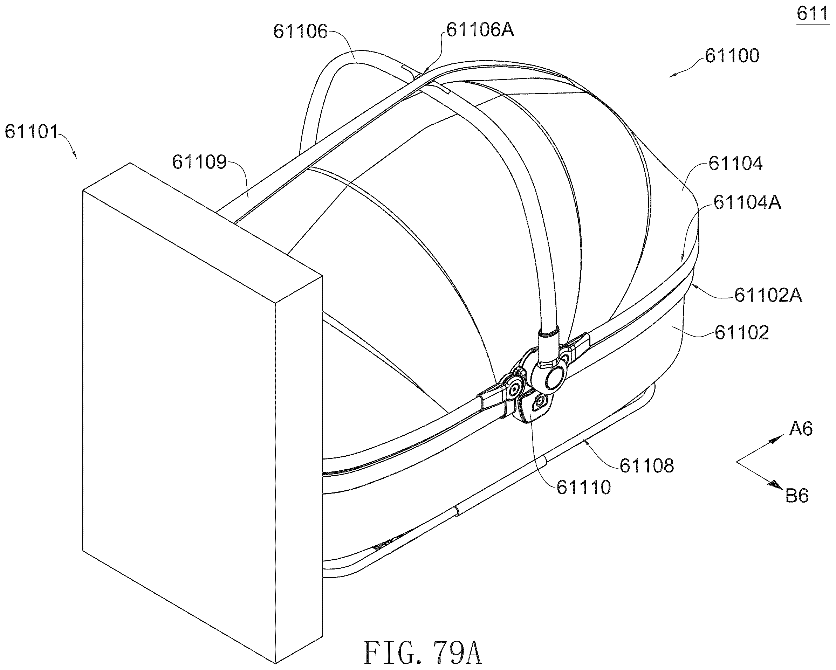

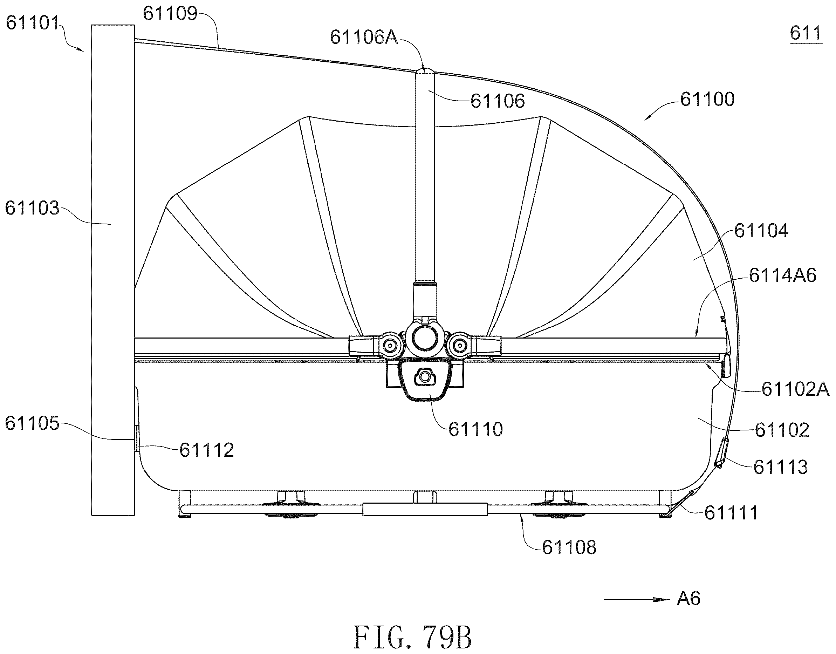

Referring to FIGS. 79A and 79B schematically showing a travel device 611 according to an eleventh embodiment of the second aspect of the present disclosure, in which FIG. 79A is a perspective view of the travel device 611, and FIG. 79B is a side view of the travel device 611. The travel device 611 includes a carrier 61100, and a protection apparatus 61101 attached to the carrier 61100 to provide improved impact resistance to the carrier 61100. The carrier 61100 has a structure and a configuration similar to those of the carriers as mentioned, including the box portion 61102 with the buckle assembly 61110, the canopy portion 61104 detachably attached to the box portion 61102, the carrying handle 61106 detachably and pivotably connected to opposite sides of the box portion 61102, and the bracket assembly 61108 connected to the outer bottom of the box portion 61102.

Alternatively or additionally, in this embodiment, the protection apparatus 61101 may be attached to the carrier 61100 with a securing strap 61109 that is connected to the upper portion of the plate-like body 61103 and extends outwardly therefrom. In more specific, as shown in FIG. 79B, one end of the securing strap 61109 is connected to the upper portion of the plate-like body 61103 of the protection apparatus 61101, and the protection device 61109 extends toward and over the carrying handle 61106 in the longitudinal direction A6 of the carrier 61100. Specifically, the carrying handle 61106 has a recess 61106A formed on the middle portion thereof to receive and keep the securing strap 61109 passing therethrough. The securing strap 61109 is provided with a connection member 61111 (e.g., a hook) that passes over the carrying handle 61106 at a distal end thereof, and is connected to the bracket assembly 61108 by the connection member 61111 at an outer bottom of the carrier 61102. Specifically, the protection device 61101 is provided on one side of the carrier 61100 in the longitudinal direction A6, and the connection member 61111 is connected to the other side of the carrier 61100 in the longitudinal direction, e.g., to the outer bottom of the carrier 61100 at the other side, such as the bracket assembly 61108. Optionally, the securing strap 61109 may be provided with a secure member 61113, such that the length of the securing strap 61109 is fixed after adjustment. In an example, the secure member 61113 may include a length adjuster, or be constructed as a length adjuster, such as an adjusting buckle, for adjusting the length of the securing strap 61109.

In this embodiment, the carrier 61100 may be supported and protected in a relatively stable manner by the securing strap 61109 in addition to the optional connection between the first attaching portion 61112 and the second attaching portion 61105. It should be noted that connection structures such as the "securing strap 61109", the "connection member 61111" and/or the "recess 61106A" in this embodiment may be used as an example or a part of the "coupling apparatus".

### Twelfth embodiment of the second aspect

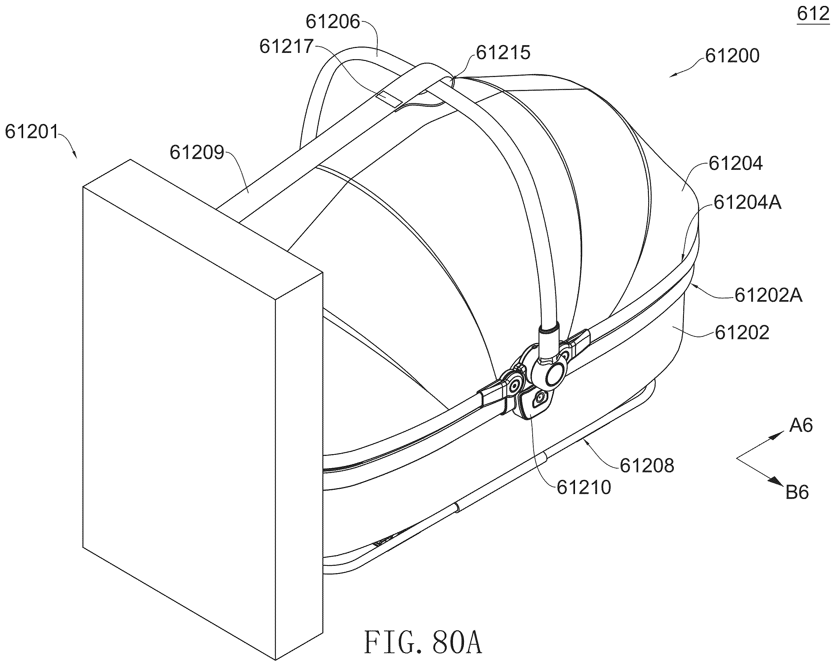

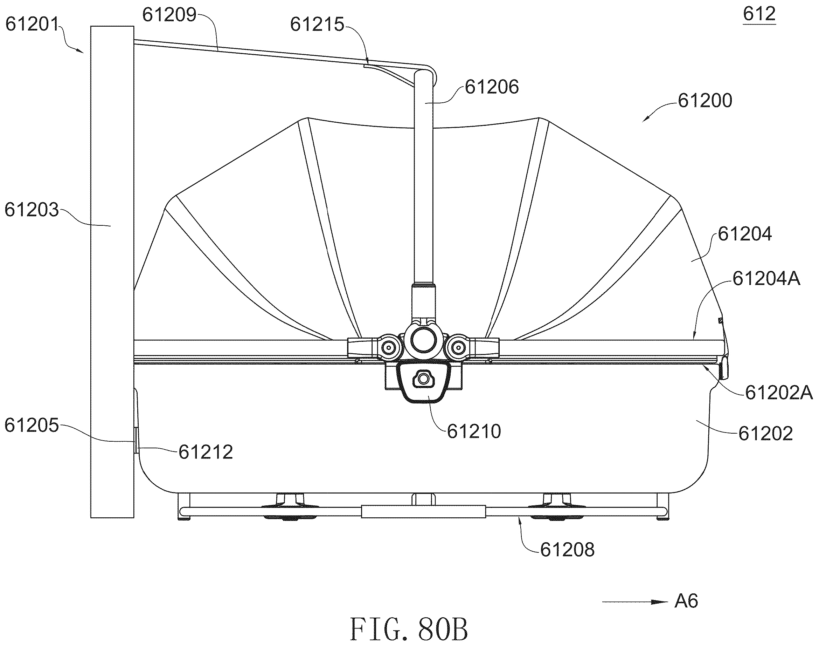

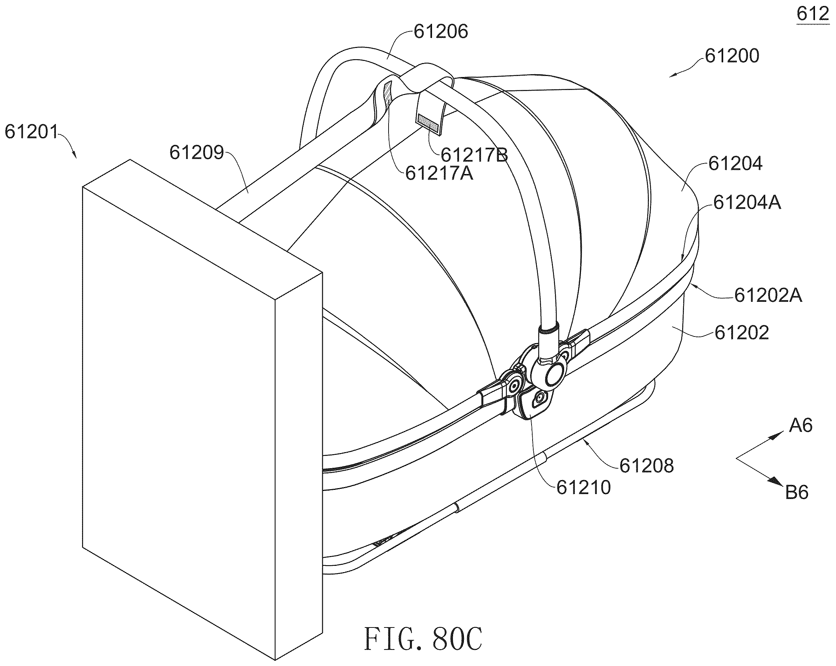

Referring to FIGS. 80A to 80C, a travel device 612 according to a twelfth embodiment of the second aspect of the present disclosure is schematically shown. FIG. 80A is a perspective view of the travel device 612, FIG. 80B is a side view of the travel device 612, and FIG. 80C is a perspective view of the travel device 612 to show the details of the securing strap thereof.

The travel device 612 includes a carrier 61200, and a protection apparatus 61201 attached to the carrier 61200 to provide improved impact resistance to the carrier 61200. The carrier 61200 has a structure and a configuration similar to those of the carriers as mentioned, including the box portion 61202 with the buckle assembly 61210, the canopy portion 61204 detachably attached to the box portion 61202, the carrying handle 61206 detachably and pivotably connected to opposite sides of the box portion 61202, and a bracket assembly 61208 connected to the outer bottom of the box portion 61202. Similar to the travel device 610 and the travel device 611, in this embodiment, the protection apparatus 61201 may be alternatively or additionally attached to the carrier 61200 by a securing strap 61209 extending outwardly from the upper portion of the plate-like body 61203. The difference is that, in this embodiment, the securing strap 61209 extends toward the carrying handle 61206 and over the carrying handle 61206 in the longitudinal direction A6 of the carrier 61200, and then reverses in a direction toward the plate-like body 61203. The securing strap 61209 thus forms a loop 61215 by the attaching portion 61217, so as to loop at the carrying handle 61206 for connection. In this embodiment, the attaching portion 61217 may be provided by a hook and loop tape (or a so-called hook and loop fastener, a so-called touch fastener and a so-called magic tape) including a hook portion 61217A and a loop portion 61217B (and vice versa) as shown in FIG. 12C.

In this embodiment, the carrier 61200 may be supported and protected in a relatively stable manner by the connection between the plate-like body 61203 and the carrying handle in addition to the optional connection between the first attaching portion 61212 and the second attaching portion 61205. It should be noted that connection structures such as the "securing strap 61209" and/or the "attaching portion 61217" in this embodiment may be used as an example or a part of the "coupling apparatus".

### Thirteenth embodiment of the second aspect

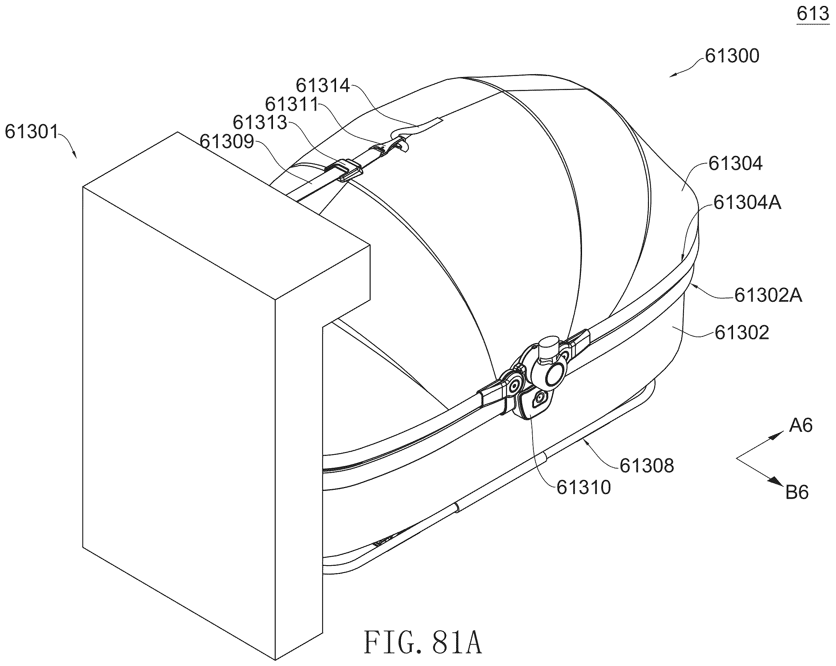

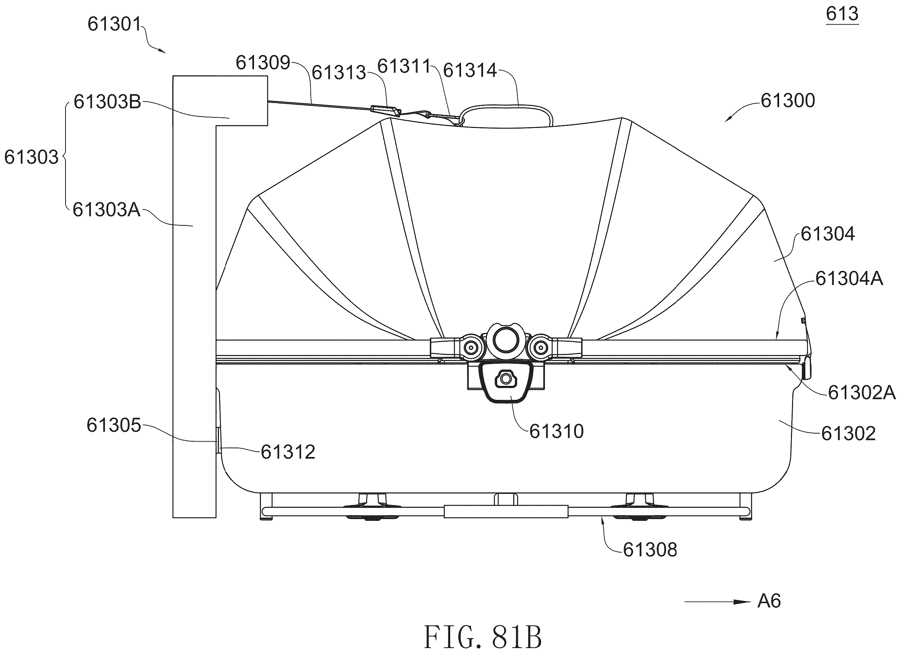

Referring to FIGS. 81A and 81B, a travel device 613 according to a thirteenth embodiment of the second aspect of the present disclosure is schematically shown. FIG. 81A is a perspective view of the travel device 613, and FIG. 81B is a side view of the travel device 613. The travel device 613 includes the carrier 61300 and the protection apparatus 61301 attached to the carrier 61300 to provide a better impact resistance for the carrier 61300. The carrier 61300 has a structure and a configuration similar to those of the carriers as mentioned, including the box portion 61302 with the buckle assembly 61310, the canopy portion 61304 detachably attached to the box portion 61302, the carrying handle detachably and pivotably connected to opposite sides of the box portion 61302, and the bracket assembly 61308 connected to the outer bottom of the box portion 61302. It should be noted that, for the clarity purpose, the carrying handle of the carrier is omitted in FIGS. 81A and 81B.

Similar to the travel device 610, in this embodiment, the protection apparatus 61301 is alternatively or additionally attached to the carrier 61300 by a securing strap 61309 extending outwardly from the upper portion of the protection apparatus 61301. As shown in FIG. 81B, the carrier 61300 includes an additional handle 61314 that is attached to the top of the canopy portion 61304. One end of the securing strap 61309 is attached to the upper portion of the protection device 61301, and the other end thereof extends toward the handle 61314 and connected by a connection member 61311 (e.g., a hook) to the handle 61314, rather than a carrying handle attached to the opposite sides of the box portion 61302. In addition, the strap 61309 is optionally provided with a secure member 61313, such that the length of the securing strap 61309 is fixed after adjustment. In an example, the secure member 61313 may include a length adjuster, or be constructed as a length adjuster, such as an adjusting buckle, for adjusting the length of the securing strap 61309.

Alternatively or additionally, the body 61303 of the protection device 61301 is inverted L-shape. That is, the body 61303 made of the energy-absorbing or shock-absorbing material is constructed by a first portion 61303A and a second portion 61303B that are integral with each other at a right angle. As shown in FIG. 81B, the second portion 61303B of the body 61303 extends from the top of the first portion 61303A in the longitudinal direction A6 and/or the horizontal direction (i.e., in a direction extending along a short side of the carrier 61300) of the carrier 61300 at a height slightly higher than the top of the canopy portion 61304, and one end of the securing strap 61309 is attached to an end face of the second portion 61303B. That is, the first portion 61303A extends in a height direction of the carrier 61300 and is provided on the side surface of the carrier 61300, while the second portion 61303B extends from the first portion 61303A in the longitudinal direction A6 at the top of the carrier 61300. In this manner, the other end of the securing strap 61309 attached to the handle 61304 can provide relatively sufficient and stable support for the carrier 61300.

In this embodiment, the carrier 61300 may be supported and protected in a relatively stable manner by the connection between the body 61303 of the protection apparatus 61301 and the handle 61314 on the top of canopy portion 61304 in addition to the optional connection between the first attaching portion 61312 and the second attaching portion 61305. It should be noted that connection structures such as the "securing strap 61309", the "connection member 61311" and/or the "secure member 61313" in this embodiment may be used as an example or a part of the "coupling apparatus".

### Fourteenth embodiment of the second aspect

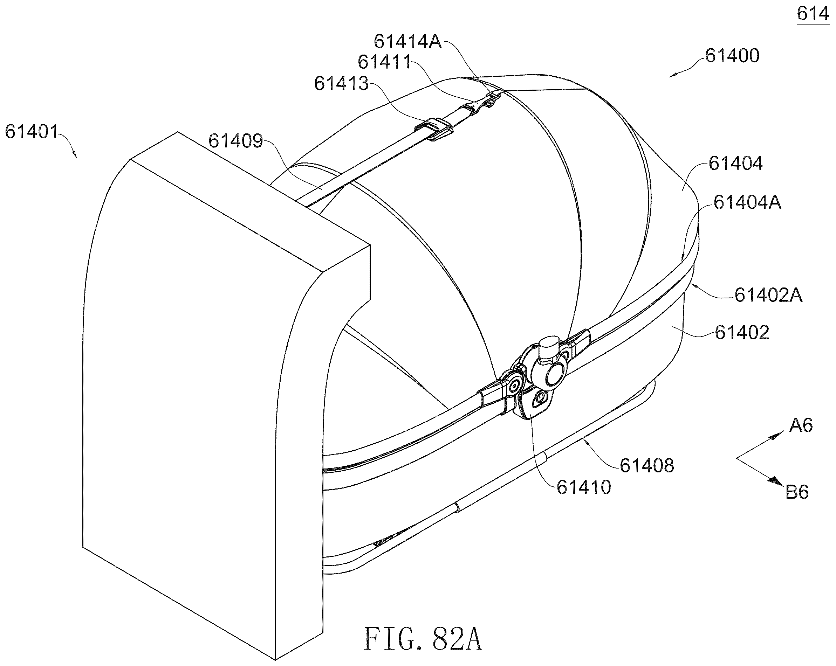

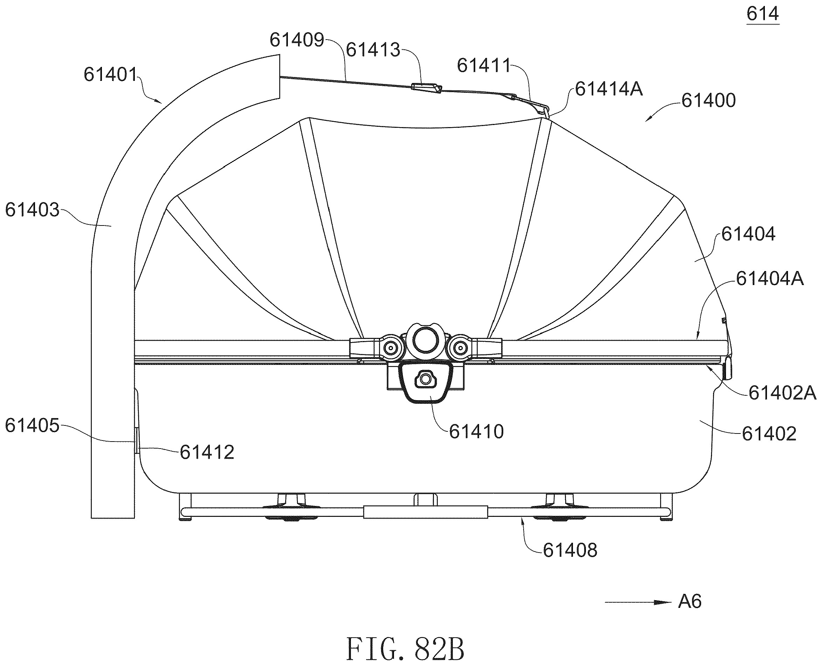

Referring to FIGS. 82A and 82B schematically showing a travel device 614 according to the fourteenth embodiment of the second aspect of the present disclosure, in which FIG. 82A is a perspective view of the travel device 614, and FIG. 82B is a side view of the travel device 614.

The travel device 614 includes a carrier 61400, and a protection apparatus 61401 attached to the carrier 61400 to provide improved impact resistance to the carrier 61400. The carrier 61400 has a structure and a configuration similar to those of the carriers as mentioned, including the box portion 61402 with the buckle assembly 61410, the canopy portion 61404 detachably attached to the box portion 61402, the carrying handle detachably and pivotably connected to opposite sides of the box portion 61402, and the bracket assembly 61408 connected to the outer bottom of the box portion 61402. In FIGS. 82A and 82B, for the clarity purpose, the carrying handle of the carrier is omitted.

Similar to the travel device 613, alternatively or additionally, in this embodiment, the protection apparatus 61401 is attached to the carrier 61400 by a securing strap 61409 extending outwardly from the upper portion of the protection apparatus 61401. The difference is that, in this embodiment, the connection portion of the first portion 61403A and the second portion 61403B is chamfered, instead of at a right angle. In addition, one end of the securing strap 61409 is attached to the upper portion of the protection device 61401 and a distal end (the other end) thereof is connected by the attachment member 61411 to the connecting portion 61414A (disposed directly on the canopy portion 61404), rather than to the carrying handle attached to the opposite sides of the box portion 61402. In addition, the strap 61409 is optionally provided with a secure member 61413, such that the length of the securing strap 61409 is fixed after adjustment.

In this embodiment, the carrier 61400 may be supported and protected in a relatively stable manner by the connection between the body 61403 of the protection apparatus 61401 and the connecting portion 61414A on the top of canopy portion 61404 in addition to the optional connection between the first attaching portion 61412 and the second attaching portion 61405. It should be noted that connection structures such as the "securing strap 61409", the "connection member 61411" and/or the "secure member 61413" and/or the "first attaching portion 61412" and/or the "second attaching portion 61405" in this embodiment may be used as an example or a part of the "coupling apparatus".

According to the present disclosure, the securing strap as shown may be an elastic strap or a non-elastic strap. It is worthy to note that, the elastic strap may help in absorbing the impact or shock caused by side collision or by a sudden change in vehicle speed or direction while traveling, while the non-elastic strap may help in dispersing the impact and increasing the strength for safety.

According to the present disclosure, the body of the protection apparatus is made of an energy-absorbing or shock-absorbing material. Examples of such material include, but not limited to, Expandable Polyethylene (EPE), Expandable Polypropylene (EPP), Expandable Polystyrene (EPS), Expandable Polyolefins (EPO), memory foam material such as Polyurethane (PU) Foam, silicone and latex. The body of the protection apparatus may be a single layer structure, or multi-layer structure. The body of the protection apparatus may be formed as various shapes in cross section.

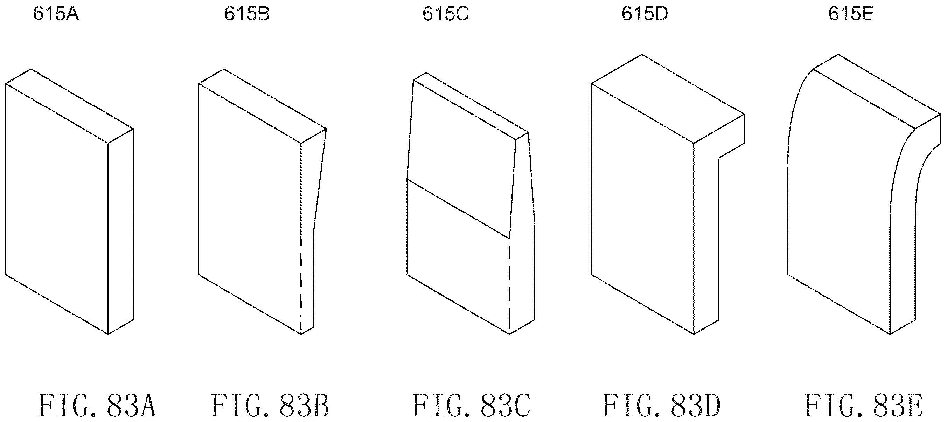

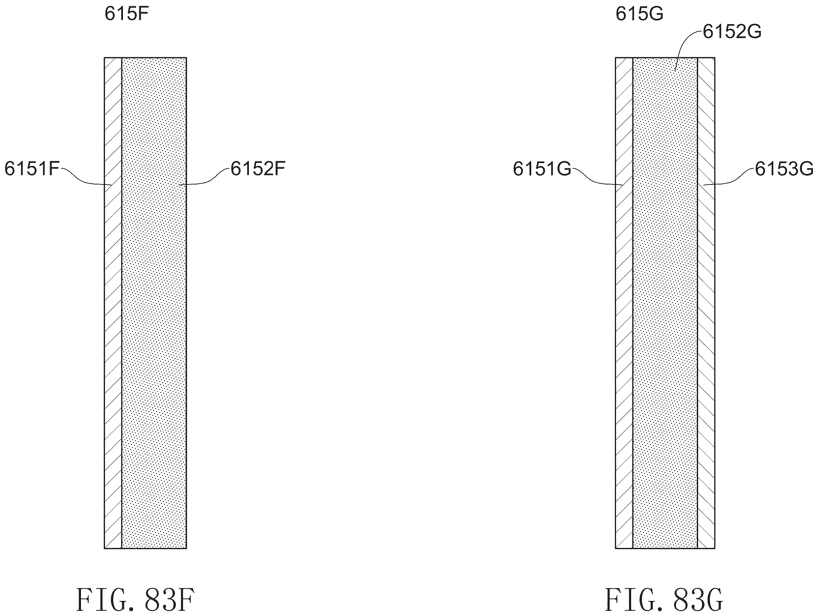

With reference to FIGS. 83A to 83G, various designs for the plate-like body according to the present disclosure are illustrated. The plate-like bodies 615E are shown as having respective shapes in cross section. It should be noted that the "section" herein refers to a section of the plate-like body when viewed from the front side of the carrier. For example, as shown in FIG. 83A, the section of the plate-like body 615A may be in a rectangular shape. As another example, as shown in FIGS. 83B and 83C, the plate-like body 615B and/or 615C may consist of two portions having different thicknesses (i.e., corresponding to widths of the cross-section). A first portion has a constant thickness and a second portion extends from one end (e.g., an upper end) of the first portion and has a thickness that gradually increases or decreases from the first portion. Optionally, the second portion with the gradual thickness may be constructed such that one surface is flush with one surface of the first portion and the other surface is at an angle to the other surface of the first portion (see FIG. 83B); alternatively, the second portion may be constructed such that the two surfaces are at angles to the two surfaces of the first portion, respectively (see FIG. 83C). In another example, the first portion and/or the second portion may have a shape with variable thickness other than a gradual thickness. As another example, as shown in FIG. 83D, the plate-like body 615D has a first portion and a second portion that are perpendicular or at an angle to each other. Optionally, the first portion and the second portion may each have a constant thickness. The thickness of the first portion may be equal to the thickness of the second portion but is not limited thereto, i.e., it may also be less than or greater than the thickness of the second portion. In addition, the first portion and/or the second portion may have a variable thickness. For example, as shown in FIG. 83E, at least a portion of the section of the plate-like body 615E may be curved, e.g., have an arched corner, etc. However, it should be understood that, in the absence of conflict in structure, the shapes of the plate-like bodies in the embodiments of the second aspect of the present application may be combined or replaced with each other.

The plate-like body 615F is shown as having a two-layer structure, while the plate-like body 615G is shown as having a three-layer structure. In these embodiments, the plate-like bodies 615F and 615G are made by the lamination of more than one layer, and thus provide a composite softness to absorb and release the shock or impact caused by side collision or by a sudden change in vehicle speed or direction. That is, the relatively soft material may help in absorbing the impact or shock caused by side collision or by a sudden change in vehicle speed or direction, while the relatively rigid material may help in dispersing the impact and increasing the strength for safety. In view of this, the relatively rigid material may be arranged as outer layers of a plate-like body having a multi-layer structure, with the relatively soft material being sandwiched thereby or being an inner layer. Taking the plate-like body 15F as shown in FIG. 15F as an example, the layer 6151F may be made of a relatively rigid material and serve as an outer layer arranged on a side near the rear door of a vehicle, while the layer 6152F may be made of the relatively soft material and serve as an inner layer arranged on a side near the carrier. Taking the plate-like body 615G as an example, the layer 6152G made of the relatively soft material is sandwiched by the layers 6151G and 6153G. Such three-layer structure provides the plate-like body with the improved strength and impact resistance, and thus provides the protection apparatus with the improved strength and impact resistance.

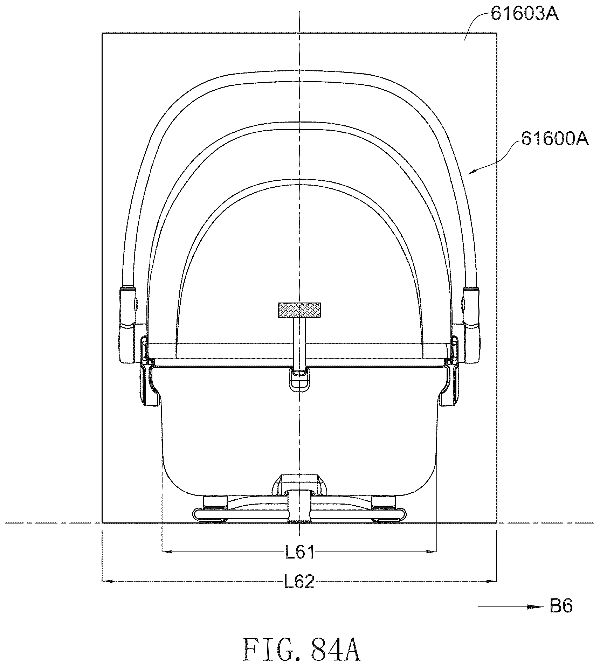

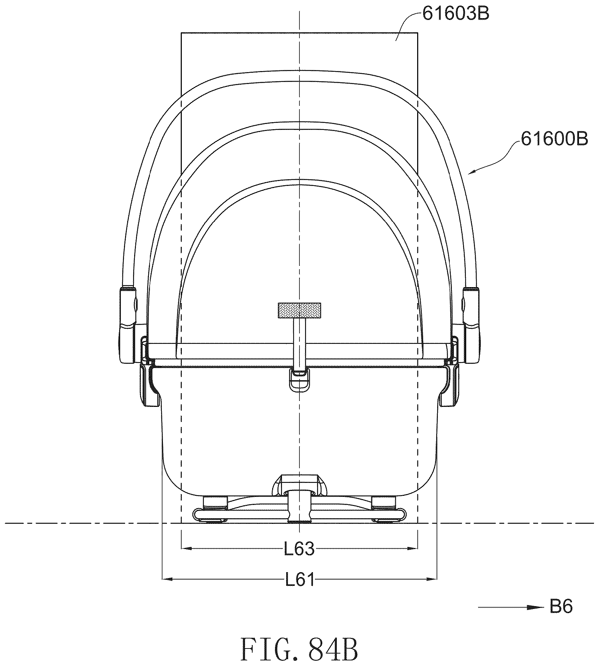

With reference to FIGS. 84A and 84B, the plate-like bodies 61603A and 61603B of different dimensions according to the present disclosure are illustrated. As shown, the carriers 61600A and 61600B have a determined width L61 defined by the box portion in the transverse direction B6. In the embodiment of FIG. 84A, a width L62 of the plate-like body 61603A is greater than the width L61 of the carrier 61600A, while in the embodiment of FIG. 84B, the width L63 of the plate-like body 61603B is less than the width L61 of the carrier 61600B. It is worth to note that, in both cases, the central axis (i.e. an axis vertically passing through the respective midpoint of the width L62, L63) of the respective plate-like body 61603A, 61603B and the central axis (i.e. an axis vertically passing through the midpoint of the width L61) of the carrier 61600A, 61600B will coincide.

### Fifteenth embodiment of the second aspect

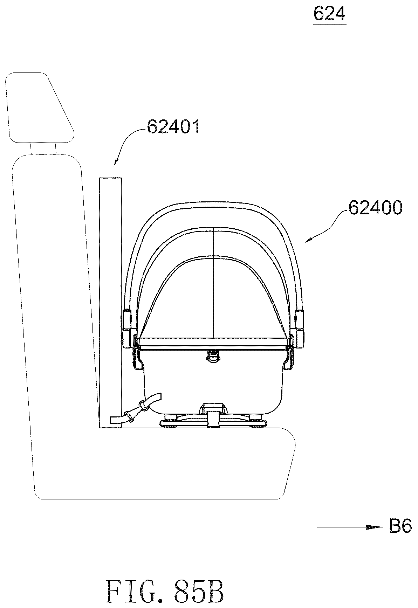

Referring to FIGS. 85A and 11B, a travel device 624 according to a fifteenth embodiment of the second aspect of the present disclosure is schematically shown. FIG. 85A is a perspective view of the travel device 624, and FIG. 85B is a side view of the travel device 624. The travel device 624 includes a carrier 62400, and a protection apparatus 62401 attached to the carrier 62400 at a side surface thereof. The carrier 62400 has a structure and a configuration similar to those of the carrier 6100 as shown in FIG. 69, including the box portion 62402, the canopy portion 62404 detachably attached to the box portion 62402 by the buckle assembly 62410, the carrying handle 62406 detachably and pivotably connected to opposite sides of the box portion 62402, and the bracket assembly 62408 connected to the outer bottom of the box portion 62402. The box portion 62402 may be rectangular-shaped when viewed from the top thereof, defined by a pair of opposite long sides extending in the longitudinal direction A6 and a pair of opposite short sides extending in the transverse direction B6. The protection apparatus 62401 is constructed mainly of a plate-like body 62403 made of an energy-absorbing or shock-absorbing material.

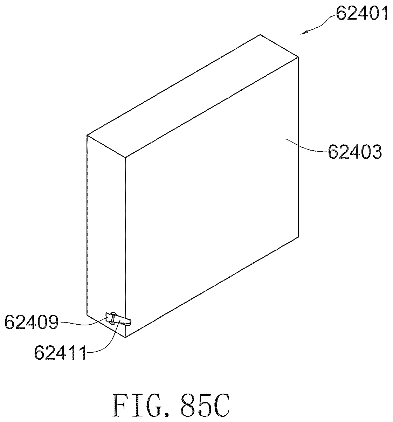

Alternatively or additionally, in this embodiment, the protection apparatus 62401 may be attached to the carrier 62400 at the side surface corresponding to one of the long sides. In more specific, the protection apparatus 62401 may be attached to the carrier 62400, with being sandwiched by the long side of the carrier 62400 and the seat backrest 630 when the travel device 624 is installed in a vehicle. In this embodiment, the protection apparatus 62401 is attached to the carrier 62400 by a securing strap 62409 connected with and extending from the protection apparatus 62401, and having a connection member 62411, for example a hook, on a distal end. Similarly, the plate-like body 62403 (shown in FIG. 85C) of the protection apparatus 62401 may be optionally covered with a cloth for the ease of being connected with the securing strap 62409. The securing strap 62409 may be connected to the connecting portion 62414A of the carrier 62400 with the connection member 62411 at the distal end thereof. In this embodiment, the connecting portion 62414A is configured on a position on the outside of a side wall of the box portion 62402, corresponding to that of the securing strap 62401 and the connection member 62411 of the protection apparatus 62409. The connecting portion 62414A may be directly disposed on the outside of the side wall of the box portion 2402, or connected to the side wall of the box portion 2402 by a connecting strap 62414B connecting and extending from the side wall of the box portion 2402, as shown in FIG. 85A. It should be noted that connection structures such as the "securing strap 62409", the "connection member 62411" and/or the connecting portion 62414A and/or the "connecting strap 62414B" in this embodiment may be used as an example or a part of the "coupling apparatus".

### Sixteenth embodiment of the second aspect

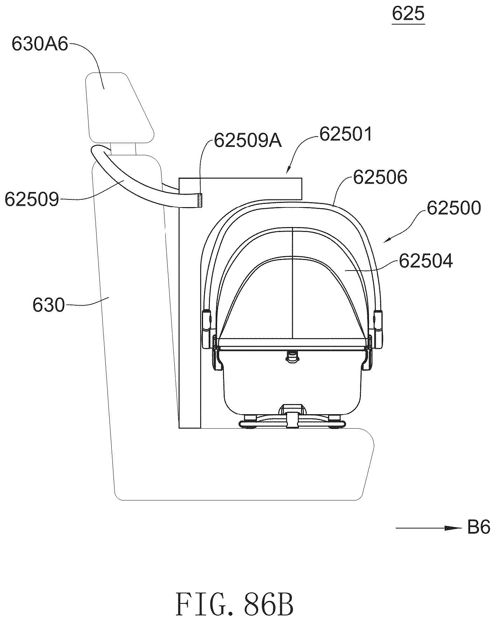

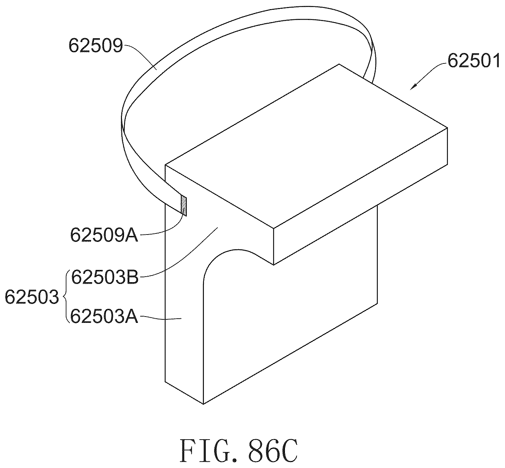

Referring to FIGS. 86A and 86C, a travel device 625 according to a sixteenth embodiment of the second aspect of the present disclosure is schematically shown. FIG. 86A is a perspective view of the travel device 625, and FIG. 86B is a side view of the travel device 625. The travel device 625 includes a carrier 62500 and a protection apparatus 62501 attached to the carrier 62500 at a side of the carrier 62500. The carrier 62500 has a structure and a configuration similar to those of the carrier 6100 as shown in FIG. 69, including the box portion 62502, the canopy portion 62504 detachably attached to the box portion 62502 by the buckle assembly 62510, the carrying handle 62506 detachably and pivotably connected to opposite sides of the box portion 62502, and the bracket assembly 62508 connected to the outer bottom of the box portion 62502. The box portion 62502 may be rectangular-shaped when viewed from the top thereof, defined by a pair of opposite long sides extending in the longitudinal direction A6 and a pair of opposite short sides extending in the transverse direction B6. The protection apparatus 62501 is constructed mainly of a plate-like body 62503 made of an energy-absorbing or shock-absorbing material.

Similar to the embodiment as shown in FIGS. 85A to 85C, in this embodiment, the protection apparatus 62501 may be attached to the carrier 62500 at the side surface of the carrier 62500 corresponding to one of the short sides. In more specific, the protection apparatus 62501 may be attached to the carrier 62500, being sandwiched by the long side of the carrier 62500 and the seat backrest 630 when the travel device 625 is installed in a vehicle. As shown in FIG. 86C, the body 62503 of the protection apparatus 62501 is inverted L-shape. That is, the body 62503 made of the energy-absorbing or shock-absorbing material is constructed by a first portion 62503A and a second portion 62503B that are integral with each other at a right angle. As shown in FIGS. 86A and 86B, the second portion 62503B of the body 62503 extends from the top of first portion 62503A in a horizontal direction and a transverse direction B6 of the carrier 62500, at a slightly higher level than the erected carrying handle 62506, or the top of canopy portion 62504 (when the carrying handle 62505 is removed or pivoted to a horizontal position), to cover at least a part of the top of the carrier 62500.

Additionally or alternatively, in this embodiment, referring to FIGS. 86A to 86C, the protection apparatus 62501 is alternatively or additionally installed in the vehicle by a securing strap 62509 looped over the headrest 630A of the vehicle. In more specific, the securing strap 62509 may be connected to the upper portion of the protection apparatus 62501 at its one end 62509A, and extend outwardly therefrom. The securing strap 62509 may, for example, extend from the front side of the seat 630 (i.e., a position where the protection apparatus 62501 is provided) through one side (i.e., a side connected to the end 62509A) of the protection apparatus 62501 (specifically, the body 62503 thereof) toward the rear side of the seat 630, then be wrapped around the headrest 630A (e.g., may be wrapped around the headrest 630A at a position connected to the seat 630) from the back side of the seat 630, and then extend toward the front side of the seat 630 (i.e., extend from the opposite side of the headrest 630A to the front side of the headrest 630), so as to be connected to another side of the body 62503 of the protection apparatus 62501 (not shown) by the other end of the securing strap 62509 (i.e., an end away from the end 62509A). In this manner, the protection apparatus 62501 may be firmly attached to the seat 630 in addition to the attachment to the carrier 62500. Optionally, the strap 62509 may be provided with a secure member (not shown), such that the length of the securing strap 62509 is fixed after adjustment. It should be noted that a connection structure such as the "securing strap 62509" in this embodiment may be used as an example or a part of the "coupling apparatus".

Additionally or alternatively, in this embodiment, the contour of the inner face of the protection apparatus 62501 may be corresponding to that of the carrier 62500. In more particular, the portion of the protection apparatus 62501 that the first portion 62503A is connected to the second portion 62503B has a dome-shaped inner face (a face facing toward the carrier 62500 when installed in the vehicle), such that the contour of the inner face of the protection apparatus 62501 is conforming to the contour of the canopy portion 62504 of the carrier 62500. In this way, protective apparatus 62501 can help prevent pets from getting injured in accidents or side impacts. Although in this embodiment, the protection apparatus 62501 is illustrated as having the dome-shaped inner face; it should be noted that, the contour of the inner face of the protection apparatus 62501 is not limited thereto.

It should be noted that, the protection apparatus 62401 and 62501 may be constructed in a similar way to those as shown in FIGS. 83A to 83G. In more specific, the body 62403, 62503 of the protection apparatus 62401, 62501 may be made of an energy-absorbing or shock-absorbing material. Examples of such material include, but not limited to, Expandable Polyethylene (EPE), Expandable Polypropylene (EPP), Expandable Polystyrene (EPS), Expandable Polyolefins (EPO), memory foam material such as Polyurethane (PU) Foam, silicone and latex, may be in a single-layer structure, or a multi-layer structure, and may be formed as various shapes in section. For example, the body 62403, 62503 of the protection apparatus 62401, 62501 may be made of the energy-absorbing or shock-absorbing material (such as EPP or EPS) sandwiched by two plates made of polyethylene (PE) having the respective thickness of 61mm. Additionally and alternatively, the body 62403, 62503 of the protection apparatus 62401, 62501 may be optionally covered with a cloth for the ease to be connected with the securing strap 62409, 62509. According to this embodiment, by attaching the protection apparatus to the carrier at a position between the carrier and the seat of the vehicle, it is possible to protect the head of the pet contained in the carrier from being the injured in an accident or by a side collision. The pet may be carried in the vehicle with improved safety.

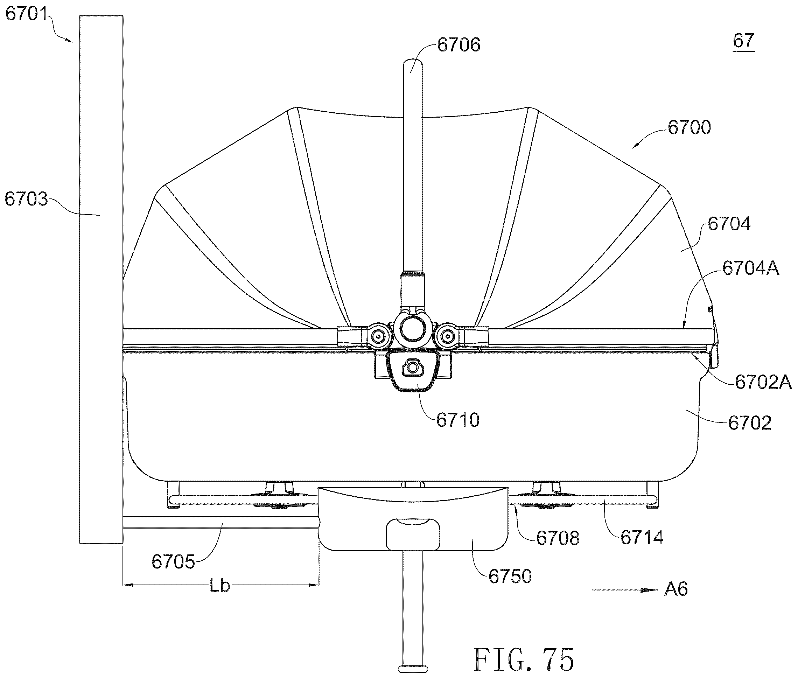

It should be noted that, in the embodiments as shown in FIGS. 85A to 85C, and FIGS. 86A to 86C, the protection apparatus 62401, 62501 is attached to the carrier 62400, 62500 to be installed in the vehicle by the securing strap 62409, 62509. However, the present disclosure is not limited thereto. According to the present invention, the protection apparatus may be attached to the carrier at the side surface corresponding to one of the long sides in a manner similar to the embodiments as shown in FIGS. 69 to 82A and 82B, and the carrier includes the coupling apparatuses of various configurations as above mentioned, such as the attaching portions and/or the attaching members.

According to the present disclosure, it is possible to further improve the impact resistance of the carrier by modifying the structure of the canopy portion of the carrier. Details will be illustrated in various embodiments of a third aspect of the present disclosure. In the absence of conflict in structure, embodiments of this aspect may also include any one structure or a combination of structures of embodiments of the first aspect and/or the second aspect.

### First embodiment of the third aspect

Referring to FIG. 87, a side view of a travel device carrier 61700 according to the first embodiment of the third aspect of the second aspect of the present disclosure is schematically shown. The carrier 61700 has a structure and a configuration similar to those of the carriers in any embodiments of the second aspect as mentioned above, including the box portion 61702 with the buckle assembly 61710, the canopy portion 6174 detachably attached to the box portion 61702, the carrying handle 61706 detachably and pivotably connected to opposite sides of the box portion 61702 by the pivot shafts 61762, and the bracket assembly 61708 connected to the outer bottom of the box portion 61702.

In this embodiment, the canopy portion 61704 is constructed mainly by a pair of U-shaped frames 61742 and a plurality of U-shaped support rods 61746 (also referred to as a "U-shaped bracket") spaced apart from each other. The cover 61744 is connected to these brackets 61742 and support rods 61746 by, for example, binding or by adhesive bonding, the canopy portion 6174 provides a shielding effect for the animal in the box portion 61702 when in an unfolded state. The U-shaped frames 61742 are connected to the cover 61744 (also referred to as a "canopy") at the lower periphery of the canopy portion 6174, and are pivotally connected to the opposite sides of the box portion 61702 with the respective pivot shafts 61748, so as to bring the canopy portion 6174 to be folded or unfolded. The canopy portion 6174 may be secured to the opposite short sides of the box portion 61702 by magnetic connectors 61720 when unfolded to cover the box portion 61702.

In this embodiments, the canopy portion 174 is divided into two halves, each of which includes two support rods 61746. The cover 61744 is divided into a total of five corresponding areas 61744A to 61744E (i.e., 61744A, 61744B, 61744C, 61744D, 61744E). By increasing the number of the support rods 61746, the canopy portion 6174 may be provided with a support for the improvement in impact resistance. As an alternative, each half of the canopy portion 6174 may include at least two support rods, such as but not limited to three, four, or five support rods. It should be noted that a cover having these areas may be formed by "sheets" or "sheet-like members" joined to each other, with each sheet or each sheet-like member forming an area; alternatively, the cover may be an integrally formed structure, with each of those areas forming a part of the cover.

### Second embodiment of the third aspect

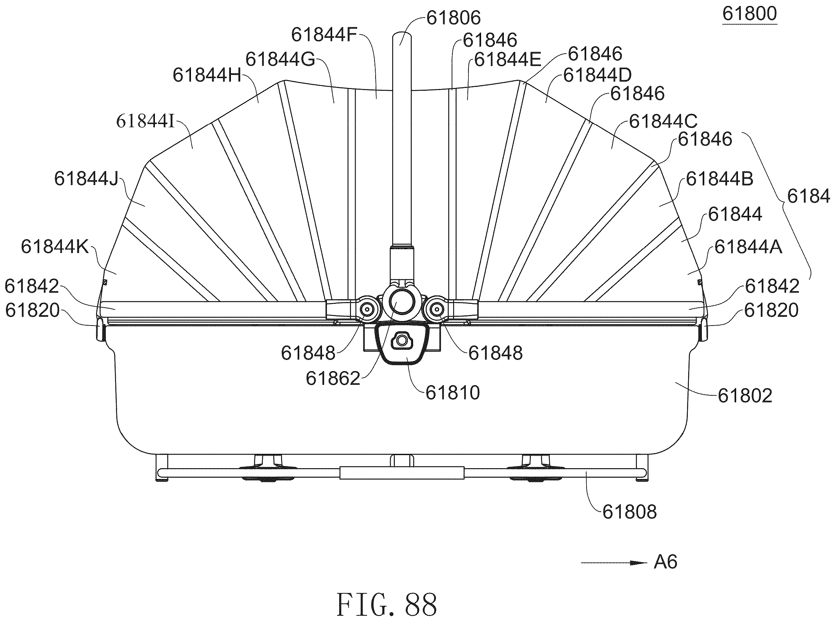

Referring to FIG. 88, a side view of a travel device carrier 61800 according to the second embodiment of the third aspect of the second aspect of the present disclosure is schematically shown. The carrier 61800 has a structure and a configuration similar to those of the carrier 61700 as shown in FIG. 87, including the box portion 61802 with the buckle assembly 61810, the canopy portion 6184 detachably attached to the box portion 61802, the carrying handle 61806 detachably and pivotably connected to opposite sides of the box portion 61802 by the pivot shafts 61862, and the bracket assembly 61808 connected to the outer bottom of the box portion 61802. The canopy portion 6184 also has a structure and a configuration similar to those of the canopy portion 6174 in addition to the number of support rods 61846, i.e., includes the U-shaped frames 61842 connected to the box portion 61802 by the respective pivot shafts 61848 as well as the support rods 61846 for supporting the cover 61844. In this embodiment, each half of the canopy portion 6184 includes five support rods 61846. That is, the canopy portion 6184 is provided with a total of ten support rods 61846 such that the cover 61844 is divided into eleven areas 61844A to 61844K (i.e., 61844A, 61844B, 61844C, 61844D, 61844E, 61844F, 61844G, 61844H, 61844I, 61844J, 61844K). With increasing in the number of support rods, the canopy portion 6184 and thus the carrier 61800 may be provided with a better supporting for impact resistance compared to the carrier 61700.

The support rods may be selected as a strip-shaped flexible member made of plastic or a hard part (such as metal), which is not limited thereto. Preferably, some or all of the support rods 61746, 61846 may be made of the energy-absorbing or shock-absorbing material as mentioned, so as to provide the carrier with a better impact resistance to prevent the animal therein from being impacted or injured due to the side collision or a sudden change in vehicle speed or direction.

### Third embodiment of the third aspect

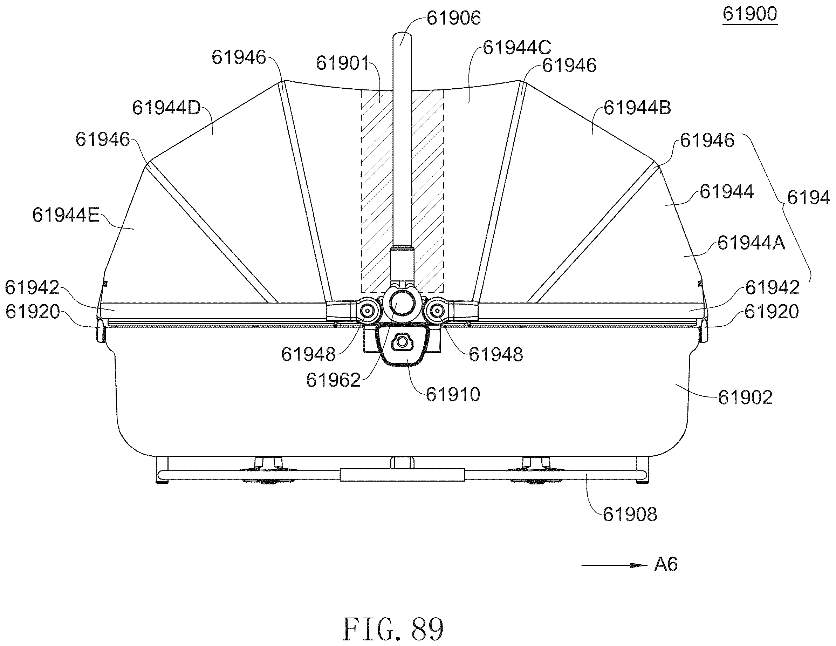

Referring to FIG. 89, a travel device carrier 61900 according to the third embodiment of the third aspect of the present disclosure is schematically shown. The carrier 61900 has a structure and a configuration similar to those of the carrier 61700 as shown in FIG. 87, including the box portion 61902 with the buckle assembly 61910, the canopy portion 6194 detachably attached to the box portion 61902, the carrying handle 61906 detachably and pivotably connected to opposite sides of the box portion 61902 by the pivot shaft 61962, and the bracket assembly 61908 connected to the outer bottom of the box portion 61902. The canopy portion 6194 also has a structure and a configuration similar to those of the canopy portion 6174, including the U-shaped frames 61942 connected to the box portion 61902 by the respective pivot shafts 61948 as well as the four support rods 61946 for supporting the cover 61944. Similar to the canopy portion 6174, the cover 61944 of canopy portion 6194 is divided into five areas 61944A to 61944E (i.e., 61944A, 61944B, 61944C, 61944D, 61944E).

The carrier 61900 is different from the carrier 61700 in that, in this embodiment, the cover 61944 is embedded with a protection apparatus 61901 in the central area 61944C thereof. The protection apparatus 61901 may be formed as a plate or sheet made of the energy-absorbing or shock-absorbing material as mentioned, so as to provide the carrier with a better impact resistance to prevent the animal carried therein from being impacted or injured due to the side collision or a sudden change in vehicle speed or direction.

### Fourth embodiment of the third aspect

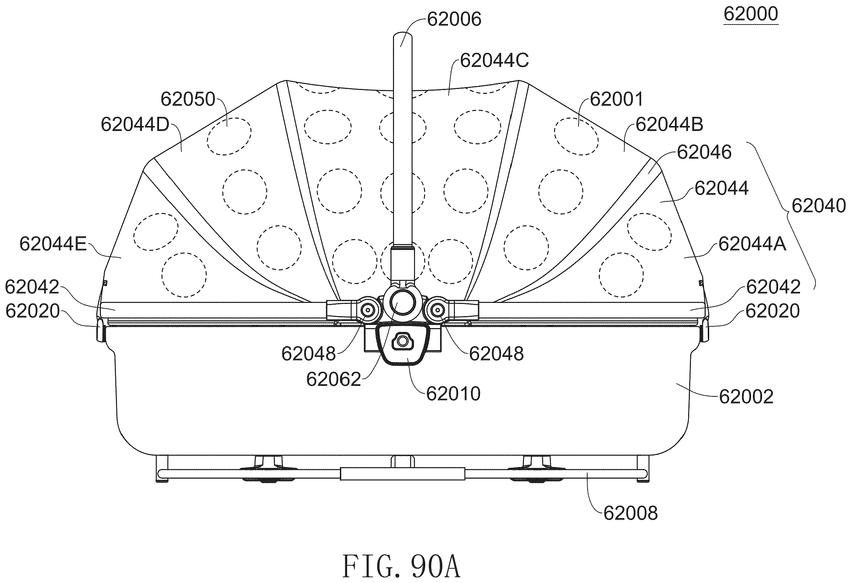

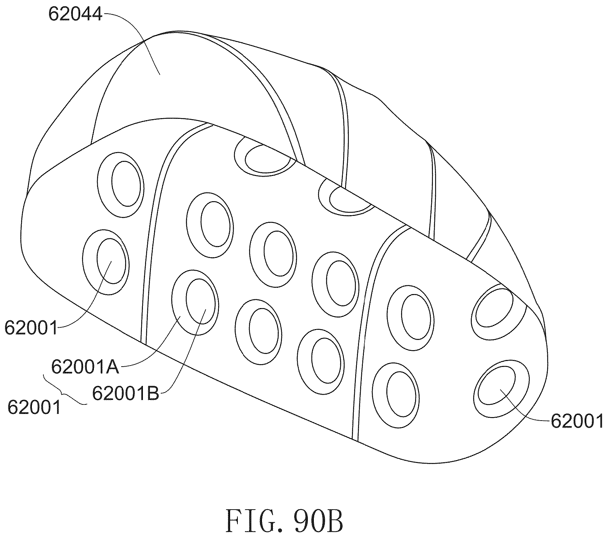

Referring to FIGS. 90A and 90B, FIG. 90A schematically shows a carrier 62000 according to a further embodiment of the present disclosure, and FIG. 90B schematically shows the arrangement of protection apparatuses of this embodiment.

The carrier 62000 has a structure and a configuration similar to those of the carrier 61700 as shown in FIG. 87, including the box portion 62002 with the buckle assembly 62010, the canopy portion 62040 detachably attached to the box portion 62002, the carrying handle 62006 detachably and pivotably connected to opposite sides of the box portion 62002 by the pivot shafts 62062, and the bracket assembly 62008 connected to the outer bottom of the box portion 62002. The canopy portion 62040 also has a structure and a configuration similar to those of the canopy portion 6174, including the U-shaped frames 62042 connected to the box portion 62002 by the respective pivot shafts 62048 as well as the four support rods 62046 for supporting the cover 62044. Similar to the canopy portion 6174, the cover 62044 of canopy portion 62040 is divided into five areas 62044A to 62044E (i.e., 62044A, 62044B, 62044C, 62044D, 62044E).

The carrier 62000 is different from the carrier 61700 in that, in this embodiment, the canopy portion 62040 includes a plurality of protection apparatuses 62001 attached on the outer and/or inner surface of the areas 62044A to 62044E. The protection apparatuses 62001 may be formed as plates or sheets made of the energy-absorbing or shock-absorbing material as mentioned, so as to provide the carrier with a better impact resistance to prevent the animal carried therein from being impacted or injured due to side collision or a sudden change in vehicle speed. As shown in FIG. 90B, the protection apparatuses 62001 are shown as attached on the inner surface of the cover 62044 by binding or by adhesive bonding. However, in the areas 62044A to 62044E, it is also possible to have these protection apparatuses 62001 attached on the outer surface of the cover 62044, or embedded in the cover 62044.

Further, the protection apparatus 62001 as shown in FIG. 90B is constructed as a two-layer structure including a first layer 62001A and a second layer 62001B. The protection apparatus 62001 is made of a selected combination of the energy-absorbing or shock-absorbing materials as mentioned, such that the second layer 62001B (i.e., facing or adjacent to the accommodating space) facing and adjacent to the animal in the box portion (not shown) is relatively soft compared to the first layer 62001A, for providing a comfortable experience for the animal.

Alternatively, the protection apparatus may be formed with a shape or a configuration corresponding to the cover 62044 of the canopy portion 62040. For example, the protection apparatus may have a single-piece structure fully corresponding to the contour of the canopy portion 62040, such that the protection apparatus may be fully attached, e.g. by binding or by adhesive bonding, on the inner surface and/or the outer surface of the cover 62044, or embedded in the cover 62044. Preferably, the protection apparatus is formed with a two-piece structure, with each corresponding to one half of the canopy portion 62040, such that the protection apparatus is foldable with the folding of the canopy portion.

### Fifth embodiment of the third aspect

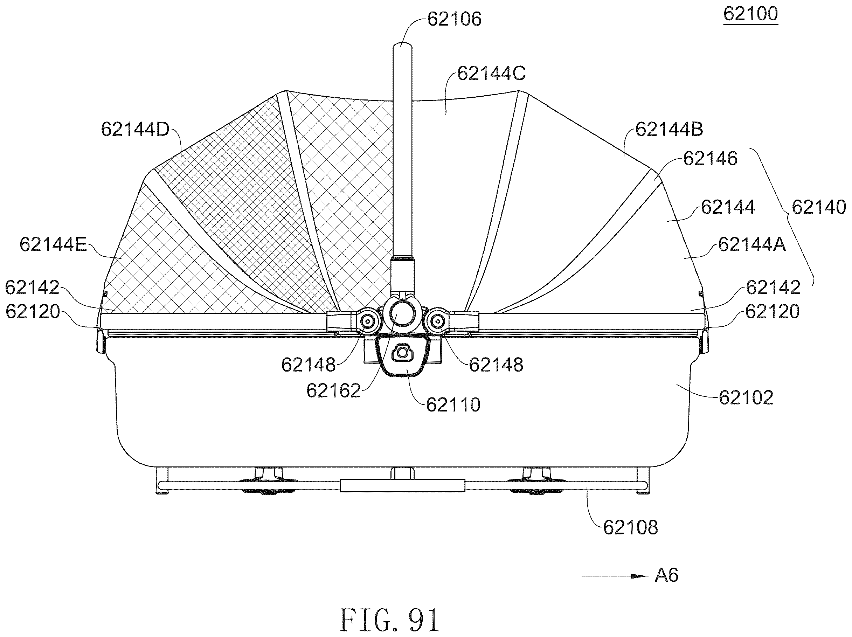

Referring to FIGS. 91 to 93, FIGS. 91 to 93 are side views of carriers according to the fifth embodiment of the third aspect of the present disclosure, schematically showing various designs for canopies of the carriers. The carriers 62100, 62200 and 62300 have structures and configurations similar to those of the carrier 61700 as shown in FIG. 87, except for the design and modification for the respective cover of the canopy portion.

As shown in FIG. 91, the carrier 62100 includes the box portion 62102 with the buckle assembly 62110, the canopy portion 62140 detachably attached to the box portion 62102, the carrying handle 62106 pivotably and detachably connected to opposite sides of the box portion 62102 by pivot shafts 62162, and the bracket assembly 62108 connected to the outer bottom of the box portion 62102, which are similar to those of the carriers as mentioned. The canopy portion 62140 also has a structure and a configuration similar to those of the canopy portions as mentioned, including the U-shaped frames 62142 connected to the box portion 62102 with the respective pivot shafts 62148 as well as the four support rods 62146 for supporting the cover 62144. Similar to the canopy portion 6174, the cover 62144 of canopy portion 62140 is divided into five areas 62144A to 62144E (i.e., 62144A, 62144B, 62144C, 62144D, 62144E).

In this embodiment, some of the areas 62144A to 62144E of the cover 62144 are made of a grid fabric (i.e., a "mesh fabric") to enhance the circulation of air inside and outside the carrier 62100. The grid fabrics also allow the user (for example, the animal owner) to observe the animal, i.e., forming the "observation area", to check the status of the animal in the carrier. In other embodiments, these areas may also be made of a transparent material (e.g. a plastic film) and optionally provided with a breathable structure. It is worth noting that the fabric of a relatively small grid size always provides a relatively high strength compared to that of a relatively large grid size. In view of this, it is possible to select the grid size of the fabric according to the actual application, and optionally, the different areas of the cover 62144 may be made of grid fabrics of different grid sizes.

In light of practical experience, the animal in the carrier will move in a specific direction when encountering the collision or being hit by an external object or vehicle due to inertia. Therefore, it is preferred in the present disclosure to arrange the fabric of a relatively small grid size, and thus of a relatively high strength, in an area of the cover facing such direction, so as to provide better protection to the animal when the animal is thrown (moves/hits) toward the fabric during the collision or hitting. In the embodiment as shown in FIG. 91, the left half of the cover 62144 is made of the grid fabric, and the second area upward from the U-shaped frames 62142, i.e. the area 62144D between the area 62144E and the area 62144C, is made of the fabric of relatively small grid size to support the animal carried in the carrier with a relatively high strength, so as to protect the animal in a relatively safe manner. Empirically, an external hitting or side collision will give the carrier an impact force such that the animal carried in the carrier will move in a direction toward the area 62144D in the embodiment shown by FIG. 91. Therefore, the arrangement of the fabric of a relatively small grid size may protect the animal in the carrier when the animal is "flying (moving/hitting)" toward this area.

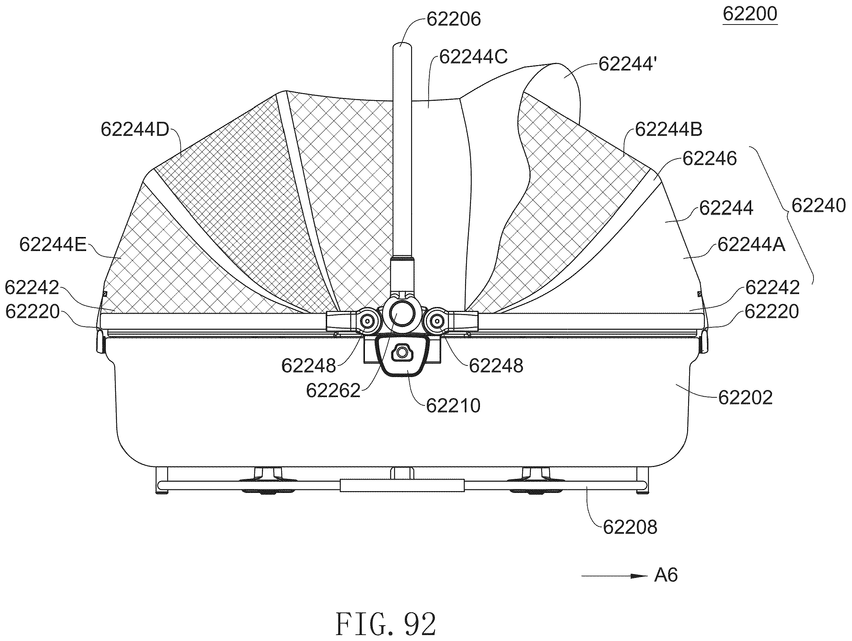

As shown in FIG. 92, the carrier 62200 includes the box portion 62202 with the buckle assembly 62210, the canopy portion 62240 detachably attached to the box portion 62202, the carrying handle 62206 pivotably and detachably connected to opposite sides of the box portion 62202 by the pivot shafts 62262, and the bracket assembly 62208 connected to the outer bottom of the box portion 62202, which are similar to those of the carriers as mentioned. The canopy portion 62240 also has a structure and a configuration similar to those of the canopy portions as mentioned, including the U-shaped frames 62242 connected to the box portion 62202 with the respective pivot shafts 62248 as well as the four support rods 62246 for supporting the cover 62244. Similar to the canopy portion 6174, the cover 62244 of canopy portion 62240 is divided into five areas 62244A to 62244E (i.e., 62244A, 62244B, 62244C, 62244D, 62244E).

Similarly, some of the areas 62244A to 62244E of the cover 62244 are made of the grid fabric to enhance the circulation of air inside and outside the carrier 62200, and the different areas of the cover 62244 may be made of grid fabrics of different grid sizes. As shown in FIG. 92, at least the areas 62244B to 62244E are made of the grid fabric. The area 62244D between the area 62244E and the area 62244C is made of the fabric of relatively small grid size. Empirically, an external hitting or side collision will give the carrier an impact or a force such that the animal carried in the carrier will move in a direction toward the area 62244D in the embodiment shown by FIG. 92. Therefore, the arrangement of fabric of a relatively small grid size may protect the animal in the carrier when the animal is "flying (moving/hitting)" toward this area. Further, the area 62244B may be covered with a cloth 62244' (also served as a protective cover) and the internal of the box portion 62202 is revealed when the cloth is uncovered, thereby allowing the user or animal owner to check the status of the animal therein.

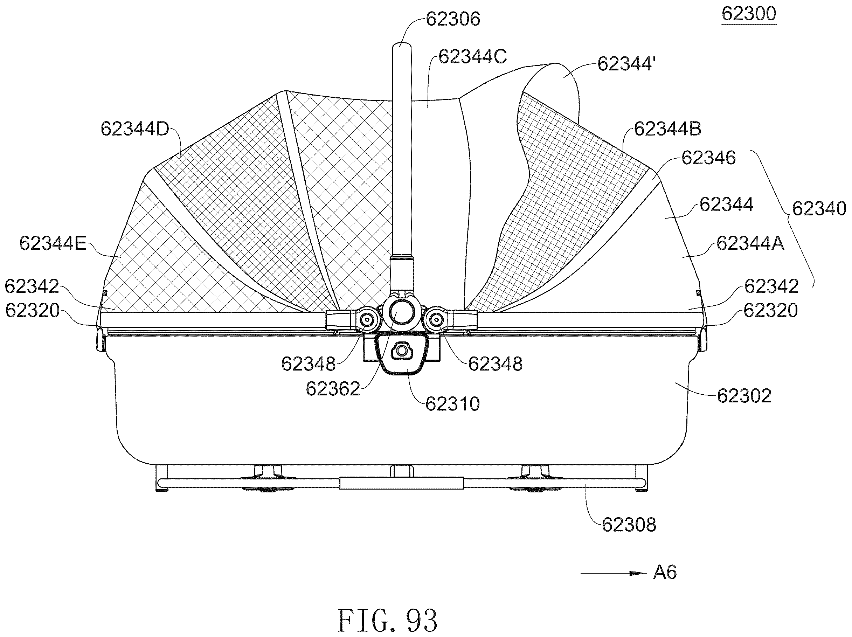

As shown in FIG. 93, the carrier 62300 includes the box portion 62302 with the buckle assembly 62310, the canopy portion 62340 detachably attached to the box portion 62302, the carrying handle 62306 pivotably and detachably connected to opposite sides of the box portion 62302 by the pivot shafts 62362, and the bracket assembly 62308 connected to the outer bottom of the box portion 62302, which are similar to those of the carriers as mentioned. The canopy portion 62340 also has a structure and a configuration similar to those of the canopy portions as mentioned, including the U-shaped frames 62342 connected to the box portion 62302 by the respective pivot shafts 62348 as well as the four support rods 62346 for supporting the cover 62344. Similar to the canopy portion 6174, the cover 62344 of canopy portion 62340 is divided into five areas 62344A to 62344E (i.e., 62344A, 62344B, 62344C, 62344D, 62344E).

Similarly, some of the areas 62344A to 62344E of the cover 62344 are made of the grid fabric to enhance the circulation of air inside and outside the carrier 62300, and the different areas of the cover 62344 may be made of grid fabrics of different grid sizes. As shown in FIG. 93, at least the areas 62344B to 62344E are made of the grid fabric. In this embodiment, the area 62344D sandwiched by the areas 62344E and 62344C, and the area 62344B sandwiched by the areas 62344A and 62344C are made of the same fabric of relatively small grid size. In this manner, it is possible to protect the animal in the carrier when the animal is "flying (moving/hitting)" in directions toward both areas 62344B and 62344D in the embodiment shown by FIG. 93. Further, the area 62344B may be covered with a cloth 62344' and the cloth 62344' maybe uncovered to reveal the internal of the box portion 62302, thereby allowing the user or animal owner to check the status of animal therein.

In addition to being attached to the carrier at the side surface of the carrier corresponding to one of the short sides, it is also possible to have the protection apparatus attached to the carrier at the side surface corresponding to one of the long sides, as the embodiments as shown in FIGS. 85A to 85C and FIGS. 86A to 86C, respectively.

A fourth aspect of the present disclosure also provides a carrier and an impact resistant material provided on the carrier, the specific structure of which will be described hereinafter in conjunction with the accompanying drawings. The "impact resistant material" in this aspect may also be referred to as a "impact resistant body (part)" or a "protection block (structure)", and may be considered as an example of a "protection device".

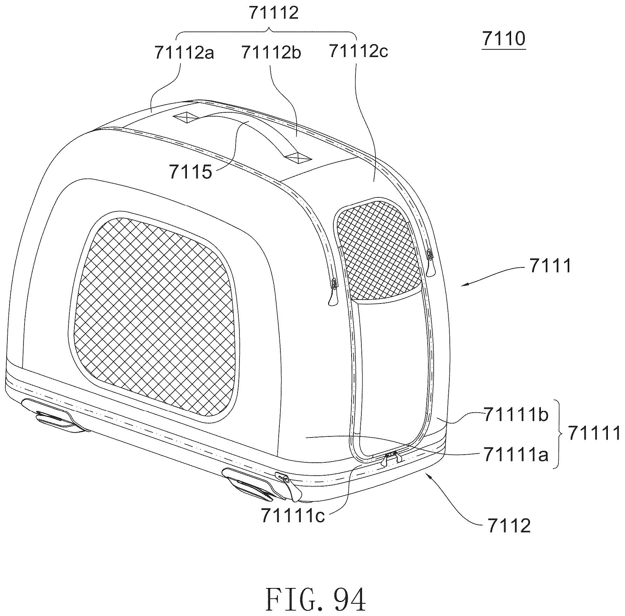

Referring to FIG. 94, FIG. 94 schematically shows a carrier 7110 according to a first embodiment of the fourth aspect of the present disclosure.

As shown in FIG. 94, the carrier of the first embodiment of this aspect includes a box body 7110. The box body 7110 includes a body 7111 and a bottom support member 7112. The body 7111 forms four side surfaces and a top surface of the box body 7110, and the bottom support member 7112 forms a bottom part of the box body 7110. In an embodiment, the body 7111 is detachably connected to the bottom support member 7112, and more specifically, disposed above the bottom support member 7112 to form an accommodating space for carrying a pet together with the bottom support member 7112.

The body 7111 may include a first support member and a second support member. In this embodiment, the first support member may be a side support member 71111, the second support member may be an upper support member 71112, and the side support member 71111 may be at least partially detachably connected to the upper support member 71112 by at least one connection assembly. The connection assembly may include mating structures respectively disposed on the side support member 71111 and the upper support member 71112, for example, the mating structures may be mutually engaged zipper structures, snap-fit structures, sliding buckle structures, hook-and-loop fasteners, hook-and-loop structures, etc. Optionally, soft connection structures are used.

In an example, the side support member 71111 may include a first sub-support member 71111a and a second sub-support member 71111b, the first sub-support member 71111a and the second sub-support member 71111b are disposed on two sides of the upper support member 71112 (e.g., symmetrically disposed relative to the upper support member 71112), and at least a part of the first sub-support member 71111a and at least a part of the second sub-support member 71111b may each be detachably connected to the upper support member 71112 by the second connection assembly. The first sub-support member 71111a and the second sub-support member 71111b of the side support member 71111 form two side surfaces of the body 7111, and the upper support member 71112 forms the top surface and at least a part of the other two side surfaces of the body 71111. Optionally, the first sub-support member 71111a and the second sub-support member 71111b are connected as one body by a connecting piece 71111c. For example, the first sub-support member 71111a and the second sub-support member 71111b are integrally formed with the connecting piece 71111c.

The upper support member 71112 may include three sheet-like members connected to each other and may be arched when connected with the side support member 71111. Specifically, the upper support member 71112 may include a first sheet-like member 71112a, a second sheet-like member 71112b, and a third sheet-like member 71112c. The first sheet-like member 71112a and the third sheet-like member 71112c form a part of the other two side surfaces of the body 7111, respectively, and the second sheet-like member 71112b forms a top surface of the body 7111. Optionally, the first sheet-like member 71112a and the third sheet-like member 71112c have a flexible structure (i.e., are bendable). In a specific example, the upper support member 71112 may have an integral structure, i.e., the three sheet-like members 71112a, 71112b, 71112c are formed as one body, for example, by means of a connection such as sewing. However, the present disclosure is not limited thereto, and the three sheet-like members may also be detachably connected to each other by flexible connection structures or the like.

In addition, as shown in FIG. 94, a carrying handle 7115 may be disposed on a top side of the upper support member 71112 (i.e., the second sheet-like member 71112b), e.g., disposed at a central position of the top side, for carrying the pet carrier. In an example, the carrying handle 7115 may be a flexible webbing. Optionally or alternatively, the carrying handle 7115 may also be formed of a rigid plastic.

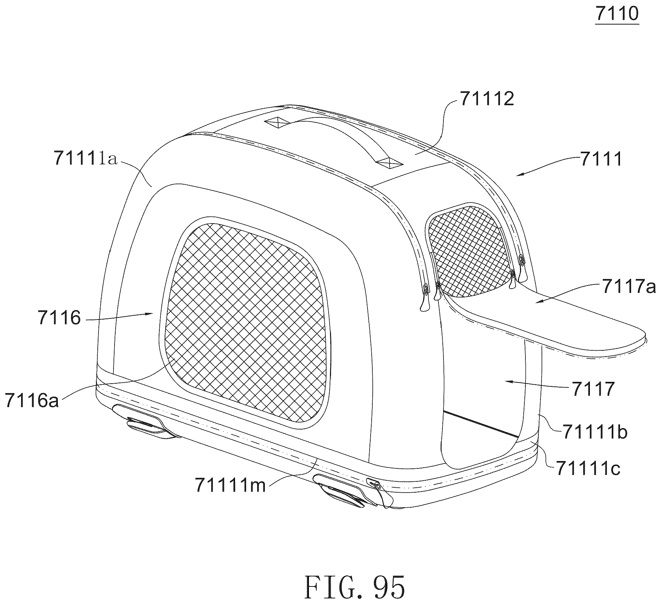

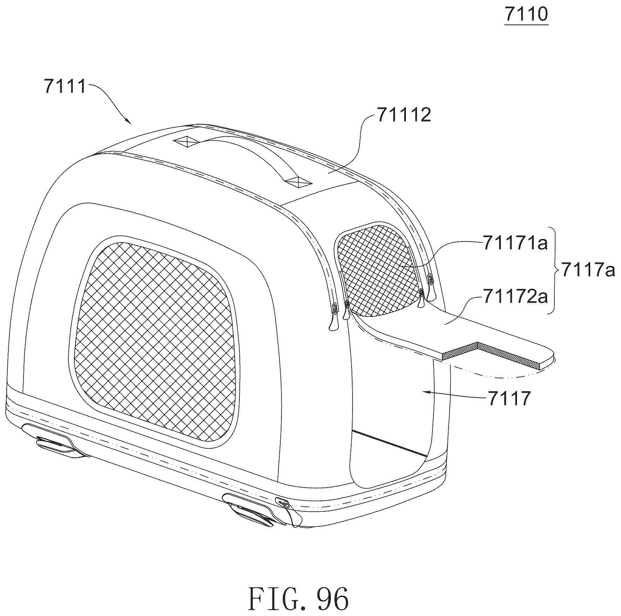

Referring to FIGS. 95 and 96, FIGS. 95 and 96 schematically show another perspective view of the box body 7110 shown in FIG. 1, in which at least a part of a second window covering 7117a is separated from the body 7111.

As shown in FIG. 95, one or more side surfaces of the body 7111 may be provided with windows, e.g., a first window 7116 and a second window 7117, for viewing a pet inside the box body 7110, and/or providing an opening for the pet to enter and exit the box body. The first window 7116 and the second window 7117 may be provided with a first closing member and a second closing member, respectively, to close and/or cover the first window 7116 and the second window 7117. In an example, the first closing member may be a first window covering 7116a covering the first window 7116, and the second closing member may be a second window covering 7117a covering the second window 7117.

Specifically, in an example, the first window 7116 is disposed on the first sub-support member 71111a and/or the second sub-support member 71111b of the side support member 71111 of the body 7111, and is provided with the first window covering 7116a configured to cover and shield the first window 7116. Optionally, the first window covering 7116a may be fixedly connected to the first window 7116 (e.g., its window frame), i.e., the first window 7116 is unopenable, but the present disclosure is not limited thereto, and the first window covering 7116a may also be detachably connected to the first window 7116. For example, the first window covering 7116a may have a transparent material and/or a breathable material, or specifically, the first window covering 7116a may have a mesh structure.

In addition, the second window 7117 may be disposed on the upper support member 71112 of the body 7111, for example, at a position of the upper support member 71112 on the side of the box body 7110, and is provided with a second window covering 7117a configured to cover and shield the second window 7117. Optionally, as shown in FIG. 95, the second window 7117 may extend downwardly from the upper support member 71112 (e.g., the third sheet-like member 1112c) to the connecting piece 71111c, and further, a part of the second window 7117 may be disposed at the connecting piece 71111c of the side support member 71111. The lower edge of the second window 7117 is spaced apart from the bottom edge of the body 7111 by a certain distance, i.e., at least a part of the connecting piece 71111c is retained, such that the bottom edges of both the first sub-support member 71111a and the second sub-support member 71111b of the side support member 71111 are kept in connection with each other, to facilitate folding and unfolding the body 7111, and connecting the body 7111 to the bottom support member 7112 and detaching the body 7111 from the bottom support member 7112. It should be understood that, although not shown, the second window 7117 may also be disposed entirely on the upper support member 71112 (i.e., not extending to the connecting piece 71111c), for example, on the third sheet-like member 71112c of the upper support member 71112.

In an example, as shown in FIG. 95, the second window covering 7117a is connected to and covers the second window 7117 (e.g., connected at its window frame), and at least a part of the second window covering 7117a is openable relative to the second window 7117. In a preferred embodiment, a part of the second window covering 7117a is detachably connected to the second window 7117 and the other part thereof is non-detachably connected to the second window 7117. For example, an upper side of the second window covering 7117a is fixedly connected to the second window 7117, the other part thereof may be detachably connected to the second window 7117, such that the second window covering 7117a may be folded upwardly to open the second window 7117.

In an example, the second window covering 7117a may have a transparent material or a mesh structure. Optionally or alternatively, the second window covering 7117a may have different materials or thicknesses, for example, a part of the second window covering 3117a is made of the transparent material and/or the breathable material (which specifically may be a the mesh structure), and the remaining part may be made of another material, such as the same material as other parts of the body 7111. In addition, different parts of the second window covering 7117a having different materials and/or thicknesses may be connected to the body 7111 in different ways, e.g., a part of the second window covering 3117a is detachably connected to the body 7111 and the other part thereof is non-detachably connected to the body 7111. Optionally, the different materials of the second window covering 7117a may be integrated as one body, i.e., the second window covering 7117a acts as a single component.

For example, as shown in FIGS. 95 and 96, the second window covering 7117a has a first portion 71171a and a second portion 71172a connected to each other. The first portion 71171a may have the transparent and/or the breathable material (e.g., the mesh structure) and cover a part of the second window 7117. At least a part of the first portion 71171a may be fixedly (e.g., non-detachably) connected to the body 7111. Specifically, the first portion 71171a may be disposed at an upper part of the second window 7117 near the top surface of the body 7111, and an upper end of the first portion 31171a is fixedly connected to an upper edge of the second window 7117. The second portion 71172a may have a material and/or a thickness different from that of the first portion 71171a, e.g., a non-transparent material and/or a thickness greater than that of the first portion 71171a, and may be detachably connected to the body 7111 by a flexible connection structure, and specifically to the lower side of the first portion 71171a, so as to cover the other part of the second window 7117.

In addition, as shown in FIG. 95, the first window covering 7116a and/or the second window covering 7117a may be a flexible fabric, such as a mesh fabric, a sponge fabric, etc. It should be understood that the present disclosure is not limited thereto. The first window covering 7116a and/or the second window covering 7117a may also be other forms of fabrics or flexible materials, i.e., materials with bendability or foldability. In an example, the first window covering 7116a and/or the second window covering 7117a may be closed and at least partially opened by a zipper structure (or other flexible detachable connection structures), which may be formed by a single zipper or two zippers that are pulled in opposite directions (as shown in FIG. 4).

It should be noted that the windows and/or the closing members of the present disclosure are not limited to the embodiments described above. The first window 7116 and the second window 7117 may be the same or interchangeable in terms of functions and opening-closing modes, and the first window covering 7116a and the second window covering 7117a may also be identical or interchangeable in terms of functions, materials and connection to the corresponding windows.

Further, an impact resistant material may be disposed on the box body 7110, for example, on any sides of the body 7111 of the box body 7110, which is not limited to the various side surfaces, but may also include the top surface and/or bottom surface. When the box body 7110 is placed on the vehicle seat, the impact resistant material may be disposed at least on a side of the body 7111 near a vehicle door of the vehicle to further enhance the safety of the pet inside the box body 7110. However, the present disclosure is not limited thereto, and the impact resistant material may also be disposed on each side of the body 7111, or on a side of the body 7111 near a vehicle door and its opposite side, and have a certain thickness. Specifically, the impact resistant material may be a cushioning body. The cushioning body may be configured as a separate component. For example, it may be formed by a cushioning block formed separately, which is then wrapped around and sewn into a seat bag, and then secured to a seat fabric (i.e., a seat fabric wrapped around the body 7111 ( not shown) on any side surfaces of the body 7110 (e.g., a side near a vehicle door and optionally its opposite side), by means of sewing (fixed connection) or hook-and-loop fasteners or hidden buttons (detachable connection). For example, corresponding hook-and-loop fasteners or hidden buttons are disposed on the seat bag of the cushioning block and on any side surfaces of the body 7110 (specifically, the seat fabric wrapped around the body 7110), respectively, to allow the cushioning body to be disposed as required, which facilitates controlling the cost of the carrier and allows for ease of cleaning and maintenance. That is, only one cushioning body may be provided, for example, on a side of the box body 7110 near a vehicle door; or a plurality of cushioning bodies may be provided, for example, on both the side of the box body 7110 near the vehicle door and its opposite side, or on each side of the box body 7110. Specifically, the cushioning body is made of a flexible material, for example, may be formed by a foam body or a plastic body or an elastic body. The foam body may be made of inert memory foam or EPP or EPS or EPE or combinations thereof, etc., or may be formed by foam material combined with a PE plate, etc., and its thickness may be between 720 mm and 760 mm, and preferably 740 mm, but the present disclosure is not limited thereto. The plastic body may be a PC/PP/ABS plastic block, etc. The elastic body may be silicone or a spring or an elastic sheet material, etc., but the present disclosure is not limited thereto. This cushioning body not only provides a good cushioning effect, but also facilitates the process of forming and subsequent production assembly, which can reduce production costs. Optionally or alternatively, the impact resistant material may be configured as a filling material filled in the seat fabric.

In an example, at least a part of the impact resistant material is detachably connected to the box 7110. In a specific embodiment, as shown in FIG. 96, the impact resistant material may be disposed at the second window covering 7117a (e.g., the second portion 71172a thereof), i.e., at least partially connected to the box body 7110 with the second window covering 7117a. Optionally or alternatively, the impact resistant material may be configured as a filling material filled in the second portion 71172a of the second window covering 7117a, but the present disclosure is not limited thereto, and the two may also be formed by separate structures joined together.

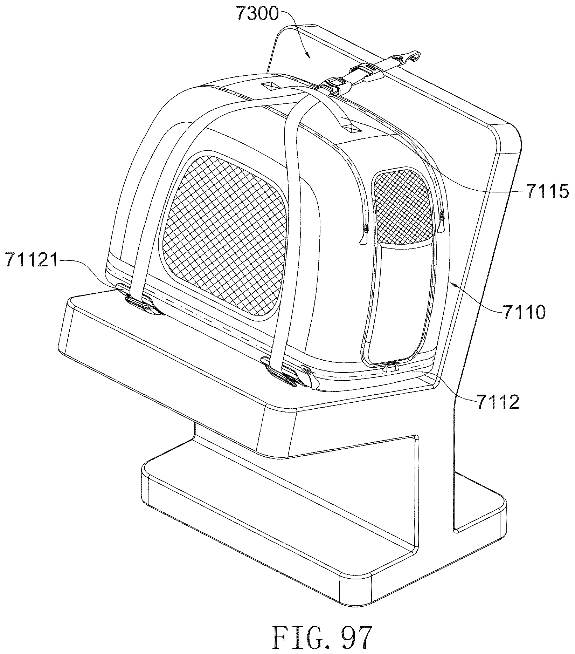

Referring to FIG. 97, FIG. 97 schematically shows a perspective view of a carrier mounted on a vehicle seat according to an embodiment of the fourth aspect of the present disclosure. For ease of illustration, the process of the carrier being mounted to the vehicle seat is described below with the box body 7110 as an example. However, it should be clear that, in the absence of conflict in structure, the process may be applied to the carriers of each of the embodiments in the above first to third aspects.

As shown in FIG. 97, a securing strap assembly 7300 may also be configured to secure the carrier 7110 to the vehicle. When the carrier is to be secured to the vehicle seat, as shown in an assembly view of FIG. 15, after the box body 7110 of the carrier is placed on the vehicle seat, an end of the securing strap assembly 7300 is connected to a corresponding interface (e.g., a Top Tether interface) of the vehicle seat by a connector, and another end of the securing strap assembly 7300 sequentially passes through the carrying handle 7115 disposed on the top side of the box body 7110 and around the front side of the box body 7110, and is connected to another corresponding interface (e.g., an ISOFIX interface) of the vehicle seat through the bottom part of the box body 7110, thereby further limiting lateral sliding, tilting, and the like of the box body 7110 of the carrier to more stably secure the carrier. It should be understood that the securing strap assembly 7300 may also not pass through the carrying handle, or in the absence of a carrying handle, other apparatus (e.g., a strap guiding mechanism), etc., may be provided on the carrier to limit the movement of the securing strap assembly in a lateral direction, but it will not be repeated herein in the present disclosure.

A second embodiment of the fourth aspect further provides a carrier.

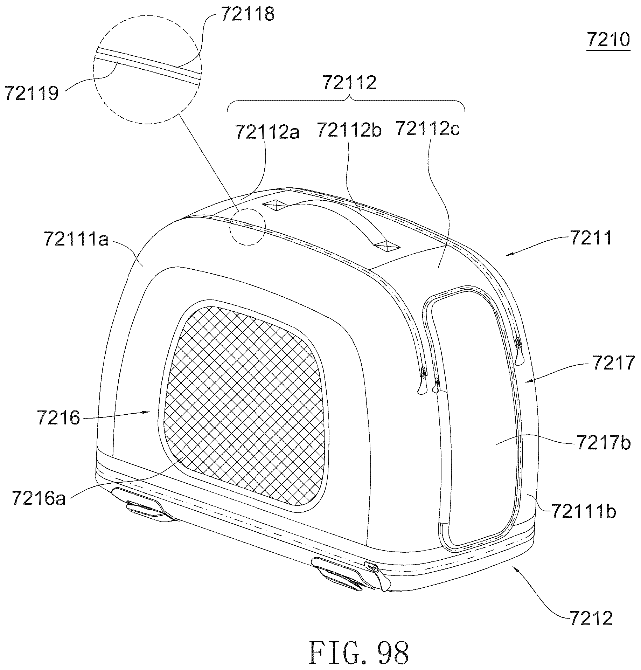

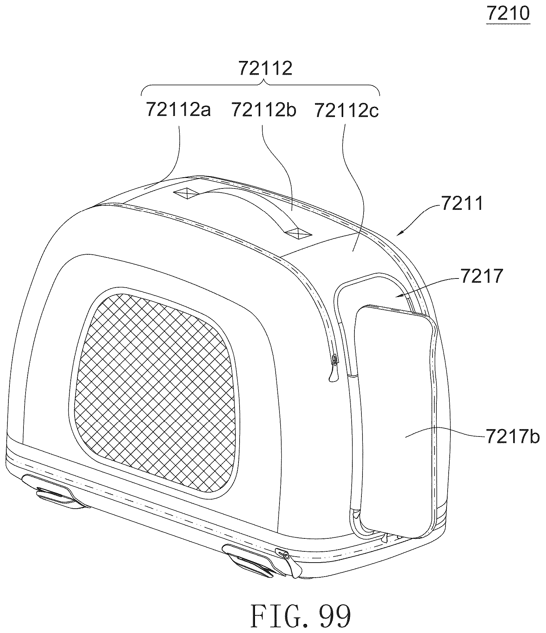

Referring to FIGS. 98 to 99, FIGS. 98 shows a box body 7210 of the carrier according to the second embodiment of the second aspect of the present disclosure, and FIG. 99 shows another perspective view of the box body 7210 shown in FIG. 98, with a window 7217 on a side of the box body 7210 being opened.

As shown in FIG. 98, similar to the box body 7110 in the aforementioned embodiment, the box body 7210 of the carrier in this embodiment includes a body 7211 and a bottom support member 7212. The body 7211 forms four side surfaces and a top surface of the box body 7210, the bottom support member 7212 forms a bottom part of the box body 7210, and the body 7211 is detachably connected to and disposed on the bottom support member 7212 to form an accommodating space for carrying a pet together with the bottom support member 7212. Specifically, as shown in FIG. 98, the body 7211 includes a first support member and a second support member, such as a side support member 72111 and an upper support member 72112. The side support member 72111 includes a first sub-support member 72111a and a second sub-support member 72111b, which form two opposite side surfaces of the body 7211, respectively. The upper support member 72112 includes a first sheet-like member 72112a, a second sheet-like member 72112b, and a third sheet-like member 72112c connected together. The second sheet-like member 72112b forms a top surface of the body 7211. The first sheet-like member 72112a and the third sheet-like member 72112c form at least a part of the other two opposite side surfaces, respectively.

In an example, the side support member 72111 and the upper support member 72112 may be at least partially detachably connected to each other by at least one connection assembly. For example, a part of the first sub-support member 72111a and a part of the second sub-support member 72111b of the side support member 72111 may be fixedly (e.g., non-detachably) connected to two sides of the upper support member 72112, respectively, and the other respective parts of the two may be detachably connected to the upper support member 72112 by second connection assemblies. Specifically, each of the second connection assemblies may include a third connecting member 72118 and a fourth connecting member 72119 detachably connected to each other. The third connecting member 72118 is disposed on a side edge of the upper support member 72112 and extends along a part of the side edge, and the fourth connecting member 72119 is disposed at a corresponding position of a top edge of the side support member 72111 (i.e., the first sub-support member 72111a or the second sub-support member 72111b). Optionally, the third connecting members 72118 disposed on the two side edges of the upper support member 72112 are disposed symmetrically, i.e., the two second connection assemblies are provided symmetrically relative to the box body 7210. Although not shown, in other examples, the side support member 72111 and the upper support member 72112 may also be completely separated from each other by the connection assembly, which is not specifically described herein in this disclosure.

In addition, one or more side surfaces of the body 7211 may be provided with windows for viewing the pet inside the box body 7210 and/or providing an opening for the pet to enter and exit the box body.

In an example, as shown in FIG. 98, the side support member 72111 of the body 7211 may be provided with a first window 7216. For example, the first window 7216 may be disposed on the first sub-support member 72111a and/or the second sub-support member 72111b of the side support member 72111, i.e., corresponding to a front side surface and/or a rear side surface of the box body 7210 when it is placed in a vehicle, and is configured to be covered by a first closing member (e.g., a first window covering 7216a). Optionally, the first window covering 7216a may be fixedly connected to the first window 7216 or detachably connected to the first window 7216. The first window covering 7216a may have the transparent material and/or the breathable material, e.g., a breathable mesh fabric, to allow for air circulation inside and outside the box body 7210, as well as for a user to view the interior of the box body 7210.

Optionally or alternatively, as shown in FIG. 98, a second window 7217 may be disposed at a position of the upper support member 72112 on a side of the box body 7210, and the second window 7217 is configured to be covered by a second closing member, e.g., the second closing member may include a second window covering 3217a and/or a side door 7217b. At least a part of the second closing member is detachably connected to the body 7211. In an example, a part of the second closing member may be fixedly connected to the body 7211, e.g., to at least a part of a side edge of a window frame of the second window 7217, and other parts thereof may be detachably connected to the second window 7217 by a flexible removable connection structure (e.g., a zipper structure) such that the second closing member may be opened laterally relative to the second window 7217 (see FIG. 99). The second closing member may have the transparent material and/or the breathable material, a shading material, or the same material as other parts of the body 7211 (e.g., a seat fabric), and the second closing member may have a flexible material or a rigid material. In this embodiment, the flexible removable connection structure may be a zipper structure. Specifically, as shown for example in FIGS. 98, the zipper structure may be formed by a single zipper extending along a part of the periphery of the window 7217 (i.e., the zipper structure has a single zipper head), but the present disclosure is not limited thereto. Alternatively, the zipper structure may be formed by two zippers pulled in opposite directions (i.e., the zipper structure has dual zipper heads), as desired.

Specifically, only one second window 7217 may be provided, e.g., on a side surface (such as a left side surface or a right side surface) of the body 7211. The second closing member may be the second window covering (such as having the breathable material or the mesh material) or the side door. Optionally or alternatively, two second windows 7217 may be provided on opposite sides (i.e., the left side surface and the right side surface) of the body 7211. Correspondingly, the two second windows 7217 may be provided with the respective second closing members, and the two second closing members may be made of the same material or different materials. For example, one of the second closing members may be the second window covering, such as with the breathable mesh fabric; and the other closing member may be the side door 7217b, which may be used for pets to enter and exit the box body and the like. The side door 7217b may be located on a side adjacent to the vehicle door when the box body 7210 is placed on the vehicle seat. The side door 7217b may be wrapped with the same material as the seat fabric of the body 7211. It should be noted that the present disclosure is not limited to the above embodiments, and positions of the second closing members on the two sides of the body 7211 may be interchangeable and may be made of the same material.

Further, an impact resistant material may be disposed in the box body 7210. The impact resistant material may have a certain thickness and may be disposed on any sides of the body 7211 of the box body 7210, so as to enhance the safety of the pet within the box body 7210. In a specific example, as shown in FIGS. 98 and 99, the impact resistant material may be disposed in the side door 7217b, but the present disclosure is not limited thereto, and the impact resistant material may also be disposed on each side of the body 7211, or on two opposite sides of the body 7211 (e.g., a side near a vehicle door and its opposite side). Specifically, the impact resistant material may be a cushioning body, the cushioning body may be formed by a foam body or a plastic body or an elastic body, the specific material of which may be similar to the foregoing embodiments, and thus will not be repeated. In addition, the cushioning body may be configured as a cushioning block formed separately, which is then wrapped around and secured (e.g., sewn) in a seat fabric at the side door 7217b, or sewn in a seat bag and detachably secured to the side door 7217b by hook-and-loop fasteners or hidden buttons or the like. By providing such impact resistant material, a better cushioning effect can be provided for the pet inside the box body when the vehicle is involved in an accidental collision, especially when its sides are impacted, thereby enhancing the protection for the pet.

It should be noted that the terms "front", "rear", "left" and "right" involved in the above embodiments refer to the orientations of the box bodies 7110, 7210 when placed on the vehicle seat or other moving device, e.g., "front" refers to a direction of advancement of the vehicle or the moving device, etc., but the present disclosure is not limited thereto.

It should also be noted that the various embodiments of the above aspects of the present disclosure may be used in any combination or intersection in the absence of conflict in structure.

Provided in an aspect of the present disclosure is a carrier. The carrier includes: an accommodating body having a top opening, in which two sides of the accommodating body in a longitudinal direction are respectively provided with a fifth connecting member; and a canopy assembly mounted on the accommodating body and has an unfolded state of closing the top opening; and a protective cover connected to the accommodating body and/or the canopy assembly. The protective cover is configured to cover at least a part of the canopy assembly when the canopy assembly is in the unfolded state.

Further, the carrier further includes at least one first connecting member, and the at least one first connecting member is provided on the accommodating body and/or the canopy assembly; the protective cover includes a cover body and at least one second connecting member, the at least one second connecting member is connected to the at least one first connecting member to allow the cover body to cover at least a part of the canopy assembly.

In an embodiment, the at least one second connecting member is detachably connected to the at least one first connecting member, and/or, the cover body transversely covers the canopy assembly.

In an embodiment, the cover body is provided with an impact resistant body, the impact resistant body corresponds to at least a transverse middle area of the cover body.

In an embodiment, each of the left and right sides of the accommodating body is provided with at least one first connecting member, two ends of the cover body correspond to the left and right sides of the accommodating body, respectively, each of the two ends of the cover body is provided with at least one second connecting member; and the cover body covers a front or a rear of the canopy assembly when the at least one first connecting member is connected to the at least one second connecting member.

In an embodiment, each of the left and right sides of the accommodating body is provided with at least two first connecting members, and the at least one second connecting member is selectively connected to the at least two first connecting members; and/or, the cover body has a shape that is narrow at the two ends and wide in the middle.

In an embodiment, the canopy assembly includes a plurality of U-shaped brackets and a canopy connected to the plurality of U-shaped brackets, and the canopy includes a shading area and an observation area; and the observation area is located on the front and/or the rear of the canopy assembly when the canopy assembly is in the unfolded state, and the cover body covers at least a part of the observation area.

In an embodiment, the shading area is made of a lightproof fabric and the observation area is made of a mesh fabric or made of a light-permeable material; and/or, the canopy is provided with a carrying handle.

In an embodiment, a bottom of the canopy assembly is detachably connected to a top of the accommodating body by a canopy locking apparatus; and/or, the canopy is provided with a canopy opening, a closing member is provided at the canopy opening, the closing member allows the canopy opening to be opened or closed; and at least a part of the canopy is capable of being folded to allow the canopy opening to be opened wide when the closing member opens the canopy opening.

In an embodiment, surfaces of the cover body and the canopy that are in contact with each other are matched in shape, and/or, the cover body is provided with at least one turning part at a position corresponding to the at least one U-shaped bracket.

In an embodiment, a connecting structure is provided between an upper edge of the cover body and the canopy assembly.

In an embodiment, the carrier includes a pet basket.

In an embodiment, the protective cover includes a cover body, the cover body covers at least a part of the canopy assembly; the cover body includes at least one layer of material.

In another aspect, the present invention further provides a carrier, including an accommodating body and a canopy assembly; the accommodating body has a top opening, and the canopy assembly is mounted to the accommodating body and has an unfolded state of closing the top opening; and the accommodating body and/or the canopy assembly is provided with a side impact protection structure.

In an embodiment, the side impact protection structure includes at least one side impact protection block, the side impact protection block corresponds to a side portion of the accommodating body when the side impact protection structure is in a use state.

In an embodiment, the canopy assembly is detachably fastened to the top opening of the accommodating body; the front and rear sides of the accommodating body are provided with fifth connecting members, respectively, and the front and rear of the canopy assembly are provided with mating connecting members, respectively; and when the canopy assembly is in an unfolded state, the respective fifth connecting members are detachably connected to the corresponding mating connecting members to keep the canopy assembly in the unfolded state.

In an embodiment, the canopy assembly includes a plurality of U-shaped brackets and a canopy connected to the plurality of U-shaped brackets; the plurality of U-shaped brackets includes two canopy frames secured to the periphery of the canopy, and ends of the two canopy frames opposite to each other are pivotally connected to canopy locking apparatuses, respectively; the canopy locking apparatuses are detachably connected to the left and right sides of the accommodating body; the two canopy frames are detachably connected to the left and right sides of the accommodating body; and the two canopy frames are fastened at the top opening of the accommodating body when the canopy assembly is in the unfolded state.

In an embodiment, the side impact protection block is attached to or integrally formed with or formed directly by the fifth connecting members; or, the side impact protection block is attached to or integrally formed with or formed directly by the mating connecting members.

In an embodiment, the accommodating body includes a box body and bracket apparatus. The bracket apparatus defines a space for accommodating the box body. The bracket apparatus includes a first bracket and a third bracket disposed in parallel, and a second bracket for connecting the first bracket and the third bracket. The first bracket is adjacent to the top opening, and the third bracket is located below the first bracket; and a position of the side impact protection block corresponds to the first bracket when the side impact protection structure is in a use state.

In an embodiment, the accommodating body includes a box body and bracket apparatus, the bracket apparatus defines a space for accommodating the box body; the bracket apparatus includes a first bracket and a third bracket disposed in parallel, and a second bracket for connecting the first bracket and the third bracket, the first bracket is adjacent to the top opening, and the third bracket is located below the first bracket; and the second bracket includes a vertical segment corresponding to a side part of the box body; the position of the side impact protection block corresponds to the first bracket when the side impact protection structure is in the use state.

In an embodiment, the accommodating body includes a box body and a seat fabric covering an outer surface of the box body; the at least one side impact protection block corresponds to a front side and/or a rear side of the accommodating body when the side impact protection structure is in the use state, and each of the at least side impact protection block is located on an outer surface of the seat fabric; and the front side and/or the rear side of the seat fabric is provided with at least one pocket, each of the at least one pocket is configured to accommodate at least a part of the corresponding side impact protection block.

In an embodiment, the canopy assembly is detachably fastened at the top opening of the accommodating body when the canopy assembly is in the unfolded state; each of the front and rear sides of the accommodating body is provided with a fifth connecting member and the pocket, and the fifth connecting member is disposed in the corresponding pocket; each of the front and the rear of the canopy assembly is provided with a mating connecting member, the mating connecting member is connected to the canopy assembly by a connecting strap, and the side impact protection block is attached to the mating connecting member, or integrally formed with the mating connecting member, or formed directly by the mating connecting member; and the fifth connecting member is detachably connected to the corresponding mating connecting member to keep the canopy assembly in the unfolded state and to keep the side impact protection structure in the use state.

In an embodiment, the accommodating body includes a box body and a seat fabric wrapped around an outer surface of the box body; the front side and/or the rear side of the seat fabric is provided with a holding pocket; and the side impact protection block is wrapped within the holding pocket.

In an embodiment, a periphery of the holding pocket is sewn to the seat fabric; or, the holding pocket has a pocket opening and the pocket opening is provided with a closing member; or, the holding pocket is detachably connected to the seat fabric by a closing member.

In an embodiment, the accommodating body includes a box body; the side impact protection structure includes: a side impact protection block provided on an outer side of a peripheral wall of the box body; the side impact protection block being integrally formed or attached with the box body; and/or, a cushioning block provided on an inner side of the peripheral wall of the box body, the cushioning block being integrally formed or attached with the box body.

In an embodiment, the canopy assembly includes a plurality of U-shaped brackets and a canopy connected to the plurality of U-shaped brackets; the side impact protection structure includes a side impact protection block connected to a front and/or a rear of the canopy; and when the canopy assembly is in the unfolded state, surfaces of the side impact protection block and the canopy that are in contact with each other are matched in shape.

In an embodiment, the side impact protection block includes an integrally formed sheet; the sheet is made of foam, and/or, the sheet includes a bending part corresponding to the U-shaped bracket.

In an embodiment, the carrier further includes: a protective cover, connected to the accommodating body and/or the canopy assembly, the protective cover is configured to cover at least a part of the canopy assembly when the canopy assembly is in the unfolded state.

In yet another aspect, the present invention provides an accommodating body for a carrier, the accommodating body includes a box body, and a side part of the box body is provided with a side impact protection structure.

In an embodiment, the side impact protection structure includes: a side impact protection block provided on an outer side of a peripheral wall of the box body, the side impact protection block being integrally formed or attached with the box body; and/or, a cushioning block provided on an inner side of the peripheral wall of the box body, the cushioning block being integrally formed or attached with the box body.

In an embodiment, the accommodating body further includes a seat fabric, the seat fabric is wrapped around an outer surface of the box body; the front side and/or the rear side of the seat fabric is provided with a holding pocket; and the side impact protection structure includes a side impact protection block, and the side impact protection block is wrapped within the holding pocket.

In an embodiment, a periphery of the holding pocket is sewn to the seat fabric; or, the holding pocket has a pocket opening and the pocket opening is provided with a closing member; or, the holding pocket is detachably connected to the seat fabric by a closing member.

In yet another aspect, the present invention provides a canopy assembly for a carrier, the canopy assembly includes a plurality of U-shaped brackets and a canopy connected to the plurality of U-shaped brackets; the side impact protection structure includes a side impact protection block connected to a front and/or a rear of the canopy; and when the canopy assembly is in the unfolded state, surfaces of the side impact protection block and the canopy that are in contact with each other are matched in shape.

In an embodiment, the side impact protection block includes an integrally formed sheet; the sheet is made of foam, and/or, the sheet includes bending parts corresponding to the U-shaped brackets.

In a further aspect, the present invention provides a canopy assembly for a carrier, the canopy assembly includes a plurality of U-shaped brackets and a canopy connected to the plurality of U-shaped brackets; a front and a rear of the canopy assembly are provided with mating connecting members respectively, each of the mating connecting members is connected to the canopy by a connecting strap, and the mating connecting members are provided with a side impact protection block.

In yet another aspect, the present invention provides a protective cover for covering at least a part of a canopy assembly of a carrier, including a cover body extending transversely and a second connecting member connected to the cover body, the cover body includes an outer fabric layer and an inner fabric layer, the outer fabric layer and the inner fabric layer defines at least one receiving space, and the at least one receiving space is provided with at least one impact resistant body.

At least one impact resistant body has a middle impact resistant part corresponding to a transverse middle area of the cover body. The middle impact resistant part has a multi-layer structure.

In an embodiment, the multi-layer structure includes a plurality of sheets stacked together, and the plurality of sheets includes at least one hard sheet and at least one soft sheet.

In an embodiment, the impact resistant body includes a multi-layer structure formed by a plurality of sheets stacked together, and the plurality of sheets includes at least one hard sheet and/or at least one soft sheet.

The hard sheet has a shape that is narrow at two ends and wide in the middle, and the two ends of the hard sheet are respectively provided with a notch extending toward the middle of the hard sheet.

At least one impact resistant body includes a plurality of sheets stacked together, in which at least one spacer layer is provided in the accommodating space for accommodating the plurality of sheets. The at least one spacer layer divides the accommodating space into at least two layered spaces, and the plurality of sheets are respectively disposed in the at least two layered spaces.

In an embodiment, the outer fabric layer and the inner fabric layer define at least two receiving spaces, the at least two receiving spaces are arranged sequentially in a longitudinal direction, each of the receiving spaces extending transversely; and each of the receiving spaces is provided with the impact resistant body, and the impact resistant body in at least one of the receiving spaces is configured as a multi-layer structure in a transverse middle area thereof.

In yet another aspect, the present invention provides a carrier including an accommodating body, a canopy assembly and the above protective cover, and the protective cover is connected to the accommodating body and/or the canopy assembly by the second connecting member; and the protective cover is configured to cover at least a part of the canopy assembly when the canopy assembly is in an unfolded state.

In yet another aspect, the present invention provides a carrier including an accommodating body and a canopy assembly; the accommodating body has a top opening, and the canopy assembly is mounted to the accommodating body and has an unfolded state of closing the top opening; and the front and rear sides of the accommodating body are provided with fifth connecting members, respectively, and the front and the rear of the canopy assembly are provided with mating connecting members, respectively; and when the canopy assembly is in an unfolded state, the respective fifth connecting members are detachably connected to the corresponding mating connecting members to keep the canopy assembly in the unfolded state.

In an embodiment, the mating connecting members are connected to a canopy of the canopy assembly by the connecting straps; and the fifth connecting members have a protrusion, and the protrusion extends in a direction away from the box body of the accommodating body.

In an embodiment, the accommodating body includes a box body and a seat fabric wrapped around an outer surface of the box body; and the fifth connecting members are connected to the seat fabric, a rigid protective sheet is provided between the seat fabric and the box body, and the protective sheet corresponds to the fifth connecting members.

In an embodiment, the protective sheet is secured to a pad, and the pad is connected to the seat fabric.

In an embodiment, a cushioning block is provided on an outer surface of a peripheral wall of the box body, and the cushioning block corresponds to the fifth connecting members.

Provided in an aspect of the present disclosure is a travel device with improved impact resistance. The travel device includes a carrier and a protection apparatus attached to a side surface or a top surface of the carrier. According to the present disclosure, the protection apparatus is made of an energy-absorbing or shock-absorbing material. According to the present disclosure, the protection apparatus may prevent the animal confined therein from being impacted or injured by side collision, which may be caused by hitting by an external object in an accident, or by a sudden change in vehicle speed or direction in traveling.

In an embodiment, the protection apparatus may be attached to the top surface of the carrier by a securing strap.

Provided in another aspect of the present disclosure is a carrier for confining an animal therein. The carrier includes: a box portion defining an accommodating space for an animal; a canopy portion detachably attached to the box portion; a carrying handle pivotably connected to the box portion; and a protection apparatus attached to the canopy portion. The protection apparatus may prevent the animal confined therein from being impacted or injured by side collision, which may be caused by hitting by an external object in an accident, or by a sudden change in vehicle speed or direction in traveling.

In an embodiment, the protection apparatus is made of an energy-absorbing or shock-absorbing material.

In an embodiment, the canopy portion includes a cover, and a plurality of support rods connected to the cover and supporting the cover.

In an embodiment, the cover is formed with a plurality of areas divided by the support rods,

In an embodiment, some of the areas are made of a grid fabric of a corresponding grid size or are embedded with a protection apparatus.

In an embodiment, the protection apparatus may be formed as a plate or sheet made of an energy-absorbing or shock-absorbing material as mentioned above, and may be attached to the canopy portion on the inner or outer surface of the cover of the canopy portion.

The present disclosure further provides a carrier. The carrier includes a box body, which includes a body and a bottom support member, wherein the body is connected to the bottom support member, so as to form an accommodating space for carrying a pet with the bottom support member. One or more sides of the box bodies are provided with an impact resistant material.

In an embodiment, the impact resistant material is disposed at least on a side of the body adjacent to a vehicle door when the box body is placed on a vehicle seat.

In an embodiment, one or more side surfaces of the body are respectively provided with a window, and the window is provided with a closing member configured to close and/or shield the window.

In an embodiment, the impact resistant material is disposed on at least one closing member.

In an embodiment, the impact resistant material is integrally formed with the closing member.

In an embodiment, the impact resistant material is separately formed and fixedly connected to the closing member.

In an embodiment, the at least one closing member has a first portion and a second portion connected to each other, at least a part of the first portion is non-detachably connected to the body and covers a part of the window, and the second portion is detachably connected to the body and covers another part of the window.

In an embodiment, the impact resistant material is provided on the second portion of the at least one closing member.

In an embodiment, the impact resistant material is configured as a filling material filled in the second portion of the closing member.

It should be noted that the illustrations and descriptions of the examples and embodiments shown in the drawings are solely for exemplary purposes and should not be construed as limiting the present disclosure. It will be understood by those skilled in the art that various embodiments are considered by the present disclosure. It should be understood that the concepts described in the above examples and embodiments may be used alone or in combination with any of the other examples and embodiments described above. It should also be understood that the various alternative examples and embodiments described above with respect to one illustrated embodiment may apply to all examples and embodiments described herein unless otherwise illustrated.

Conditional statements used herein, such as "may", "might", "might", and "for example" etc., are generally intended to convey that certain features, elements, and/or steps are included in certain embodiments but not included in other embodiments unless otherwise expressly illustrated or understood in the context in which it is used. Accordingly, such conditional statements are generally not intended to imply that one or more embodiments require features, elements, and/or steps in any way, or that one or more embodiments must include logic for determining, with or without authorial input or prompting, whether or not such features, elements, and/or steps are included in or to be performed in any particular embodiment. The terms such as "include", "contain", "have", etc., are synonymous and are used in an open-ended and inclusive manner and do not exclude additional elements, features, actions, operations, etc. In addition, the term "or" is used in its inclusive meaning (rather than its exclusive meaning), so that when used, for example, to connect a list of elements, the term "or" denotes one, some, or all of the elements in the list.

Although certain examples have been described, these examples are not intended to limit the scope of invention disclosed herein. Accordingly, the preceding description does not imply that any specific feature, characteristic, step, module, or block is necessary or indispensable. Indeed, the new methods and systems described herein may be embodied in a variety of other forms; moreover, various omissions, substitutions, and modifications may be made to the forms of the methods and systems described herein without departing from the spirit of the invention disclosed herein. The appended claims and their equivalents are intended to cover such forms or modifications that fall within the scope and spirit of some inventions disclosed herein.

It should be understood that references herein to "one" or "a" to characterize, for example, an assembly or a step do not exclude additional features or multiple features. For example, the reference to a device having, including, containing, or defining "one" feature does not exclude that the device has, includes, contains, or defines more than one features, as long as the device has, includes, includes, or defines at least one feature. Similarly, the reference herein to "one" of a plurality of features does not exclude that the invention includes two or more features. For example, the reference to a device having, including, containing or defining "one of a first element and a second element" does not exclude that the device has both of the first element and the second element.

The following solutions and items are provided in various embodiments of the present disclosure:
Item 1: a carrier, wherein the carrier includes: a box body including a body and a bottom support member, the body being connected to the bottom support member and forming an accommodating space with the bottom support member; and a window is provided on a side surface and/or a top surface of the body, and is provided with a closing member configured to close and/or shield the window, and a protection apparatus is provided on the closing member.
Item 2: the carrier according to item 1, wherein at least a part of the protection apparatus is detachably connected to the box body; and/or
   the protection apparatus is disposed at least on a side of the body adjacent to a vehicle door when the box body is placed on a vehicle seat.
Item 3: the carrier according to item 1, wherein
   the closing member has a first portion and a second portion connected to each other;
   at least a part of the first portion is non-detachably connected to the body and covers a part of the window, and the second portion is detachably connected to the body and covers another part of the window; and
   the protection apparatus is disposed on the second portion of the closing member.
Item 4: the carrier according to any one of items 1 to 3, wherein the protection apparatus is integrally formed with the closing member; and/or
   the impact protection apparatus is a structure formed separately and is fixedly connected to the closing member; and/or
   the protection apparatus is configured as a filling material filled in the closing member; and/or
   the protection apparatus has a certain thickness and is configured as a cushioning body having a foam body and/or a plastic body and/or an elastic body.
Item 5: a carrier, wherein the carrier includes a box body having a peripheral wall and a bottom part, and the peripheral wall and the bottom part defines an accommodating space and a top opening,
   wherein the peripheral wall of the box body is provided with a protection apparatus, the protection apparatus includes a cushioning block, and the cushioning block is provided at least on either inner side of the peripheral wall of the box body in a longitudinal direction.
Item 6: the carrier according to item 5, wherein a slot structure is provided on the inner side of the peripheral wall of the box body, and the cushioning block is mounted in the slot structure and protruding from the inner side of the peripheral wall.
Item 7: the carrier according to item 5 or 6, wherein a first side of the cushioning block is fixedly attached to the box body and a second side opposite to the first side is provided with a hard sheet; and/or the cushioning block has a hole structure.
Item 8: the carrier according to item 5, wherein the protection apparatus further includes a side impact protection block, and the side impact protection block is provided at least on either outer side of the peripheral wall in a longitudinal direction.
Item 9: the carrier according to item 8, wherein
   a seat fabric is wrapped around an outer surface of the box body, and a holding pocket is provided on the outer side of the seat fabric; and
   the side impact protection block is wrapped within the holding pocket.
Item 10: the carrier according to item 9, wherein a periphery of the holding pocket is sewn to the seat fabric; or
   the holding pocket has a pocket opening and a closing member is provided at the pocket opening; or
   the holding pocket is detachably connected to the seat fabric by means of a closing member.
Item 11: the carrier according to any one of items 8 to 10, wherein the protection apparatus includes a side-impact contact surface in a planar shape, and the side-impact contact surface is provided with a plurality of bulges spaced evenly apart.
Item 12: the carrier according to item 5, wherein
   the carrier further including a canopy assembly, the canopy assembly is provided on the box body, or mounted on the box body by means of a bracket apparatus supporting the box body, and has an unfolded state for closing the top opening and an open state for exposing the accommodating space,
   each of two sides of the carrier in a longitudinal direction is provided with a fifth connecting member, the canopy assembly is provided with a mating connecting member corresponding to the fifth connecting member, and the fifth connecting member and the corresponding mating connecting member are detachably connected to each other, and
   the protection apparatus includes a first side impact protection block and/or a second side impact protection block, wherein the first side impact protection block is provided on a peripheral wall of the box body and corresponds to the fifth connecting member, and/or the second side impact protection block is provided on, or is formed directly by the fifth connecting member.
Item 13: the carrier according to item 12, wherein
   a seat fabric is wrapped around an outer surface of the box body, and a protective sheet including a hard sheet is provided between the seat fabric and the box body,
   a position of the protective sheet corresponds to that of the fifth connecting member, and/or
   a position of the first side impact protection block corresponds to that of the fifth connecting member and the protective sheet, and/or
   side walls of the box body are provided with the fifth connecting member, the protective sheet and the first side impact protection block in sequence from outside to inside.
Item 14: the carrier according to item 12 or 13, wherein
   the fifth connecting member includes a protrusion, and the mating connecting member includes a recess provided in correspondence with the protrusion,
   when the canopy assembly is disposed on the box body, the mating connecting member is connected to the fifth connecting member, such that the recess of the mating connecting member and the protrusion of the fifth connecting member are engaged in a concave-convex way.
Item 15: the carrier according to any one of items 5-6, 8- 5, and 12-13, wherein the protection apparatus is integrally formed with or attached to the box body; and/or
   the protection apparatus includes a material having an elastic shock-absorbing effect; and/or
   the protection apparatus is configured as a single-layer structure or a multi-layer structure.
Item 16: a carrier, wherein the carrier includes:
   an accommodating body having a top opening;
   a canopy assembly detachably connected to the accommodating body, for opening and closing the top opening, wherein the canopy assembly has an unfolded state for closing the top opening; and
   a protection apparatus provided at least on the canopy assembly;
   wherein the protection apparatus includes a protective cover, the protective cover includes a cover body and a second connecting member, the cover body is connected to the accommodating body and/or the canopy assembly by the second connecting member to cover at least a part of the canopy assembly when the canopy assembly is in the unfolded state.
Item 17: the carrier according to item 16, wherein
   the protection apparatus further comprises an impact resistant body, and the impact resistant body is provided at an area of the cover body covering the canopy assembly, and optionally, the impact resistant body is provided at least at a transverse middle area of the cover body.
Item 18: the carrier according to item 16, wherein
   the canopy assembly includes a plurality of U-shaped brackets and a canopy connected to the plurality of U-shaped brackets;
   the protection apparatus further includes at least one side impact protection block, the at least one side impact protection block is connected to a front and/or a rear of the canopy in a longitudinal direction, and when the canopy assembly is in the unfolded state, surfaces of the side impact protection block and the canopy that are in contact with each other are matched in shape.
Item 19: the carrier according to item 18, wherein
   the canopy of the canopy assembly includes a shading area and an observation area.
   the at least one side impact protection block is provided in an area of the shading area away from the observation area, and/or
   the at least one side impact protection block is provided in an area of the observation area away from the shading area.
Item 20: the carrier according to item 18 or 19, wherein
   the side impact protection block includes a sheet formed integrally and the sheet is made of foam, and/or
   the side impact protection block includes sheet parts and a bending part formed between two adjacent sheet parts, and the bending part corresponds to the U-shaped bracket.
Item 21: the carrier according to item 18, wherein
   the canopy is provided with a canopy opening, a closing member is provided at the canopy opening, and the closing member allows the canopy opening to be opened and closed; and
   at least a part of the canopy is capable of being folded to open the canopy opening wide when the closing member opens the canopy opening.
Item 22: the carrier according to item 16, wherein
   each of two sides of the accommodating body in a longitudinal direction is provided with a fifth connecting member, the canopy assembly is provided with a mating connecting member corresponding to the fifth connecting member, and the fifth connecting member and the corresponding mating connecting member are detachably connected to each other,
   wherein the protection apparatus further includes a side impact protection block, and the mating connecting member is formed as the side impact protection block.
Item 23: the carrier according to item 22, wherein
   the accommodating body includes a box body and a bracket apparatus, the bracket apparatus defines a space for accommodating the box body, and the canopy assembly includes a plurality of U-shaped brackets and a canopy connected to the plurality of U-shaped brackets; and
   the mating connecting members protrudes outwardly relative to the U-shaped brackets by a first distance Q1, protrudes outwardly relative to the bracket apparatus by a second distance Q2, and protrudes outwardly relative to the box body by a third distance Q3, wherein Q1 < Q2 < Q3.
Item 24: the carrier according to item 16, wherein
   the cover body includes an outer fabric layer and an inner fabric layer, the outer fabric layer and the inner fabric layer define a receiving space, and an impact resistant body is provided in the receiving space.
Item 25: the impact resistant body includes a multi-layer structure formed by a plurality of sheets stacked together, and the plurality of sheets includes at least one hard sheet and/or at least one soft sheet.
Item 26: the carrier according to item 24, wherein at least one impact resistant body has a middle impact resistant part corresponding to a transverse middle area of the cover body, the middle impact resistant part has a multi-layer structure formed by a plurality of sheets stacked together.
Item 27: the carrier according to item 25 or 26, wherein the impact resistant body having the multi-layer structure is stepped in shape; and/or
   upper ends of the plurality of sheets of the impact resistant body are flush with one another, and/or lower ends of the plurality of sheets of the impact resistant body are flush with one another.
Item 28: the carrier according to item 24, wherein the impact resistant body includes a plurality of sheets stacked together, wherein a spacer layer is provided in the accommodating space for accommodating the plurality of sheets, the spacer layer divides the accommodating space into at least two layered spaces, and the plurality of sheets are respectively disposed in the at least two layered spaces.
Item 29: the carrier according to item 25, wherein the at least one hard sheet has a shape that is narrow at two ends and wide in the middle, and the two ends of the hard sheet are respectively provided with a notch extending toward the middle of the hard sheet.
Item 30: the carrier according to item 29, wherein the notch divides the hard sheet into an upper portion and a lower portion, transverse middle positions of the upper portion and the lower portion are connected, and the hard sheet is further provided with at least one sheet.
Item 31: the carrier according to item 30, wherein the at least one sheet provided on the hard sheet is disposed at the transverse middle position of the lower portion and has an intermediate protrusion extending toward the upper portion, and the intermediate protrusion is configured to not shield the notch.
Item 32: the carrier according to item 30, wherein the at least one sheet provided on the hard sheet includes: at least one sheet disposed at the transverse middle position of the upper portion, and at least one sheet disposed at the transverse middle position of the lower portion.
Item 33: the carrier according to item 16, wherein the cover body includes three impact resistant bodies,
   a first one of the three impact resistant bodies has a single-layer sheet extending transversely;
   a second one of the three impact resistant bodies has at least one hard sheet and at least one soft sheet, wherein the at least one hard sheet has a shape that is narrow at two ends and wide in the middle, and the two ends of the hard sheet are respectively provided with a notch extending toward the middle of the hard sheet; and
   a third one of the impact resistant bodies has a first sheet extending transversely, a second sheet stacked at a transverse middle area of the first sheet, and a third sheet stacked on the second sheet.
Item 34: the carrier according to item 33, wherein the notch divides the hard sheet into an upper portion and a lower portion, transverse middle positions of the upper portion and the lower portion are connected, and the hard sheet is further provided with at least one sheet,
   the at least one sheet provided on the hard sheet is disposed at the transverse middle position of the lower portion and has an intermediate protrusion extending toward the upper portion, and the intermediate protrusion is configured to not shield the notch.
Item 35: the carrier according to item 16, wherein
   the canopy assembly includes a plurality of U-shaped brackets and a canopy connected to the plurality of U-shaped brackets, wherein at least one protection apparatus is provided on the canopy, and is formed as a plate or a sheet made of an energy-absorbing material or an impact-absorbing material.
Item 36: the carrier according to item 35, wherein the protection apparatus is provided at a central area of the canopy.
Item 37: the carrier according to item 35, wherein the protection apparatus is configured as a double-layer structure including a first layer and a second layer, the second layer is closer to the accommodating space formed by the accommodating body relative to the first layer, wherein the second layer is softer than the first layer.
Item 38: the carrier according to any one of items 35 to 37, wherein the protection apparatus is attached to an inner surface and/or an outer surface of the canopy, or
   the protection apparatus is embedded in the canopy.
Item 39: a carrier, wherein the carrier includes:
   an accommodating body having a top opening, wherein two sides of the accommodating body in a longitudinal direction are respectively provided with a fifth connecting member; and
   a canopy assembly mounted on the accommodating body, wherein the canopy assembly is provided with a mating connecting member corresponding to the fifth connecting member, the fifth connecting member and the corresponding mating connecting member are detachably connected to each other to close the top opening; and
   a protection apparatus including a side impact protection block disposed on the fifth connecting member and/or the mating connecting member.
Item 40: the carrier according to item 39, wherein
   when the mating connecting member is connected to the fifth connecting member, the mating connecting member is located on an outer side of the fifth connecting member and the side impact protection block is provided on the mating connecting member and protrudes outwardly from a housing of the mating connecting member, or the fifth connecting member is located on an outer side of the mating connecting member and the side impact protection block is provided on the fifth connecting member and protrudes outwardly from a housing of the fifth connecting member.
Item 41: the carrier according to item 39, wherein
   the accommodating body includes a box body and a bracket apparatus, and the bracket apparatus defines a space for accommodating the box body;
   the bracket apparatus includes a first bracket and a third bracket disposed in parallel, and a second bracket for connecting the first bracket and the third bracket, the first bracket is adjacent to the top opening, and the third bracket is located below the first bracket; and
   a position of the side impact protection block corresponds to that of the first bracket when the mating connecting member is connected to the fifth connecting member; or
   the second bracket includes a horizontal segment and a vertical segment connected with each other, the horizontal segment extends in the longitudinal direction, the vertical segment is connected between the horizontal segment and the first bracket, and a position of the side impact protection block corresponds to that of the vertical segment when the mating connecting member is connected to the fifth connecting member.
Item 42: the carrier according to item 39, wherein
   the side impact protection block is attached to the fifth connecting member, or is integrally formed with the fifth connecting member, or is formed directly by the fifth connecting member; or
   the side impact protection block is attached to the mating connecting member, or integrally formed with the mating connecting member, or formed directly by the mating connecting member.
Item 43: the carrier according to any one of items 39 to 42, wherein the side impact protection block has a side-impact contact area to withstand a side impact and the side-impact contact area S is in a range of 40 cm² to 80 cm².
Item 44: the carrier according to any one of items 39 to 42, wherein the side impact protection block protrudes relative to the accommodating body by a height of between 10 mm and 30 mm;
Item 45: the carrier according to any one of items 39 to 42, wherein the accommodating body comprises a box body and a seat fabric wrapped around an outer surface of the box body, at least one side of the seat fabric in the longitudinal direction is provided with an open pocket, the open pocket at least partially accommodates the corresponding side impact protection block.
Item 46: the carrier according to any one of items 39 to 42, wherein
   the mating connecting member is connected to the canopy assembly by a first connecting strap such that, under the action of the first connecting strap, the mating connecting member and the fifth connecting member are rotated relative to each other when subjected to a side impact; or
   the fifth connecting member is connected to the accommodating body by a second connecting strap such that, under the action of the second connecting strap, the mating connecting member and the fifth connecting member are rotated relative to each other when subjected to a lateral impact.
Item 47: the carrier according to any one of items 39 to 42, wherein the protection apparatus further includes a cushioning block, the cushioning block is provided at least on an inner side of the accommodating body in the longitudinal direction and corresponds to a position of the side impact protection block.
Item 48: a carrier, wherein the carrier includes:
   an accommodating body defining an accommodating space, and
   a protection apparatus provided on either outer side of the accommodating body in a longitudinal direction or in a transverse direction,
   the protection apparatus is attached to the carrier by a coupling apparatus and has a protection body, and the protection body is made of an energy-absorbing material or an impact-absorbing material.
Item 49: the carrier according to item 48, wherein
   the coupling apparatus includes a first attachment portion and a second attachment portion cooperating with the first attachment portion, the first attachment portion is provided on an outer surface of the accommodating body, and the second attachment portion is provided on the protection body of the protection apparatus.
Item 50: the carrier according to item 49, wherein
   one of the first attachment portion and the second attachment portion is a hook portion and the other of the first attachment portion and the second attachment portion is a loop portion; or
   the first attachment portion and the second attachment portion are magnetic parts that cooperate with each other; or
   one of the first attachment portion and the second attachment portion is a recess and the other of the first attachment portion and the second attachment portion is a bump or a block; or
   one of the first attachment portion and the second attachment portion has a curled end portion to be engaged with the other of the first attachment portion and the second attachment portion.
Item 51: the carrier according to item 48, wherein
   the coupling apparatus includes a pivot shaft and a guiding member,
   the protection body is connected to the guiding member at its lower side by means of the pivot shaft, such that the protection body is capable of being pivoted relative to the guiding member,
   one end of the guiding member is connected to the protection body by the pivot shaft and the other end of the guiding member is secured to an outer bottom of the carrier.
Item 52: the carrier according to item 51, wherein
   the protection body is capable of being pivoted to a horizontal position by means of the pivot shaft, and of being pushed and guided to move along the guiding member to be located below a bottom of the carrier.
Item 53: the carrier according to item 48, wherein
   the carrier further includes a bracket apparatus coupled to the accommodating body,
   the coupling apparatus includes a coupling member arranged at a bottom of the protection body, one end of the coupling member is connected to the bottom of the protection body, and the other end is connected to the bracket apparatus or to a base on which the carrier is placed, such that the protection apparatus is attached to the carrier.
Item 54: the carrier according to item 48, wherein
   the carrier further includes a canopy assembly and a connector, and the canopy assembly is detachably attached to the accommodating body,
   the connector is arranged on the accommodating body and/or the canopy assembly, and the canopy assembly in an unfolded state is connected to the accommodating body by means of the connector,
   wherein the protection body has an opening or a recess corresponding to the connector, such that the carrier is attached to the protection body by means of the coupling apparatus having the connector and the opening or the recess.
Item 55: the carrier according to item 48, wherein
   the carrier further includes:
   a carrying handle detachably and pivotally connected to opposite sides of the accommodating body; and/or
   a canopy assembly detachably attached to the accommodating body, with a top of the canopy assembly attached with an additional handle or a connecting portion,
   the coupling apparatus includes a securing strap, the protection apparatus is attached to the carrier by means of the securing strap, and one end of the securing strap is connected to an upper portion of the protection body.
Item 56: the carrier according to item 55, wherein
   another end of the securing strap is connected to the carrying handle or the additional handle or the connecting portion.
Item 57: the carrier according to item 55, wherein
   the carrying handle has a recess formed at its middle portion to receive and keep the securing strap passing thereon, the securing strap crosses the carrying handle and is provided with a connection member at another end thereof and connected by the connection member to a bracket apparatus which is connected to the outer bottom of the carrier.
Item 58: the carrier according to any one of items 48 to 57, wherein
   a section of the protection body is a rectangular shape;
   the protection body has a first portion and a second portion, the first portion has a constant thickness, and the second portion extends from an end of the first portion and has a thickness which gradually increases or decreases from the first portion; or
   the protection body has a first portion and a second portion, the first portion extends in a height direction of the carrier and being provided on a side surface of the carrier, and the second portion extends from the first portion at a top of the carrier in a longitudinal direction; or
   at least a part of the protection body is in a curved shape; or
   the protection body has a multi-layer structure.
Item 59: the carrier according to any one of items 48 to 57, wherein
   the protection apparatus is attached to the carrier at a side surface of the protection apparatus corresponding to one of short sides of the carrier; or
   the protection apparatus is attached to the carrier at a side surface of the protection apparatus corresponding to one of long sides of the carrier.

## Claims

1. A carrier, comprising
a box body comprising a body and a bottom support member, the body being connected to the bottom support member and forming an accommodating space with the bottom support member; and
wherein a window is provided on a side surface and/or a top surface of the body, and the window is provided with a closing member configured to close and/or shield the window, and a protection apparatus is provided on the closing member.

2. The carrier according to claim 1, wherein at least a part of the protection apparatus is detachably connected to the box body; and/or
the protection apparatus is disposed at least on a side of the body adjacent to a vehicle door when the box body is placed on a vehicle seat.

3. The carrier according to claim 1, wherein
the closing member has a first portion and a second portion connected to each other;
at least a part of the first portion is non-detachably connected to the body and covers a part of the window, and the second portion is detachably connected to the body and covers another part of the window; and
the protection apparatus is disposed on the second portion of the closing member.

4. The carrier according to any one of claims 1 to 3, wherein the protection apparatus is configured as at least one of following:
the protection apparatus is integrally formed with the closing member;
the protection apparatus is a separately formed structure and is fixedly connected to the closing member; and/or the protection apparatus is configured as a filling material filled in the closing member;
the protection apparatus has a certain thickness and is configured as a cushioning body having a foam body and/or a plastic body and/or an elastic body.

5. A carrier, comprising
an accommodating body having a top opening;
a canopy assembly detachably connected to the accommodating body, for opening and closing the top opening, wherein the canopy assembly has an unfolded state for closing the top opening; and
a protection apparatus provided at least on the canopy assembly;
wherein the protection apparatus comprises a protective cover, the protective cover comprises a cover body and a second connecting member, the cover body is connected to the accommodating body and/or the canopy assembly by the second connecting member to cover at least a part of the canopy assembly when the canopy assembly is in the unfolded state.

6. The carrier according to claim 5, wherein
the protection apparatus further comprises an impact resistant body, and the impact resistant body is provided at an area of the cover body covering the canopy assembly.

7. The carrier according to claim 5, wherein
each of two sides of the accommodating body in a longitudinal direction is provided with a fifth connecting member, the canopy assembly is provided with a mating connecting member corresponding to the fifth connecting member, and the fifth connecting member and the corresponding mating connecting member are detachably connected to each other,
wherein the protection apparatus further comprises a side impact protection block, and the mating connecting member is formed as the side impact protection block.

8. The carrier according to claim 7, wherein
the accommodating body comprises a box body and a bracket apparatus, the bracket apparatus defines a space for accommodating the box body, and the canopy assembly comprises a plurality of U-shaped brackets and a canopy connected to the plurality of U-shaped brackets; and
the mating connecting members protrudes outwardly relative to the U-shaped brackets by a first distance Q1, protrudes outwardly relative to the bracket apparatus by a second distance Q2, and protrudes outwardly relative to the box body by a third distance Q3, wherein Q1 < Q2 < Q3.

9. The carrier according to claim 5, wherein
the cover body comprises an outer fabric layer and an inner fabric layer, the outer fabric layer and the inner fabric layer define a receiving space, and an impact resistant body is provided in the receiving space.

10. The carrier according to claim 9, wherein the impact resistant body comprises a multi-layer structure formed by a plurality of sheets stacked together, and the plurality of sheets comprises at least one hard sheet and/or at least one soft sheet.

11. The carrier according to claim 9, wherein at least one impact resistant body has a middle impact resistant part corresponding to a transverse middle area of the cover body, the middle impact resistant part has a multi-layer structure formed by a plurality of sheets stacked together.

12. The carrier according to claim 10 or 11, the impact resistant body having the multi-layer structure is stepped in shape; and/or
upper ends of the plurality of sheets of the impact resistant body are flush with one another, and/or lower ends of the plurality of sheets of the impact resistant body are flush with one another.

13. The carrier according to claim 9, wherein the impact resistant body comprises a plurality of sheets stacked together, wherein a spacer layer is provided in the accommodating space for accommodating the plurality of sheets, the spacer layer divides the accommodating space into at least two layered spaces, and the plurality of sheets are respectively disposed in the at least two layered spaces.

14. The carrier according to claim 10, wherein the at least one hard sheet has a shape that is narrow at two ends and wide in a middle, and the two ends of the hard sheet are respectively provided with a notch extending toward the middle of the hard sheet.

15. The carrier according to claim 14, wherein the notch divides the hard sheet into an upper portion and a lower portion, transverse middle positions of the upper portion and the lower portion are connected, and the hard sheet is further provided with at least one sheet.

16. The carrier according to claim 15, wherein the at least one sheet provided on the hard sheet is disposed at the transverse middle position of the lower portion and has an intermediate protrusion extending toward the upper portion, and the intermediate protrusion is configured to not shield the notch.

17. The carrier according to claim 15, wherein the at least one sheet provided on the hard sheet comprises: at least one sheet at the transverse middle position of the upper portion, and at least one sheet at the transverse middle position of the lower portion.

18. The carrier according to claim 5, wherein the cover body comprises three impact resistant bodies,
a first one of the three impact resistant bodies has a single-layer sheet extending transversely;
a second one of the three impact resistant bodies has at least one hard sheet and at least one soft sheet, wherein the at least one hard sheet has a shape that is narrow at two ends and wide in the middle, and the two ends of the hard sheet are respectively provided with a notch extending toward the middle of the hard sheet; and
a third one of the impact resistant bodies has a first sheet extending transversely, a second sheet stacked at a transverse middle area of the first sheet, and a third sheet stacked on the second sheet.

19. The carrier according to claim 18, wherein the notch divides the hard sheet into an upper portion and a lower portion, transverse middle positions of the upper portion and the lower portion are connected, and the hard sheet is further provided with at least one sheet,
the at least one sheet on the hard sheet is disposed at the transverse middle position of the lower portion and has an intermediate protrusion extending toward the upper portion, and the intermediate protrusion is configured to not shield the notch.

20. A carrier, comprising
an accommodating body having a top opening, wherein two sides of the accommodating body in a longitudinal direction are respectively provided with a fifth connecting member; and
a canopy assembly mounted on the accommodating body, wherein the canopy assembly is provided with a mating connecting member corresponding to the fifth connecting member, the fifth connecting member and the corresponding mating connecting member are detachably connected to each other to close the top opening; and
a protection apparatus comprising a side impact protection block provided on the fifth connecting member and/or the mating connecting member.

21. The carrier according to claim 20, wherein
when the mating connecting member is connected to the fifth connecting member, the mating connecting member is located on an outer side of the fifth connecting member, and the side impact protection block is provided on the mating connecting member and protrudes outwardly from a housing of the mating connecting member; or the fifth connecting member is located on an outer side of the mating connecting member, and the side impact protection block is provided on the fifth connecting member and protrudes outwardly from a housing of the fifth connecting member.

22. The carrier according to claim 20, wherein
the accommodating body comprises a box body and a bracket apparatus, wherein the bracket apparatus defines a space for accommodating the box body;
the bracket apparatus comprises a first bracket and a third bracket disposed in parallel, and a second bracket for connecting the first bracket and the third bracket, the first bracket is adjacent to the top opening, and the third bracket is located below the first bracket; and
a position of the side impact protection block corresponds to that of the first bracket when the mating connecting member is connected to the fifth connecting member; or
the second bracket comprises a horizontal segment and a vertical segment connected with each other, the horizontal segment extends in the longitudinal direction, the vertical segment is connected between the horizontal segment and the first bracket, and a position of the side impact protection block corresponds to that of the vertical segment when the mating connecting member is connected to the fifth connecting member.

23. The carrier according to claim 20, wherein
the side impact protection block is attached to the fifth connecting member, or is integrally formed with the fifth connecting member, or is formed directly by the fifth connecting member; or
the side impact protection block is attached to the mating connecting member, or integrally formed with the mating connecting member, or formed directly by the mating connecting member.

24. The carrier according to any one of claims 20 to 23, wherein the carrier is configured as at least one of following:
the side impact protection block has a side impact contact area to withstand a side impact and the side impact contact area S is in a range of 40 cm² to 80 cm²;
the side impact protection block protrudes relative to the accommodating body by a height of between 10 mm and 30 mm;
the accommodating body comprises a box body and a seat fabric wrapped around an outer surface of the box body, at least one side of the seat fabric in the longitudinal direction is provided with an open pocket, the open pocket at least partially accommodates the corresponding side impact protection block; and
the protection apparatus further comprises a cushioning block, the cushioning block is provided at least on an inner side of the accommodating body in the longitudinal direction and corresponds to a position of the side impact protection block.

25. The carrier according to any one of claims 20 to 23, wherein the mating connecting member is connected to the canopy assembly by a first connecting strap, such that under action of the first connecting strap, the mating connecting member and the fifth connecting member are rotated relative to each other in an event of a side impact; or the fifth connecting member is connected to the accommodating body by a second connecting strap, such that under action of the second connecting strap, the mating connecting member and the fifth connecting member are rotated relative to each other in the event of the side impact.
